# EUROPÄISCHE PATENTSCHRIFT

(11) **EP 3 864 289 B1**
(45) Veröffentlichungstag und Bekanntmachung des Hinweises auf die Patenterteilung: **13.12.2023**
(21) Anmeldenummer: 20713825.6
(22) Anmeldetag: 09.03.2020
(51) Int. Cl.: F04B 41/06, F03D 9/17, F15B 11/072

(54) **HYDRAULISCHE KOLBENEINRICHTUNG, WELCHE MINDESTENS ZUM ZWECKE EINER GASVERDICHTUNG VERWENDBAR IST, DRUCKGASENERGIEWANDLUNGSEINRICHTUNG, DRUCKGASENERGIEWANDLUNGS-WÄRMETAUSCHER-EINRICHTUNG, DRUCKGASENERGIEWANDLUNGS-WÄRMETAUSCHER-EINRICHTUNGS-VORSTUFENEINRICHTUNG UND DRUCKGASENERGIEWANDLUNGSVORRICHTUNG**
HYDRAULIC PISTON MACHINE, AT LEAST USABLE FOR COMPRESSING GAS, PRESSURE GAS ENERGY CONVERTION DEVICE, PRESSURE GAS ENERGY CONVERTION-HEAT EXCHANGER-DEVICE, PRESSURE GAS ENERGY CONVERTION-HEAT EXCHANGER-DEVICE AS PRE-STAGE
MACHINE HYDRAULIQUE À PISTON, AU MOINS UTILISABLE POUR COMPRIMER DU GAZ, DISPOSITIF POUR CONVERTIR L'ÉNERGIE DU GAZ COMPRIMÉ, DISPOSITIF À ÉCHANGEUR DE CHALEUR POUR CONVERTIR L'ÉNERGIE DU GAZ COMPRIMÉ, DISPOSITIF À ÉCHANGEUR DE CHALEUR POUR CONVERTIR L'ÉNERGIE DU GAZ COMPRIMÉ EN TANT QUE PRÉ-ÉTAGE

(30) Priorität: 02.04.2019 DE 102019002370; 24.09.2019 DE 102019006695
(43) Veröffentlichungstag der Anmeldung: 18.08.2021
(73) Patentinhaber: g4a GmbH, 88430 Rot an der Rot (DE)
(72) Erfinder: TRÄNKL, Georg, 86495 Eurasburg (DE)
(86) Internationale Anmeldenummer: PCT/EP2020/000057
(87) Internationale Veröffentlichungsnummer: WO 2020/200507

(56) Entgegenhaltungen:
- FR-A1- 2 326 595
- US-A- 3 991 574
- US-A1- 2012 055 145

## Beschreibung

Die vorliegende Erfindung betrifft im weitesten Sinne das technische Gebiet der Gasverdichtungseinrichtungen, das Gebiet der Druckgasenergiespeicherungstechnik und das technische Gebiet der Druckgasenergiewandlungseinrichtungen.

Ganz allgemein sei den weiteren Ausführungen ausdrücklich folgendes vorangestellt: Wenn im Text der vorliegenden Erfindungsbeschreibung und der Patentansprüche der Begriff "Gas" verwendet wird, so ist mit diesem Begriff derzeit zwar aus rein wirtschaftspraktischen Gründen in erster Linie das Gas "Luft" gemeint, jedoch ist die vorliegende Erfindung unter rein physikalisch-technischen Gesichtspunkten keineswegs auf die Verwendung von Luft als das zum Einsatz kommende Gas beschränkt. Vielmehr kann unter rein physikalisch-technischen Gesichtspunkten für die Ausführung der nachfolgend beschriebenen Erfindung jedes beliebige Gas, beispielsweise sogenanntes "Biogas", verwendet werden. Die Verwendung des Begriffes "Gas" im Text der vorliegenden Erfindungsbeschreibung und der Patentansprüche ist also keineswegs als allein auf das Gas Luft eingeschränkt zu verstehen, wenngleich auch zumindest derzeit der Verwendung des Gases Luft aus rein aktuellen wirtschaftspraktischen Gründen der weit überwiegende Vorzug gegenüber der physikalisch-technisch ohne weiteres möglichen - und unter gewissen Voraussetzungen durchaus auch wirtschaftlich sehr sinnvollen - Verwendung anderer Gase, wie beispielsweise irgendwelcher Kohlenwasserstoffgase, gegeben wird.

Auf über Atmosphärendruck hinaus komprimiertes Gas und insbesondere auf über Atmosphärendruck hinaus komprimierte Luft, welche häufig einfach als "Druckluft" bezeichnet wird, hat seit weit über hundert Jahren eine sehr große Bedeutung und vielfältigste praktische Anwendungen in der industriellen Technik. Auch als Energiespeicher und als Antriebsmittel wird Druckluft seit weit über hundert Jahren bereits verwendet, beispielsweise bei druckluftgetriebenen Lokomotiven von Grubeneisenbahnen. Mit der aktuell voranschreitenden sogenannten "Energiewende" und der damit verbundenen immer weiteren Verbreitung von Windkraftanlagen und von Solarenergieanlagen, deren Elektroenergieproduktion naturgegeben sehr starken zeitlichen Schwankungen unterliegt, wird der Bedarf an solchen Energiespeichereinrichtungen immer größer, mit deren Hilfe man von den Windkraftanlagen und Solarenergieanlagen zeitweilig überschüssig bereitgestellte und nicht sofort durch Elektroenergie-Endverbraucher verwertbare Energie speichern und später bei Bedarf, beispielsweise wenn die Windkraftanlagen und Solarenergieanlagen gerade zu wenig Elektroenergie hergeben, um den Elektroenergieverbrauch über das Stromnetz zu decken, oder auch zu anderen, vom Stromnetz ganz unabhängigen Zwecken abrufen kann. Es gibt im Stand der Technik diverse Arten derartiger Energiespeichereinrichtungen, darunter auch solche, bei denen die Energiespeicherung in Form komprimierter Luft, welche mittels eines Luftkompressors in Druckluftflaschen oder Drucklufttanks eingefüllt wird, erfolgt. Ganz vereinfacht gesagt kann diese derart für grundsätzlich beliebig lange Zeit speicherbare und gespeicherte Druckluft dann später zu beliebiger Zeit wieder abgelassen werden und als Antriebsmittel zum Antreiben eines Elektroenergiegenerators dienen. Derartige als "Druckluftenergiespeichersysteme" bezeichnete Vorrichtungen sind beispielsweise bereits in der DE 10 2013 105 186 A1 oder in der US 2012/0210705 A1 beschrieben.

Auch die US 2012/0055145 A1 offenbart ein "Druckluftenergiespeichersystem", vornehmlich zur Verwendung im Zusammenwirken mit Windkraftanlagen. Insbesondere offenbart die US 2012/0055145 A1 eine hydraulische Kolbeneinrichtung zur Komprimierung von Luft, welche aus mehreren Zylindern besteht, in denen doppelt wirkende Kolben den Zylinderraum in jeweils zwei Kammern unterteilen. Von diesen Kammern sind einige mit einer Hydraulikflüssigkeit und einige mit Luft gefüllt. Zudem enthält jede Kammer einen Zu- und Ablauf für das entsprechende Medium, wobei zum Teil Ventile vorgesehen sind. Luft- und flüssigkeitsführende Zylinder sind außerdem axial zueinander angeordnet und mechanisch dadurch gekoppelt, dass eine gemeinsame Kolbenstange die jeweiligen Kolben verbindet.

Die FR 2 326 595 A1 offenbart eine hydraulisch-pneumatische Kolbeneinrichtung, die von einem windkraftgetriebenen Kompressor mit komprimierter Luft gespeist wird und durch geeignete Konstruktion und Verschaltung ihrer hydraulisch-pneumatischen Konstruktionselemente in die Lage versetzt ist, als ein Druckluftreservoir zu dienen, auf dessen Basis ein pneumatischer Elektrogenerator gleichmäßig angetrieben werden kann.

Die US 3,991,574 offenbart ein Fluiddruck-Kraftwerk, in welches Energie in Form von Dampf oder heißem Gas eingebracht und mittels eines doppelt wirkenden Kolbens gewandelt wird.

Zum Verdichten von Luft oder ganz allgemein zum Verdichten von Gas sind seit vielen Jahrzehnten herkömmliche elektrisch angetriebene festkörpermechanische Schraubenkompressoren und herkömmliche elektrisch angetriebene festkörpermechanische Kolbenkompressoren bekannt und weltweit millionenfach in Gebrauch. Außerdem finden sich im Stand der Technik auch andersartige und eher etwas unkonventionelle hydraulische Luftverdichtungseinrichtungen mit doppelt wirkenden Zylindern, in denen ein Kolben hin und her gleitet und bei denen eine Zylinderkammer mit Luft gefüllt ist, während in die andere Zylinderkammer mit hohem Druck mittels einer elektrisch angetriebenen Pumpe Öl gepumpt wird. Sobald der Öldruck in der einen Zylinderkammer höher ist als der Druck der Luft in der der eben genannten Zylinderkammer gegenüberliegenden Kammer, wird diese Luft verdichtet und z.B. in für sie vorgesehene Druckluftspeicherflaschen gefüllt. Eine solche eben genannte hydraulische Luftverdichtungseinrichtung ist beispielsweise in der DE 10 2013 105 186 A1 als ein Teil des in dieser Druckschrift vorgestellten Druckluftenergiespeichersystems beschrieben. Diese letztgenannte, aus der DE 10 2013 105 186 A1 bekannte hydraulische Luftverdichtungseinrichtung läuft zwar bevorzugt nur sehr langsam, jedoch lässt sich dafür die bei der Luftverdichtung entstehende Wärme, die eigentlich als solche erst einmal einen Wirkungsgradverlust darstellt, sehr gut auffangen und beispielsweise in Form erwärmten Wassers speichern. Allerdings ist auch für den Betrieb der in der DE 10 2013 105 186 A1 beschriebenen hydraulischen Luftverdichtungseinrichtung immer noch ein herkömmlicher elektrisch angetriebener festkörpermechanischer Luftkompressor, wie etwa ein elektrisch angetriebener festkörpermechanischer Schraubenkompressor oder ein elektrisch angetriebener festkörpermechanischer Kolbenkompressor, als Vorfüller sinnvoll und für einen wirklich effizienten Betrieb der in der DE 10 2013 105 186 A1 beschriebenen hydraulischen Luftverdichtungseinrichtung sogar unbedingt notwendig.

Ganz generell und völlig unabhängig von den vorstehend beschriebenen Einsatzmöglichkeiten herkömmlicher elektrisch angetriebener festkörpermechanischer Schraubenkompressoren und herkömmlicher elektrisch angetriebener festkörpermechanischer Kolbenkompressoren haben diese beiden eben genannten Arten herkömmlicher Kompressoren folgende betriebstechnisch bedingten Einschränkungen: Ein herkömmlicher elektrisch angetriebener festkörpermechanischer Schraubenkompressor muss für seinen optimalen Betrieb möglichst dauerhaft laufen und sollte möglichst kaum ab- und wieder angeschaltet werden. Dagegen sollte einem herkömmlichen elektrisch angetriebenen festkörpermechanischen Kolbenkompressor regelmäßig nicht deutlich mehr als fünfzehn Minuten Betrieb ohne Abkühlungspause zugemutet werden.

Derartigen betriebstechnisch bedingten Einschränkungen unterliegt die in der DE 10 2013 105 186 A1 beschriebene hydraulische Luftverdichtungseinrichtung zwar nicht, d.h. sie kann sowohl ohne weiteres einen Dauerbetrieb vertragen als auch einen Betriebsmodus, bei dem sie innerhalb sehr kurzer Zeitintervalle mehrfach hintereinander an- und wieder abgeschaltet wird, jedoch arbeitet die in der DE 10 2013 105 186 A1 beschriebene hydraulische Luftverdichtungseinrichtung bevorzugt nur sehr langsam, was zwar einerseits für die Wärmespeicherung, wie bereits oben angedeutet, durchaus ein Vorteil ist, was aber andererseits durchaus im Hinblick auf manche zeitkritischen Anwendungen, beispielsweise im Hinblick auf die häufig auch zeitkritische Anwendung in einem Luftdruckenergiespeichersystem zur Stromnetz-Pufferspeicherung von Energie aus Solarenergieanlagen und Windkraftanlagen, nachteilig sein kann.

Die Umwandlung der in Form verdichteter Luft gespeicherten Energie in durch einen Elektrogenerator bereitgestellte elektrische Energie ist zwar mit dem in der DE 10 2013 105 186 A1 beschriebenen Druckluftenergiespeichersystem grundsätzlich ohne weiteres möglich, jedoch hat das in der DE 10 2013 105 186 A1 beschriebene Druckluftenergiespeichersystem einen gravierenden Nachteil. Es wird bei diesem Druckluftenergiespeichersystem - gesehen in Relation zur Arbeitsfähigkeit der darin verwendeten Druckluft - zu viel Festkörpermaterial für den Kolben benötigt. Der Kolben ist mithin zu schwer, das Verhältnis der Kolbenmasse zur Arbeitsfähigkeit der Druckluft zu schlecht und damit die Arbeitsweise der gesamten Anlage zu träge.

Der Erfindung liegt als eine Aufgabe zugrunde, eine neuartige hydraulische Kolbeneinrichtung bereitzustellen, welche mindestens zum Zwecke einer Gasverdichtung verwendbar ist und welche bei dieser Gasverdichtung dann zwar ganz allgemein gesprochen grundsätzlich nach dem Prinzip des oben bereits erwähnten "doppelt wirkenden Zylinders" als hydraulische Gasverdichtungseinrichtung arbeitet, aber in besonderer Weise so gestaltet ist, dass sie ein Vorfüllen von Gas mittels eines elektrisch angetriebenen festkörpermechanischen Schraubenkompressors oder mittels eines elektrisch angetriebenen festkörpermechanischen Kolbenkompressors überflüssig macht, mit möglichst wenig Energiezufuhr auskommt, also effizienter als bisherige derartige Gasverdichtungssysteme bzw. Luftverdichtungssysteme, arbeitet, ohne Probleme sowohl im Dauerbetrieb als auch im Intervallbetrieb arbeiten kann und dabei aber weniger träge ist als die in der DE 10 2013 105 186 A1 beschriebene hydraulische Luftverdichtungseinrichtung. Ferner liegt der Erfindung als eine weitere Aufgabe zugrunde, eine neuartige Druckgasenergiewandlungseinrichtung bereitzustellen, in welcher die im vorangegangenen Satz genannte neuartige hydraulische Kolbeneinrichtung als wesentlicher Bestandteil Verwendung findet.

Diese Aufgaben werden gelöst durch eine hydraulische Kolbeneinrichtung nach Anspruch 1 und durch eine Druckgasenergiewandlungseinrichtung nach Anspruch 14.

Vorteilhafte und bevorzugte Ausführungsformen der erfindungsgemäßen hydraulischen Kolbeneinrichtung nach Anspruch 1 sind Gegenstand der Ansprüche 2 bis 13.

Vorteilhafte und bevorzugte Ausführungsbeispiele der Erfindung werden nachfolgend anhand von Figuren erläutert. Es zeigt:
- Fig. 1: schematisch und nicht maßstabsgerecht Details eines ersten Ausführungsbeispiels einer erfindungsgemäßen hydraulischen Kolbeneinrichtung,
- Fig. 2: schematisch und nicht maßstabsgerecht weitere Details des ersten Ausführungsbeispiels der erfindungsgemäßen hydraulischen Kolbeneinrichtung von Fig. 1,
- Fig. 3: schematisch und nicht maßstabsgerecht weitere Details des ersten Ausführungsbeispiels der erfindungsgemäßen hydraulischen Kolbeneinrichtung aus den Fig. 1 und 2,
- Fig. 4: schematisch und nicht maßstabsgerecht weitere Details des ersten Ausführungsbeispiels der erfindungsgemäßen hydraulischen Kolbeneinrichtung aus den Fig. 1 bis 3,
- Fig. 5: schematisch und nicht maßstabsgerecht ein erstes Ausführungsbeispiel einer erfindungsgemäßen Druckgasenergiewandlungseinrichtung, welche das erste Ausführungsbeispiel der erfindungsgemäßen hydraulischen Kolbeneinrichtung aus den Fig. 1 bis 4 umfasst,
- Fig. 6: schematisch und nicht maßstabsgerecht Details eines zweiten Ausführungsbeispiels einer erfindungsgemäßen hydraulischen Kolbeneinrichtung,
- Fig. 7: schematisch und nicht maßstabsgerecht Details eines zweiten Ausführungsbeispiels einer erfindungsgemäßen Druckgasenergiewandlungseinrichtung, welche das zweite Ausführungsbeispiel der erfindungsgemäßen hydraulischen Kolbeneinrichtung aus Fig. 6 umfasst,

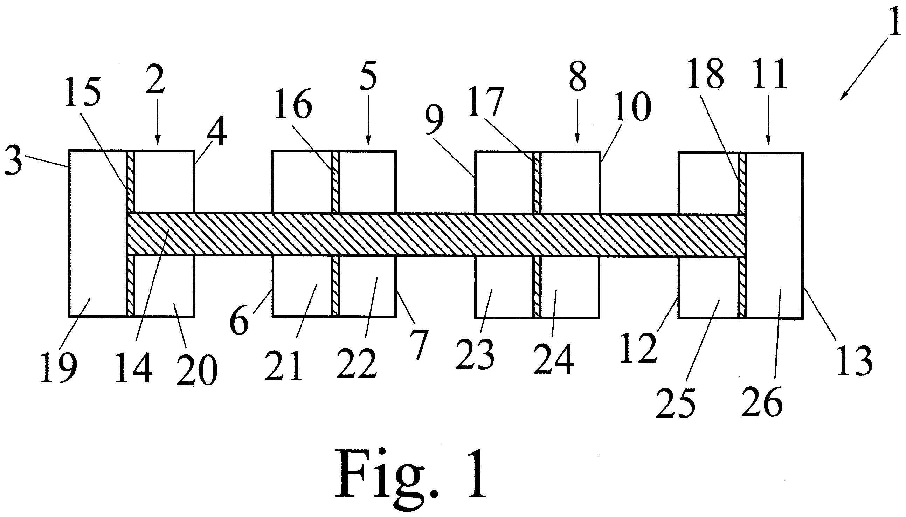

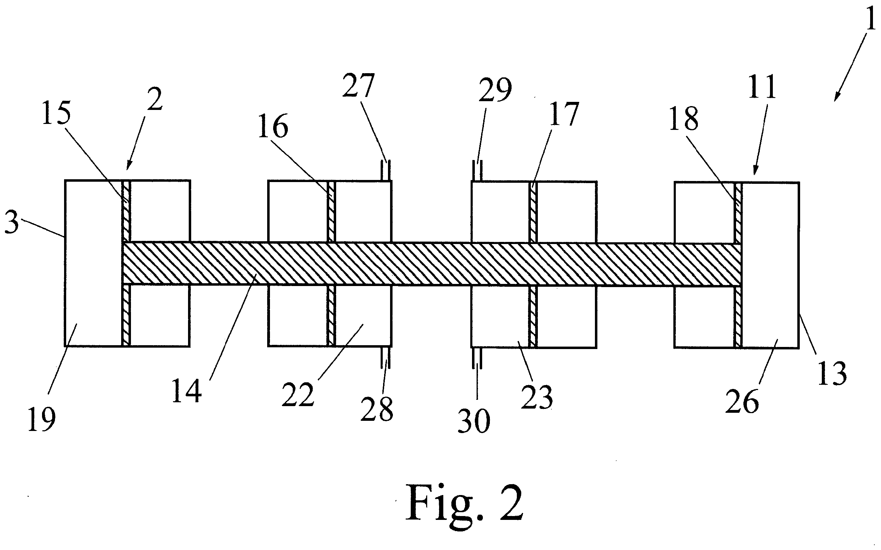

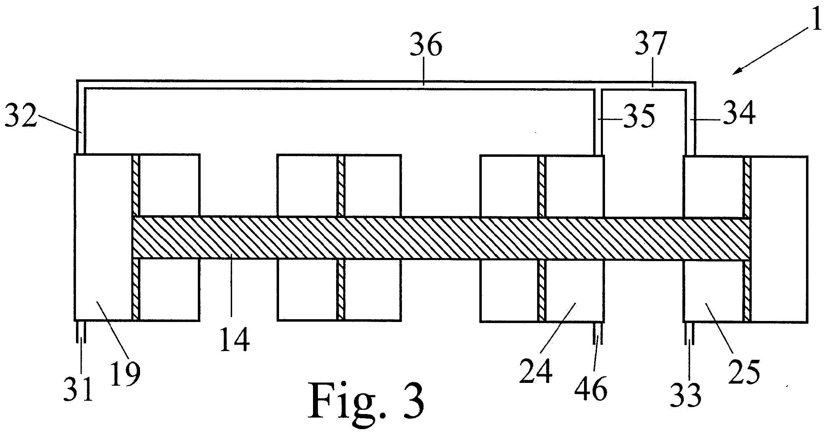

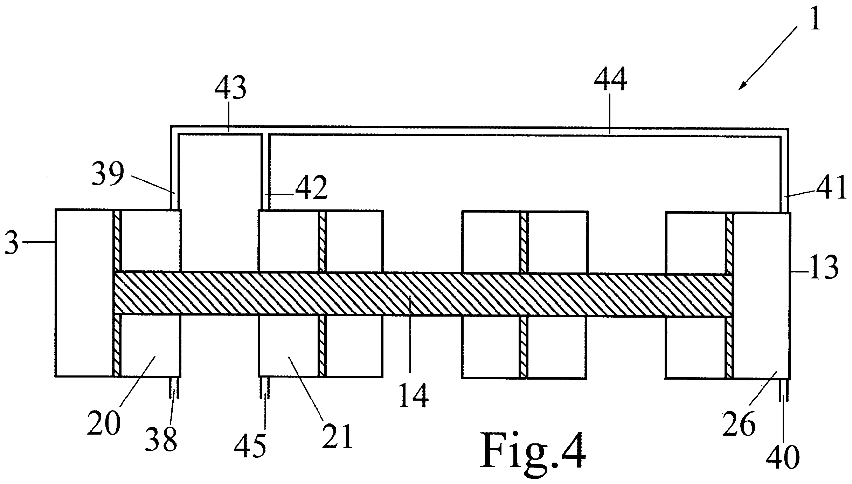

Die Fig. 1 bis 4 sind in der Zusammenschau zu betrachten und zeigen jeweils rein schematisch und nicht maßstabsgerecht einzelne Details eines ersten Ausführungsbeispiels einer erfindungsgemäßen hydraulischen Kolbeneinrichtung 1, welche mindestens zum Zwecke einer Gasverdichtung verwendbar ist. Identische Bezugszeichen in den Fig. 1 bis 4 bezeichnen über die Gesamtschau der Fig. 1 bis 4 hinweg betrachtet jeweils identische Bauteile.

Das in den Fig. 1 bis 4 dargestellte erste Ausführungsbeispiel der hydraulischen Kolbeneinrichtung 1 verwendet als Gas ausschließlich Luft und fungiert mithin, jedenfalls soweit es zum Zwecke der Luftverdichtung betrieben wird, als eine erste Luftverdichtungseinrichtung 1.

Das erste Ausführungsbeispiel der hydraulischen Kolbeneinrichtung 1 weist folgendes auf: einen ersten Hohlzylinder 2, welcher an seinem einen Ende eine erste Stirnwand 3 und an seinem anderen Ende eine zweite Stirnwand 4 aufweist, einen zweiten Hohlzylinder 5, welcher an seinem einen Ende eine dritte Stirnwand 6 und an seinem anderen Ende eine vierte Stirnwand 7 aufweist, einen dritten Hohlzylinder 8, welcher an seinem einen Ende eine fünfte Stirnwand 9 und an seinem anderen Ende eine sechste Stirnwand 10 aufweist, einen vierten Hohlzylinder 11, welcher an seinem einen Ende eine siebente Stirnwand 12 und an seinem anderen Ende eine achte Stirnwand 13 aufweist, und eine Kolbenstange 14, auf welcher ein erster Kolben 15, ein zweiter Kolben 16, ein dritter Kolben 17 und ein vierter Kolben 18 fixiert sind.

Der erste Hohlzylinder 2, der zweite Hohlzylinder 5, der dritte Hohlzylinder 8 und der vierte Hohlzylinder 11 sind derart in einer Reihe angeordnet, dass die zweite Stirnwand 4 und die dritte Stirnwand 6 einander zugewandt sind, die vierte Stirnwand 7 und die fünfte Stirnwand 9 einander zugewandt sind, die sechste Stirnwand 10 und die siebente Stirnwand 12 einander zugewandt sind und dementsprechend die erste Stirnwand 3 ein Ende der genannten Reihe von Hohlzylindern 2, 5, 8, 11 und die achte Stirnwand 13 ein anderes Ende der genannten Reihe von Hohlzylindern 2, 5, 8, 11 bilden.

Die Kolbenstange 14 mit den auf ihr fixierten vier Kolben 15, 16, 17, 18 ist so angeordnet, dass sich ihr eines Ende im ersten Hohlzylinder 2 befindet und sich ihr anderes Ende im vierten Hohlzylinder 11 befindet und sich die Kolbenstange 14 dementsprechend durch eine Öffnung in der zweiten Stirnwand 4, durch eine Öffnung in der dritten Stirnwand 6, durch den zweiten Hohlzylinder 5, durch eine Öffnung in der vierten Stirnwand 7, durch eine Öffnung in der fünften Stirnwand 9, durch den dritten Hohlzylinder 8, durch eine Öffnung in der sechsten Stirnwand 10 und durch eine Öffnung in der siebenten Stirnwand 12 hindurch erstreckt, der erste Kolben 15 sich im ersten Hohlzylinder 2 befindet und diesen in eine erste Kammer 19 und eine zweite Kammer 20 teilt, wobei die erste Kammer 19 und die zweite Kammer 20 durch den ersten Kolben 15 gegeneinander abgedichtet sind, der zweite Kolben 16 sich im zweiten Hohlzylinder 5 befindet und diesen in eine dritte Kammer 21 und eine vierte Kammer 22 teilt, wobei die dritte Kammer 21 und die vierte Kammer 22 durch den zweiten Kolben 16 gegeneinander abgedichtet sind, der dritte Kolben 17 sich im dritten Hohlzylinder 8 befindet und diesen in eine fünfte Kammer 23 und eine sechste Kammer 24 teilt, wobei die fünfte Kammer 23 und die sechste Kammer 24 durch den dritten Kolben 17 gegeneinander abgedichtet sind, der vierte Kolben 18 sich im vierten Hohlzylinder 11 befindet und diesen in eine siebente Kammer 25 und eine achte Kammer 26 teilt, wobei die siebente Kammer 25 und die achte Kammer 26 durch den vierten Kolben 18 gegeneinander abgedichtet sind.

Die Kolbenstange 14 ist mit den auf ihr fixierten vier Kolben 15, 16, 17, 18 in Längsrichtung hin und her beweglich, so dass die Größe des jeweiligen Rauminhalts jeder einzelnen der acht Kammern 19, 20, 21, 22, 23, 24, 25, 26 entsprechend dem jeweiligen Kolbenhub veränderlich ist.

Sowohl die vierte Kammer 22 als auch die fünfte Kammer 23 sind jeweils zur vollständigen Befüllung mit Flüssigkeit vorgesehen. Sowohl die erste Kammer 19 als auch die zweite Kammer 20 als auch die dritte Kammer 21 als auch die sechste Kammer 24 als auch die siebente Kammer 25 als auch die achte Kammer 26 sind vollständig mit Gas gefüllt.

Die vierte Kammer 22 ist mit einer ersten Flüssigkeitsanschlusseinrichtung 27 und mit einer zweiten Flüssigkeitsanschlusseinrichtung 28 versehen. Die fünfte Kammer 23 ist mit einer dritten Flüssigkeitsanschlusseinrichtung 29 und mit einer vierten Flüssigkeitsanschlusseinrichtung 30 versehen. Die erste Kammer 19 ist mit einer ersten Gasanschlusseinrichtung 31 und mit einer zweiten Gasanschlusseinrichtung 32 versehen. Die siebente Kammer 25 ist mit einer dritten Gasanschlusseinrichtung 33 und mit einer vierten Gasanschlusseinrichtung 34 versehen. Die sechste Kammer 24 ist mit einer fünften Gasanschlusseinrichtung 35 versehen.

Eine erste Gasleitung 36 führt von der zweiten Gasanschlusseinrichtung 32 zu der fünften Gasanschlusseinrichtung 35. Eine zweite Gasleitung 37 führt von der vierten Gasanschlusseinrichtung 34 zu der fünften Gasanschlusseinrichtung 35.

Die zweite Kammer 20 ist mit einer sechsten Gasanschlusseinrichtung 38 und mit einer siebenten Gasanschlusseinrichtung 39 versehen. Die achte Kammer 26 ist mit einer achten Gasanschlusseinrichtung 40 und mit einer neunten Gasanschlusseinrichtung 41 versehen. Die dritte Kammer 21 ist mit einer zehnten Gasanschlusseinrichtung 42 versehen.

Eine dritte Gasleitung 43 führt von der siebenten Gasanschlusseinrichtung 39 zu der zehnten Gasanschlusseinrichtung 42. Eine vierte Gasleitung 44 führt von der neunten Gasanschlusseinrichtung 41 zu der zehnten Gasanschlusseinrichtung 42.

Die dritte Kammer 21 ist mit einer elften Gasanschlusseinrichtung 45 versehen. Die sechste Kammer 24 ist mit einer zwölften Gasanschlusseinrichtung 46 versehen.

Die erste Gasanschlusseinrichtung 31 ist mittels einer zu ihr gehörigen Ventileinrichtung so eingerichtet, dass die erste Gasanschlusseinrichtung 31 bei entsprechend geeigneter Ventileinstellung zum Ansaugen von Gas in die erste Kammer 19 dient.

Die dritte Gasanschlusseinrichtung 33 ist mittels einer zu ihr gehörigen Ventileinrichtung so eingerichtet, dass die dritte Gasanschlusseinrichtung 33 bei entsprechend geeigneter Ventileinstellung zum Ansaugen von Gas in die siebente Kammer 25 dient.

Die sechste Gasanschlusseinrichtung 38 ist mittels einer zu ihr gehörigen Ventileinrichtung so eingerichtet, dass die sechste Gasanschlusseinrichtung 38 bei entsprechend geeigneter Ventileinstellung zum Ansaugen von Gas in die zweite Kammer 20 dient.

Die achte Gasanschlusseinrichtung 40 ist mittels einer zu ihr gehörigen Ventileinrichtung so eingerichtet, dass die achte Gasanschlusseinrichtung 40 bei entsprechend geeigneter Ventileinstellung zum Ansaugen von Gas in die achte Kammer 26 dient.

Die zweite Gasanschlusseinrichtung 32 ist mittels einer zu ihr gehörigen Ventileinrichtung so eingerichtet, dass die zweite Gasanschlusseinrichtung 32 bei entsprechend geeigneter Ventileinstellung zum Abführen komprimierten Gases aus der ersten Kammer 19 in die erste Gasleitung 36 dient.

Die vierte Gasanschlusseinrichtung 34 ist mittels einer zu ihr gehörigen Ventileinrichtung so eingerichtet, dass die vierte Gasanschlusseinrichtung 34 bei entsprechend geeigneter Ventileinstellung zum Abführen komprimierten Gases aus der siebenten Kammer 25 in die zweite Gasleitung 37 dient.

Die fünfte Gasanschlusseinrichtung 35 ist mittels einer zu ihr gehörigen Ventileinrichtung so eingerichtet, dass die fünfte Gasanschlusseinrichtung 35 bei entsprechend geeigneter Ventileinstellung zum Einführen komprimierten Gases aus der ersten Gasleitung 36 bzw. aus der zweiten Gasleitung 37 in die sechste Kammer 24 dient.

Die siebente Gasanschlusseinrichtung 39 ist mittels einer zu ihr gehörigen Ventileinrichtung so eingerichtet, dass die siebente Gasanschlusseinrichtung 39 bei entsprechend geeigneter Ventileinstellung zum Abführen komprimierten Gases aus der zweiten Kammer 20 in die dritte Gasleitung 43 dient.

Die neunte Gasanschlusseinrichtung 41 ist mittels einer zu ihr gehörigen Ventileinrichtung so eingerichtet, dass die neunte Gasanschlusseinrichtung 41 bei entsprechend geeigneter Ventileinstellung zum Abführen komprimierten Gases aus der achten Kammer 26 in die vierte Gasleitung 44 dient.

Die zehnte Gasanschlusseinrichtung 42 ist mittels einer zu ihr gehörigen Ventileinrichtung so eingerichtet, dass die zehnte Gasanschlusseinrichtung 42 bei entsprechend geeigneter Ventileinstellung zum Einführen komprimierten Gases aus der dritten Gasleitung 43 bzw. aus der vierten Gasleitung 44 in die dritte Kammer 21 dient.

Die elfte Gasanschlusseinrichtung 45 ist mittels einer zu ihr gehörigen Ventileinrichtung so eingerichtet, dass die elfte Gasanschlusseinrichtung 45 bei entsprechend geeigneter Ventileinstellung zum Abführen komprimierten Gases aus der dritten Kammer 21 dient.

Die zwölfte Gasanschlusseinrichtung 46 ist mittels einer zu ihr gehörigen Ventileinrichtung so eingerichtet, dass die zwölfte Gasanschlusseinrichtung 46 bei entsprechend geeigneter Ventileinstellung zum Abführen komprimierten Gases aus der sechsten Kammer 24 dient.

Die erste Flüssigkeitsanschlusseinrichtung 27 ist mittels einer zu ihr gehörigen Ventileinrichtung so eingerichtet, dass die erste Flüssigkeitsanschlusseinrichtung 27 bei entsprechend geeigneter Ventileinstellung als Flüssigkeitseinlass zum Einpumpen von Flüssigkeit in die vierte Kammer 22 dient.

Die dritte Flüssigkeitsanschlusseinrichtung 29 ist mittels einer zu ihr gehörigen Ventileinrichtung so eingerichtet, dass die dritte Flüssigkeitsanschlusseinrichtung 29 bei entsprechend geeigneter Ventileinstellung als Flüssigkeitseinlass zum Einpumpen von Flüssigkeit in die fünfte Kammer 23 dient.

Die zweite Flüssigkeitsanschlusseinrichtung 28 ist mittels einer zu ihr gehörigen Ventileinrichtung so eingerichtet, dass die zweite Flüssigkeitsanschlusseinrichtung 28 bei entsprechend geeigneter Ventileinstellung als Flüssigkeitsauslass zum Herausdrücken von Flüssigkeit aus der vierten Kammer 22 dient.

Die vierte Flüssigkeitsanschlusseinrichtung 30 ist mittels einer zu ihr gehörigen Ventileinrichtung so eingerichtet, dass die vierte Flüssigkeitsanschlusseinrichtung 30 bei entsprechend geeigneter Ventileinstellung als Flüssigkeitsauslass zum Herausdrücken von Flüssigkeit aus der vierten Kammer 23 dient.

Als Flüssigkeit wird bei dem ersten Ausführungsbeispiel der hydraulischen Kolbeneinrichtung 1 Öl verwendet.

Das erste Ausführungsbeispiel der hydraulischen Kolbeneinrichtung 1 ist so eingerichtet, dass aus der elften Gasanschlusseinrichtung 45 abgeführtes komprimiertes Gas einem Verbraucher komprimierten Gases und/oder einer Druckgasspeichereinrichtung, welche im vorliegenden Ausführungsbeispiel eine Druckluftspeichereinrichtung ist, zugeführt wird.

Das erste Ausführungsbeispiel der hydraulischen Kolbeneinrichtung 1 ist ferner so eingerichtet, dass aus der zwölften Gasanschlusseinrichtung 46 abgeführtes komprimiertes Gas einem Verbraucher komprimierten Gases und/oder der Druckgasspeichereinrichtung, die im vorliegenden Ausführungsbeispiel die Druckluftspeichereinrichtung ist, zugeführt wird.

Das erste Ausführungsbeispiel der hydraulischen Kolbeneinrichtung 1 ist außerdem so eingerichtet, dass aus der zweiten Flüssigkeitsanschlusseinrichtung 28 herausgedrückte Flüssigkeit einer Flüssigkeitsspeichereinrichtung, welche im vorliegenden Ausführungsbeispiel ein Öltank ist, zugeführt wird.

Desweiteren ist das erste Ausführungsbeispiel der hydraulischen Kolbeneinrichtung 1 so eingerichtet, dass aus der vierten Flüssigkeitsanschlusseinrichtung 30 herausgedrückte Flüssigkeit der Flüssigkeitsspeichereinrichtung, die im vorliegenden Ausführungsbeispiel der Öltank ist, zugeführt wird.

Darüber hinaus ist das erste Ausführungsbeispiel der hydraulischen Kolbeneinrichtung 1 so eingerichtet, dass die hydraulische Kolbeneinrichtung 1 dem Öltank Öl zum Einpumpen in die erste Flüssigkeitsanschlusseinrichtung 27 und/oder in die dritte Flüssigkeitsanschlusseinrichtung 29 entnehmen kann.

Das erste Ausführungsbeispiel der hydraulischen Kolbeneinrichtung 1 funktioniert in seinem Betriebsmodus als erste Luftverdichtungseinrichtung 1 beispielsweise folgendermaßen:
Als Beispiel einer Startposition wird die in den Fig. 1 bis 4 gezeigte Position der Kolbenstange 14 angenommen, bei welcher sich der erste Kolben 15 ungefähr in der Mitte des ersten Hohlzylinders 2, der zweite Kolben 16 ungefähr in der Mitte des zweiten Hohlzylinders 5, der dritte Kolben 17 ungefähr in der Mitte des dritten Hohlzylinders 8 und der vierte Kolben 18 ungefähr in der Mitte des vierten Hohlzylinders 11 befinden. Die vierte Kammer 22 und die fünfte Kammer 23 sind jeweils voller Öl. In der ersten Kammer 19, der zweiten Kammer 20, der dritten Kammer 21, der sechsten Kammer 24, der siebenten Kammer 25 und der achten Kammer 26 befindet sich Luft auf Atmosphärendruck.

Die zu der ersten Flüssigkeitsanschlusseinrichtung 27 gehörende Ventileinrichtung ist geschlossen. Die zu der zweiten Flüssigkeitsanschlusseinrichtung 28 gehörende Ventileinrichtung ist geöffnet. Die zu der dritten Flüssigkeitsanschlusseinrichtung 29 gehörende Ventileinrichtung ist geöffnet. Die zu der vierten Flüssigkeitsanschlusseinrichtung 30 gehörende Ventileinrichtung ist geschlossen. Die zu der ersten Gasanschlusseinrichtung 31 gehörende Ventileinrichtung ist geöffnet. Die zu der zweiten Gasanschlusseinrichtung 32 gehörende Ventileinrichtung ist geschlossen. Die zu der dritten Gasanschlusseinrichtung 33 gehörende Ventileinrichtung ist geöffnet. Die zu der vierten Gasanschlusseinrichtung 34 gehörende Ventileinrichtung ist geschlossen. Die zu der fünften Gasanschlusseinrichtung 35 gehörende Ventileinrichtung ist geschlossen. Die zu der sechsten Gasanschlusseinrichtung 38 gehörende Ventileinrichtung ist geschlossen. Die zu der siebenten Gasanschlusseinrichtung 39 gehörende Ventileinrichtung ist geöffnet. Die zu der achten Gasanschlusseinrichtung 40 gehörende Ventileinrichtung ist geschlossen. Die zu der neunten Gasanschlusseinrichtung 41 gehörende Ventileinrichtung ist geöffnet. Die zu der zehnten Gasanschlusseinrichtung 42 gehörende Ventileinrichtung ist geöffnet. Die zu der elften Gasanschlusseinrichtung 45 gehörende Ventileinrichtung ist geschlossen. Die zu der zwölften Gasanschlusseinrichtung 46 gehörende Ventileinrichtung ist geöffnet.

Nun wird mittels einer Pumpe weiteres Öl aus dem Öltank über die dritte Flüssigkeitsanschlusseinrichtung 29 in die fünfte Kammer 23 hineingepumpt. Dies führt wegen der Inkompressibilität des Öls dazu, dass sich, ausgehend von der in den Fig. 1 bis 4 gezeigten angenommenen Startposition, die Kolbenstange 14 mit dem ersten Kolben 15, dem zweiten Kolben 16, dem dritten Kolben 17 und dem vierten Kolben 18 nach rechts bewegt. Dementsprechend wird gleichzeitig das Öl aus der vierten Kammer 22 über die zweite Flüssigkeitsanschlusseinrichtung 28 heraus in den Öltank befördert. Die in der sechsten Kammer 24 befindliche Luft wird über die zwölfte Gasanschlusseinrichtung 46 aus der sechsten Kammer 24 herausgedrückt und der Druckluftspeichereinrichtung zugeführt. Die Luft aus der zweiten Kammer 20 und die Luft aus der achten Kammer 26 wird über die dritte Gasleitung 43 bzw. über die vierte Gasleitung 44 durch die zehnte Gasanschlusseinrichtung 42 hindurch in die dritte Kammer 21 gepresst und bildet dort einen Luft-Überdruck. Letzteres geschieht selbst bei der sich vollziehenden Vergrößerung des Rauminhalts der dritten Kammer 21 deshalb, weil zwei Kammern - nämlich die zweite Kammer 20 und die achte Kammer 26 - in nur eine - nämlich die dritte Kammer 21 - hineinwirken. Der Luft-Überdruck in der dritten Kammer 21 hilft dementsprechend, die Luft aus der sechsten Kammer 24 durch die zwölfte Gasanschlusseinrichtung 46 herauszupressen und auch das Öl aus der vierten Kammer 22 durch die zweite Flüssigkeitsanschlusseinrichtung 28 herauszupressen. Dabei ist der Kolbenhub der Kolbenstange 14 derart abgestimmt, dass die Bewegung der Kolbenstange 14 im Bilde der Fig.1 bis 4 nach rechts so lange andauert, bis sowohl die zweite Kammer 20 als auch die vierte Kammer 22 als auch die sechste Kammer 24 als auch die achte Kammer 26 jeweils einen Rauminhalt von nahezu null haben. Währenddessen hat die erste Kammer 19 über die erste Gasanschlusseinrichtung 31 Luft angesaugt, und die siebente Kammer 25 hat über die dritte Gasanschlusseinrichtung 33 Luft angesaugt. Dementsprechend haben am Ende der Bewegung der Kolbenstange 14 im Bilde der Fig. 1 bis 4 nach rechts sowohl die erste Kammer 19 als auch die dritte Kammer 21 als auch die fünfte Kammer 23 als auch die siebente Kammer 25 ihren maximal möglichen Rauminhalt angenommen. Dabei befindet sich dann sowohl in der ersten Kammer 19 als auch in der siebenten Kammer 25 Luft unter Atmosphärendruck. In der dritten Kammer 21 befindet sich Luft mit einem über Atmosphärendruck liegenden Druck, mithin also Druckluft, und die fünfte Kammer 23 beinhaltet Öl.

Nach Abschluss des Hubes der Kolbenstange 14 im Bilde der Fig. 1 bis 4 nach rechts erfolgt eine Umschaltung der Ventileinrichtungen folgendermaßen: Die zu der ersten Flüssigkeitsanschlusseinrichtung 27 gehörende Ventileinrichtung wird geöffnet. Die zu der zweiten Flüssigkeitsanschlusseinrichtung 28 gehörende Ventileinrichtung wird geschlossen. Die zu der dritten Flüssigkeitsanschlusseinrichtung 29 gehörende Ventileinrichtung wird geschlossen. Die zu der vierten Flüssigkeitsanschlusseinrichtung 30 gehörende Ventileinrichtung wird geöffnet. Die zu der ersten Gasanschlusseinrichtung 31 gehörende Ventileinrichtung wird geschlossen. Die zu der zweiten Gasanschlusseinrichtung 32 gehörende Ventileinrichtung wird geöffnet. Die zu der dritten Gasanschlusseinrichtung 33 gehörende Ventileinrichtung wird geschlossen. Die zu der vierten Gasanschlusseinrichtung 34 gehörende Ventileinrichtung wird geöffnet.

Die zu der fünften Gasanschlusseinrichtung 35 gehörende Ventileinrichtung wird geöffnet. Die zu der sechsten Gasanschlusseinrichtung 38 gehörende Ventileinrichtung wird geöffnet. Die zu der siebenten Gasanschlusseinrichtung 39 gehörende Ventileinrichtung wird geschlossen. Die zu der achten Gasanschlusseinrichtung 40 gehörende Ventileinrichtung wird geöffnet. Die zu der neunten Gasanschlusseinrichtung 41 gehörende Ventileinrichtung wird geschlossen. Die zu der zehnten Gasanschlusseinrichtung 42 gehörende Ventileinrichtung wird geschlossen. Die zu der elften Gasanschlusseinrichtung 45 gehörende Ventileinrichtung wird geöffnet und dabei die in der dritten Kammer 21 befindliche Druckluft der Druckluftspeichereinrichtung zugeführt. Die zu der zwölften Gasanschlusseinrichtung 46 gehörende Ventileinrichtung wird geschlossen.

Nun wird mittels der Pumpe Öl aus dem Öltank über die erste Flüssigkeitsanschlusseinrichtung 27 in die vierte Kammer 22 hineingepumpt. Dies führt wegen der Inkompressibilität des Öls dazu, dass sich im Bilde der Fig. 1 bis 4 die Kolbenstange 14 mit dem ersten Kolben 15, dem zweiten Kolben 16, dem dritten Kolben 17 und dem vierten Kolben 18 nun nach links bewegt. Dementsprechend wird gleichzeitig das Öl aus der fünften Kammer 23 über die vierte Flüssigkeitsanschlusseinrichtung 30 heraus in den Öltank befördert. Die in der dritten Kammer 21 befindliche Luft wird über die elfte Gasanschlusseinrichtung 45 aus der dritten Kammer 21 herausgedrückt und der Druckluftspeichereinrichtung zugeführt. Die Luft aus der ersten Kammer 19 und die Luft aus der siebenten Kammer 25 wird über die erste Gasleitung 36 bzw. über die zweite Gasleitung 37 durch die fünfte Gasanschlusseinrichtung 35 hindurch in die sechste Kammer 24 gepresst und bildet dort einen Luft-Überdruck. Letzteres geschieht selbst bei der sich vollziehenden Vergrößerung des Rauminhalts der sechsten Kammer 24 deshalb, weil zwei Kammern - nämlich die erste Kammer 19 und die siebente Kammer 25 - in nur eine - nämlich die sechste Kammer 24 - hineinwirken. Der Luft-Überdruck in der sechsten Kammer 24 hilft dementsprechend, die Luft aus der dritten Kammer 21 durch die elfte Gasanschlusseinrichtung 45 herauszupressen und auch das Öl aus der fünften Kammer 23 durch die vierte Flüssigkeitsanschlusseinrichtung 30 herauszupressen. Dabei ist der Kolbenhub der Kolbenstange 14 derart abgestimmt, dass die Bewegung der Kolbenstange 14 im Bilde der Fig. 1 bis 4 nach links so lange andauert, bis sowohl die erste Kammer 19 als auch die dritte Kammer 21 als auch die fünfte Kammer 23 als auch die siebente Kammer 25 jeweils einen Rauminhalt von nahezu null haben. Währenddessen hat die zweite Kammer 20 über die sechste Gasanschlusseinrichtung 38 Luft angesaugt, und die achte Kammer 26 hat über die achte Gasanschlusseinrichtung 40 Luft angesaugt. Dementsprechend haben am Ende der Bewegung der Kolbenstange 14 im Bilde der Fig. 1 bis 4 nach links sowohl die zweite Kammer 20 als auch die vierte Kammer 22 als auch die sechste Kammer 24 als auch die achte Kammer 26 ihren maximal möglichen Rauminhalt angenommen. Dabei befindet sich dann sowohl in der zweiten Kammer 20 als auch in der achten Kammer 26 Luft unter Atmosphärendruck. In der sechsten Kammer 24 befindet sich Luft mit einem über Atmosphärendruck liegenden Druck, mithin also Druckluft, und die vierte Kammer 22 beinhaltet Öl.

Nach Abschluss des Hubes der Kolbenstange 14 im Bilde der Fig. 1 bis 4 nach links werden die Ventileinrichtungen wieder in ihre erste oben beschriebene Stellung zurückgeschaltet, nämlich: Die zu der ersten Flüssigkeitsanschlusseinrichtung 27 gehörende Ventileinrichtung wird geöffnet. Die zu der zweiten Flüssigkeitsanschlusseinrichtung 28 gehörende Ventileinrichtung wird geschlossen. Die zu der dritten Flüssigkeitsanschlusseinrichtung 29 gehörende Ventileinrichtung wird geschlossen. Die zu der vierten Flüssigkeitsanschlusseinrichtung 30 gehörende Ventileinrichtung wird geöffnet. Die zu der ersten Gasanschlusseinrichtung 31 gehörende Ventileinrichtung wird geschlossen. Die zu der zweiten Gasanschlusseinrichtung 32 gehörende Ventileinrichtung wird geöffnet. Die zu der dritten Gasanschlusseinrichtung 33 gehörende Ventileinrichtung wird geschlossen. Die zu der vierten Gasanschlusseinrichtung 34 gehörende Ventileinrichtung wird geöffnet. Die zu der fünften Gasanschlusseinrichtung 35 gehörende Ventileinrichtung wird geöffnet. Die zu der sechsten Gasanschlusseinrichtung 38 gehörende Ventileinrichtung wird geöffnet. Die zu der siebenten Gasanschlusseinrichtung 39 gehörende Ventileinrichtung wird geschlossen. Die zu der achten Gasanschlusseinrichtung 40 gehörende Ventileinrichtung wird geöffnet. Die zu der neunten Gasanschlusseinrichtung 41 gehörende Ventileinrichtung wird geschlossen. Die zu der zehnten Gasanschlusseinrichtung 42 gehörende Ventileinrichtung wird geschlossen. Die zu der elften Gasanschlusseinrichtung 45 gehörende Ventileinrichtung wird geöffnet. Die zu der zwölften Gasanschlusseinrichtung 46 gehörende Ventileinrichtung wird geschlossen.

Nun wird mittels der Pumpe Öl aus dem Öltank über die dritte Flüssigkeitsanschlusseinrichtung 29 in die fünfte Kammer 23 hineingepumpt. Dies führt wegen der Inkompressibilität des Öls dazu, dass sich im Bilde der Fig. 1 bis 4 die Kolbenstange 14 mit dem ersten Kolben 15, dem zweiten Kolben 16, dem dritten Kolben 17 und dem vierten Kolben 18 nun wieder nach rechts bewegt. Dementsprechend wird gleichzeitig das Öl aus der vierten Kammer 22 über die zweite Flüssigkeitsanschlusseinrichtung 28 heraus in den Öltank befördert. Die in der sechsten Kammer 24 befindliche Luft wird über die zwölfte Gasanschlusseinrichtung 46 aus der sechsten Kammer 24 herausgedrückt und der Druckluftspeichereinrichtung zugeführt. Die Luft aus der zweiten Kammer 20 und die Luft aus der achten Kammer 26 wird über die dritte Gasleitung 43 bzw. über die vierte Gasleitung 44 durch die zehnte Gasanschlusseinrichtung 42 hindurch in die dritte Kammer 21 gepresst und bildet dort einen Luft-Überdruck. Letzteres geschieht selbst bei der sich vollziehenden Vergrößerung des Rauminhalts der dritten Kammer 21 deshalb, weil zwei Kammern - nämlich die zweite Kammer 20 und die achte Kammer 26 - in nur eine - nämlich die dritte Kammer 21 - hineinwirken. Der Luft-Überdruck in der dritten Kammer 21 hilft dementsprechend, die Luft aus der sechsten Kammer 24 durch die zwölfte Gasanschlusseinrichtung 46 herauszupressen und auch das Öl aus der vierten Kammer 22 durch die zweite Flüssigkeitsanschlusseinrichtung 28 herauszupressen. Dabei ist der Kolbenhub der Kolbenstange 14 derart abgestimmt, dass die Bewegung der Kolbenstange 14 im Bilde der Fig. 1 bis 4 nach rechts so lange andauert, bis sowohl die zweite Kammer 20 als auch die vierte Kammer 22 als auch die sechste Kammer 24 als auch die achte Kammer 26 jeweils einen Rauminhalt von nahezu null haben. Währenddessen hat die erste Kammer 19 über die erste Gasanschlusseinrichtung 31 Luft angesaugt, und die siebente Kammer 25 hat über die dritte Gasanschlusseinrichtung 33 Luft angesaugt. Dementsprechend haben am Ende der Bewegung der Kolbenstange 14 im Bilde der Fig. 1 bis 4 nach rechts sowohl die erste Kammer 19 als auch die dritte Kammer 21 als auch die fünfte Kammer 23 als auch die siebente Kammer 25 ihren maximal möglichen Rauminhalt angenommen. Dabei befindet sich dann sowohl in der ersten Kammer 19 als auch in der siebenten Kammer 25 Luft unter Atmosphärendruck. In der dritten Kammer 21 befindet sich Luft mit einem über Atmosphärendruck liegenden Druck, mithin also Druckluft, und die fünfte Kammer 23 beinhaltet Öl.

Nach Abschluss des eben beschriebenen Hubes der Kolbenstange 14 im Bilde der Fig. 1 bis 4 nach rechts werden die Ventileinrichtungen dann in Vorbereitung des abermaligen Hubes der Kolbenstange 14 nach links so umgeschaltet, wie es oben bereits vor der Beschreibung des Hubes der Kolbenstange 14 nach links erläutert worden ist. So bewegt sich dann die Kolbenstange 14 mit dem ersten Kolben 15, dem zweiten Kolben 16, dem dritten Kolben 17 und dem vierten Kolben 18 hin und her, und abwechselnd wird dabei an der elften Gasanschlusseinrichtung 45 bzw. an der zwölften Gasanschlusseinrichtung 46 komprimierte Luft bereitgestellt, welche entweder - wie vorstehend beschrieben - einer Druckluftspeichereinrichtung zugeführt werden kann, welche aber auch stattdessen irgendeinem Verbraucher komprimierter Luft, beispielsweise einer Gebläseeinrichtung oder einer Drucklufthammereinrichtung, zugeführt werden kann. Es kann bei anderen Ausführungsbeispielen der erfindungsgemäßen hydraulische Kolbeneinrichtung 1 auch vorgesehen sein, die elfte Gasanschlusseinrichtung 45 und die zwölfte Gasanschlusseinrichtung 46 mit derartigen Ventileinrichtungen zu versehen, dass ein Benutzer wahlweise operativ entscheiden kann, ob die gerade aus der jeweiligen elften bzw. zwölften Gasanschlusseinrichtung 45, 46 austretende komprimierte Luft entweder in eine Druckluftspeichereinrichtung eingeleitet oder einem Verbraucher komprimierter Luft zugeführt wird.

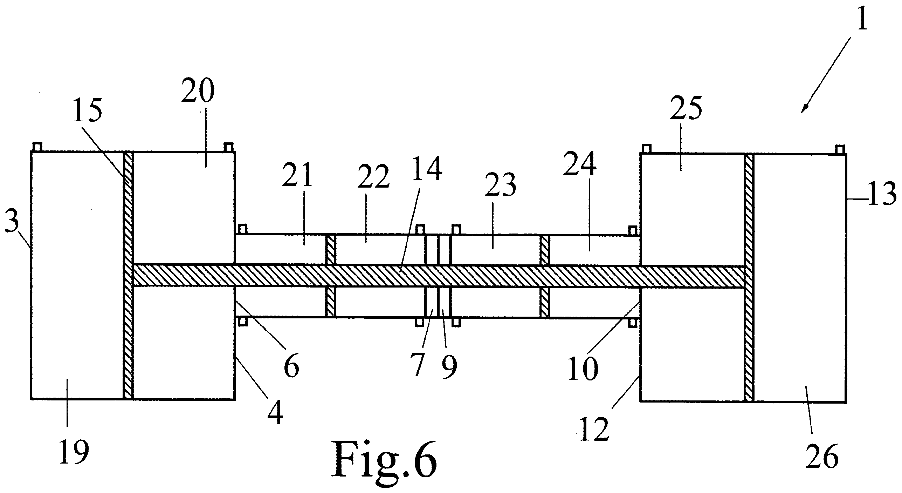

Fig. 6 zeigt schematisch und nicht maßstabsgerecht ein zweites Ausführungsbeispiel der erfindungsgemäßen hydraulischen Kolbeneinrichtung 1. Dieses zweite Ausführungsbeispiel der erfindungsgemäßen hydraulischen Kolbeneinrichtung 1 funktioniert vom Prinzip her genau so, wie das oben mit Bezug auf die Fig. 1 bis 4 beschriebene erste Ausführungsbeispiel der erfindungsgemäßen hydraulischen Kolbeneinrichtung 1, unterscheidet sich von diesem aber durch die Anordnung und die Größenverhältnisse der vier Hohlzylinder 2, 5, 8, 11, was verbesserte betriebstechnische Eigenschaften zur Folge hat.

Bei dem oben mit Bezug auf die Fig. 1 bis 4 beschriebenen ersten Ausführungsbeispiel der erfindungsgemäßen hydraulischen Kolbeneinrichtung 1 haben alle vier genannten Hohlzylinder 2, 5, 8, 11 jeweils dieselbe Form und Größe, und jeder einzelne der vier Hohlzylinder 2, 5, 8, 11 ist separat von den anderen angeordnet, so dass es drei räumliche Abschnitte gibt, in welchen sich die Kolbenstange 14 außerhalb jedweden Hohlzylinders 2, 5, 8, 11 befindet (siehe insoweit Fig. 1 bis 4). Eine solche Gestaltung der erfindungsgemäßen hydraulischen Kolbeneinrichtung 1 ist als Ausführungsbeispiel durchaus möglich, funktioniert tatsächlich und eignet sich gut zum Erklären der grundlegenden Funktionsweise der erfindungsgemäßen hydraulischen Kolbeneinrichtung 1, jedoch ist eine solche Gestaltung bei weitem nicht optimal für die Zwecke der Gasverdichtung bzw. der Luftverdichtung.

Bei dem in Fig. 6 dargestellten zweiten Ausführungsbeispiel der erfindungsgemäßen hydraulischen Kolbeneinrichtung 1 haben alle vier Hohlzylinder 2, 5, 8, 11 jeweils die gleiche Länge. Der zweite Hohlzylinder 5 und der dritte Hohlzylinder 8 haben jeweils den gleichen Durchmesser. Der erste Hohlzylinder 2 und der vierte Hohlzylinder 11 haben jeweils den gleichen Durchmesser, und der Durchmesser des ersten Hohlzylinders 2 ist größer als der Durchmesser des zweiten Hohlzylinders 5. Dabei ist besonders bevorzugt, den Durchmesser des ersten Hohlzylinders 2 mindestens doppelt so groß zu gestalten wie den Durchmesser des zweiten Hohlzylinders 5. Dementsprechend muss natürlich auch die Größe des ersten Kolbens 15 und die Größe des vierten Kolbens 18 angepasst werden, um sicherzustellen, dass diese sich nach wie vor eng an die Innenwandung des ersten Hohlzylinders 2 bzw. des vierten Hohlzylinders 11 anschmiegen und weiterhin eine pneumatisch dichte Trennung der ersten Kammer 19 von der zweiten Kammer 20 bzw. der siebenten Kammer 25 von der achten Kammer 26 gewährleisten. Der Vorteil einer solchen in Fig. 6 dargestellten Bauweise gegenüber der in den Fig. 1 bis 4 gezeigten Bauweise für die Drucklufterzeugung besteht darin, dass in dem zweiten Ausführungsbeispiel der erfindungsgemäßen Kolbeneinrichtung 1 bei Bewegung der Kolbenstange 14 nach rechts die zweite Kammer 20 mit großem Rauminhalt und die achte Kammer 26 mit großem Rauminhalt in die dritte Kammer 21, welche einen viel kleineren Rauminhalt hat, hineinwirken, so dass ein deutlich höherer Luft-Überdruck in der dritten Kammer 21 erzielt werden kann als bei dem ersten Ausführungsbeispiel der erfindungsgemä-ßen hydraulischen Kolbeneinrichtung 1. Entsprechendes gilt auch für die Bewegung der Kolbenstange 14 nach links: In dem zweiten Ausführungsbeispiel der erfindungsgemäßen hydraulischen Kolbeneinrichtung 1 wirken bei Bewegung der Kolbenstange 14 nach links die erste Kammer 19 mit großem Rauminhalt und die siebente Kammer 25 mit großem Rauminhalt in die sechste Kammer 24, welche einen viel kleineren Rauminhalt hat, hinein, so dass ein deutlich höherer Luft-Überdruck in der sechsten Kammer 24 erzielt werden kann als bei dem ersten Ausführungsbeispiel der erfindungsgemäßen hydraulischen Kolbeneinrichtung 1.

Ganz allgemein gesprochen stehen die Größenverhältnisse der vier Hohlzylinder 2, 5, 8, 11 untereinander immer im Verhältnis zum bei der Gas- bzw. Luftkompression am Ende erreichbaren Gasdruck bzw. Luftdruck.

Das in Fig. 6 dargestellte zweite Ausführungsbeispiel der erfindungsgemäßen hydraulischen Kolbeneinrichtung 1 ist ferner so eingerichtet, dass der erste Hohlzylinder 2 und der zweite Hohlzylinder 5 unmittelbar aneinander ansitzen, so dass die zweite Stirnwand 4 und die dritte Stirnwand 6 zumindest teilweise zusammenfallen. Außerdem sitzen der dritte Hohlzylinder 8 und der vierte Hohlzylinder 11 unmittelbar aneinander an, so dass die sechste Stirnwand 10 und die siebente Stirnwand 12 zumindest teilweise zusammenfallen. Ein solcher Aufbau bietet in dichtungstechnischer Hinsicht deutliche Vorteile gegenüber dem in den Fig. 1 bis 4 gezeigten Aufbau des ersten Ausführungsbeispiels der erfindungsgemäßen hydraulischen Kolbeneinrichtung 1, bei dem alle vier Hohlzylinder 2, 5, 8, 11 vollkommen separat voneinander angeordnet sind und dementsprechend ein höherer dichtungstechnischer Aufwand betrieben werden muss.

Bei einem weiteren, in den Figuren nicht dargestellten Ausführungsbeispiel der erfindungsgemäßen hydraulischen Kolbeneinrichtung 1 ist vorgesehen, dass der Durchmesser der Kolbenstange 14 über die Länge der Kolbenstange 14 hinweg variiert derart, dass die Kolbenstange 14 in ihrem Bereich zwischen dem ersten Kolben 15 und dem zweiten Kolben 16 einen anderen Durchmesser hat als in ihrem Bereich zwischen dem zweiten Kolben 16 und dem dritten Kolben 17 und dass die Kolbenstange 14 in ihrem Bereich zwischen dem dritten Kolben 17 und dem vierten Kolben 18 einen anderen Durchmesser hat als in ihrem Bereich zwischen dem zweiten Kolben 16 und dem dritten Kolben 17. Eine solche konstruktive Maßnahme liefert eine noch weiter verbesserte Unterstützung der Gas- bzw. Luftverdichtung.

Zwar wurden vorstehend die einzelnen hier näher beschriebenen besonderen Ausführungsbeispiele der erfindungsgemäßen hydraulischen Kolbeneinrichtung 1 vor allem mit Bezug auf die Verwendung bzw. Verdichtung des Gases Luft erläutert, jedoch sei an dieser Stelle betont, dass anstelle von oder zusammen mit Luft auch jedes beliebige andere Gas, beispielsweise Biogas und/oder Methan und/oder irgendein Kohlenwasserstoffgas und/oder ein Gemisch aus Kohlenwasserstoffgasen und/oder ein Gemisch aus Luft und einem oder mehreren Kohlenwasserstoffgasen in der erfindungsgemäßen hydraulischen Kolbeneinrichtung 1 verwendet und durch sie verdichtet werden kann.

Entsprechendes gilt für die Nennung von Öl als in der erfindungsgemäßen hydraulischen Kolbeneinrichtung 1 zu verwendende Flüssigkeit. Zwar wird Öl aus rein wirtschaftspraktischen Gründen häufig als Flüssigkeit in der erfindungsgemäßen hydraulischen Kolbeneinrichtung 1 eingesetzt, jedoch ist der Betrieb der erfindungsgemäßen hydraulischen Kolbeneinrichtung 1 prinzipiell ohne weiteres auch mit jeder beliebigen anderen - vorzugsweise nicht hochexplosiven - Flüssigkeit, beispielsweise mit Wasser, möglich.

Vorstehend wurde die Verwendung der erfindungsgemäßen hydraulischen Kolbeneinrichtung 1 zum Zwecke der Gasverdichtung beschrieben, und für diesen Zweck ist die erfindungsgemäße hydraulische Kolbeneinrichtung 1 stets ausgelegt und geeignet.

Die erfindungsgemäße hydraulische Kolbeneinrichtung 1 kann jedoch darüber hinaus auch als wesentlicher Bestandteil einer erfindungsgemäßen Druckgasenergiewandlungseinrichtung 50 fungieren und dabei dann nicht nur - wie oben beschrieben - im Gaskompressionsmodus, sondern auch umgekehrt, nämlich im Gasentspannungsmodus betrieben werden.

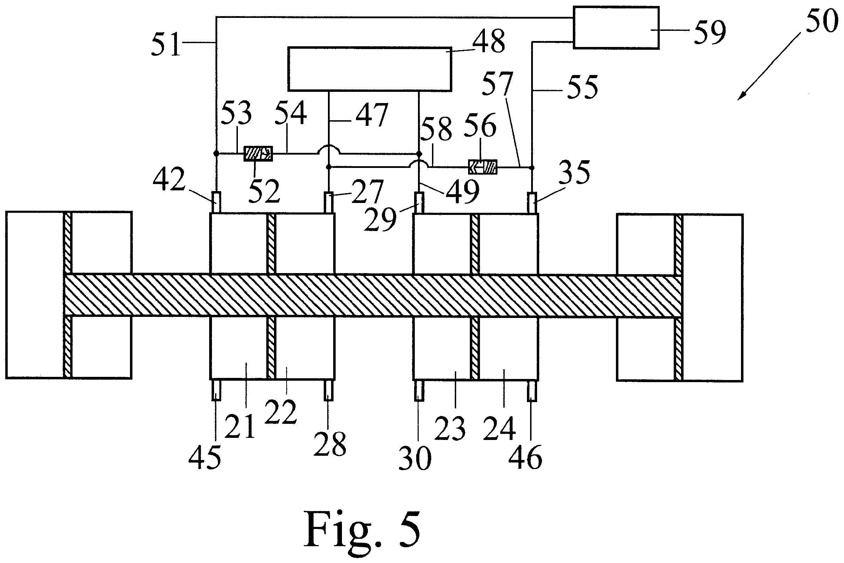

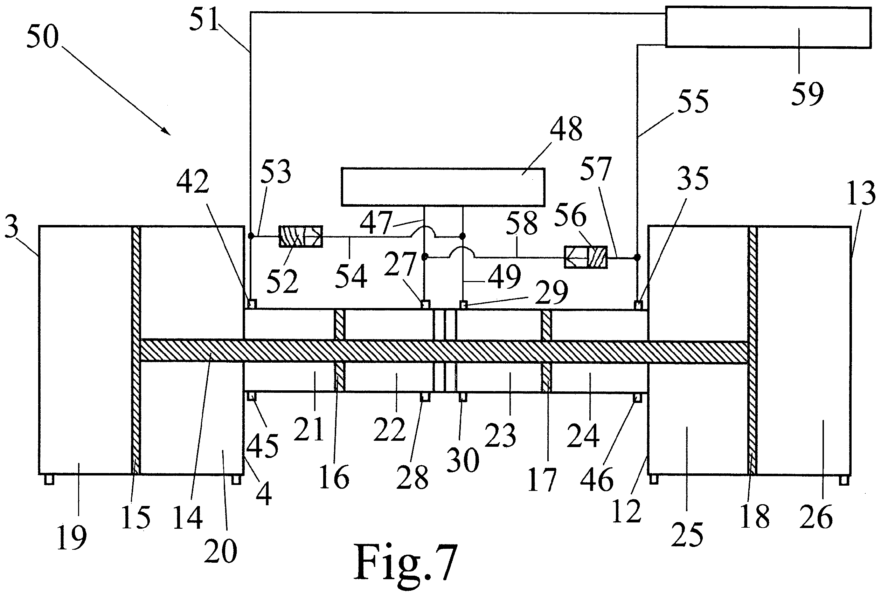

Fig. 5 zeigt ein erstes Ausführungsbeispiel der erfindungsgemäßen Druckgasenergiewandlungseinrichtung 50, und Fig. 7 zeigt ein zweites Ausführungsbeispiel der erfindungsgemäßen Druckgasenergiewandlungseinrichtung 50. Der Unterschied zwischen diesen beiden eben genannten Ausführungsbeispielen der erfindungsgemäßen Druckgasenergiewandlungseinrichtung 50 besteht lediglich darin, dass das in Fig. 5 gezeigte erste Ausführungsbeispiel der erfindungsgemäßen Druckgasenergiewandlungseinrichtung 50 aufgebaut ist auf Basis des in den Fig. 1 bis 4 dargestellten ersten Ausführungsbeispiels der erfindungsgemäßen hydraulischen Kolbeneinrichtung 1 und das in Fig. 7 gezeigte zweite Ausführungsbeispiel der erfindungsgemäßen Druckgasenergiewandlungseinrichtung 50 aufgebaut ist auf Basis des in Fig. 6 dargestellten zweiten Ausführungsbeispiels der erfindungsgemäßen hydraulischen Kolbeneinrichtung 1.

Da sowohl das erste Ausführungsbeispiel der erfindungsgemäßen hydraulischen Kolbeneinrichtung 1 als auch das zweite Ausführungsbeispiel der erfindungsgemäßen hydraulischen Kolbeneinrichtung 1 bereits weiter oben jeweils sehr ausführlich beschrieben worden ist, können im folgenden die Fig. 5 und 7 zusammen betrachtet werden, und es wird im folgenden der Schwerpunkt gelegt lediglich auf die Beschreibung derjenigen Bestandteile der erfindungsgemäßen Druckgasenergiewandlungseinrichtung 50, welche im ersten Ausführungsbeispiel der erfindungsgemäßen Druckgasenergiewandlungseinrichtung 50 und im zweiten Ausführungsbeispiel der erfindungsgemäßen Druckgasenergiewandlungseinrichtung 50 jeweils gleich sind, so dass im folgenden nicht weiter zwischen den Fig. 5 und 7 bzw. zwischen dem ersten Ausführungsbeispiel der erfindungsgemäßen Druckgasenergiewandlungseinrichtung 50 und dem zweiten Ausführungsbeispiel der erfindungsgemäßen Druckgasenergiewandlungseinrichtung 50 differenziert wird.

Die erfindungsgemäße Druckgasenergiewandlungseinrichtung 50 weist als wesentlichen Bestandteil eine erfindungsgemäße hydraulische Kolbeneinrichtung 1 auf, wobei letztere zum Beispiel aufgebaut sein kann wie das oben bereits ausführlich beschriebene erste Ausführungsbeispiel der erfindungsgemäßen hydraulischen Kolbeneinrichtung 1 (vgl. insoweit Fig. 5) oder zum Beispiel auch wie das oben bereits ausführlich beschriebene zweite Ausführungsbeispiel der erfindungsgemäßen hydraulischen Kolbeneinrichtung 1 (vgl. insoweit Fig. 7). Die erfindungsgemäße Druckgasenergiewandlungseinrichtung 50 weist ferner eine - in den Figuren nicht gezeigte - Druckgasspeichereinrichtung und eine - in den Figuren ebenfalls nicht gezeigte - Flüssigkeitsspeichereinrichtung auf.

Die elfte Gasanschlusseinrichtung 45 ist an die Druckgasspeichereinrichtung angeschlossen und mittels der zu der elften Gasanschlusseinrichtung 45 gehörigen Ventileinrichtung so eingerichtet, dass die elfte Gasanschlusseinrichtung 45 bei entsprechend geeigneter Ventileinstellung zum Einführen komprimierten Gases aus der Druckgasspeichereinrichtung in die dritte Kammer 21 dient.

Die zwölfte Gasanschlusseinrichtung 46 ist an die Druckgasspeichereinrichtung angeschlossen und mittels der zu der zwölften Gasanschlusseinrichtung 46 gehörigen Ventileinrichtung so eingerichtet, dass die zwölfte Gasanschlusseinrichtung 46 bei entsprechend geeigneter Ventileinstellung zum Einführen komprimierten Gases aus der Druckgasspeichereinrichtung in die sechste Kammer 24 dient.

Die zweite Flüssigkeitsanschlusseinrichtung 28 ist an die Flüssigkeitsspeichereinrichtung angeschlossen und mittels der zu der zweiten Flüssigkeitsanschlusseinrichtung 28 gehörigen Ventileinrichtung so eingerichtet, dass die zweite Flüssigkeitsanschlusseinrichtung 28 bei entsprechend geeigneter Ventileinstellung zum Ansaugen von Flüssigkeit aus der Flüssigkeitsspeichereinrichtung in die vierte Kammer 22 dient.

Die vierte Flüssigkeitsanschlusseinrichtung 30 ist an die Flüssigkeitsspeichereinrichtung angeschlossen und mittels der zu der vierten Flüssigkeitsanschlusseinrichtung 30 gehörigen Ventileinrichtung so eingerichtet, dass die vierte Flüssigkeitsanschlusseinrichtung 30 bei entsprechend geeigneter Ventileinstellung zum Ansaugen von Flüssigkeit aus der Flüssigkeitsspeichereinrichtung in die fünfte Kammer 23 dient.

Die erste Flüssigkeitsanschlusseinrichtung 27 ist mittels der zu ihr gehörigen Ventileinrichtung so eingerichtet, dass die erste Flüssigkeitsanschlusseinrichtung 27 bei entsprechend geeigneter Ventileinstellung zum Einleiten von Flüssigkeit aus der vierten Kammer 22 in eine erste Flüssigkeitsleitung 47 dient, welche so eingerichtet ist, dass sie in sie eingeleitete und durch sie hindurchströmende Flüssigkeit zu einer durch die strömende Flüssigkeit anzutreibenden Maschine 48 leitet, wobei diese Maschine 48 beispielsweise eine Antriebseinrichtung für einen Elektroenergiegenerator sein kann.

Die dritte Flüssigkeitsanschlusseinrichtung 29 ist mittels der zu ihr gehörigen Ventileinrichtung so eingerichtet, dass die dritte Flüssigkeitsanschlusseinrichtung 29 bei entsprechend geeigneter Ventileinstellung zum Einleiten von Flüssigkeit aus der fünften Kammer 23 in eine zweite Flüssigkeitsleitung 49 dient, welche so eingerichtet ist, dass sie in sie eingeleitete und durch sie hindurchströmende Flüssigkeit zu einer durch die strömende Flüssigkeit anzutreibenden Maschine 48, welche beispielsweise eine Antriebseinrichtung für einen Elektroenergiegenerator sein kann, leitet.

Die zehnte Gasanschlusseinrichtung 42 ist mittels der zu ihr gehörigen Ventileinrichtung so eingerichtet, dass die zehnte Gasanschlusseinrichtung 42 bei entsprechend geeigneter Ventileinstellung zum Einleiten von Gas aus der dritten Kammer 21 in eine fünfte Gasleitung 51 dient.

Ferner ist eine erste Druckregelventileinrichtung 52 vorhanden, welche Gasdruck und Flüssigkeitsdruck gegeneinander regelt, gasseitig mittels einer sechsten Gasleitung 53 an die fünfte Gasleitung 51 angeschlossen ist und flüssigkeitsseitig mittels einer dritten Flüssigkeitsleitung 54 an die zweite Flüssigkeitsleitung 49 angeschlossen ist.

Die fünfte Gasanschlusseinrichtung 35 ist mittels der zu ihr gehörigen Ventileinrichtung so eingerichtet, dass die fünfte Gasanschlusseinrichtung 35 bei entsprechend geeigneter Ventileinstellung zum Einleiten von Gas aus der sechsten Kammer 24 in eine siebente Gasleitung 55 dient.

Außerdem ist eine zweite Druckregelventileinrichtung 56 vorhanden, welche Gasdruck und Flüssigkeitsdruck gegeneinander regelt, gasseitig mittels einer achten Gasleitung 57 an die siebente Gasleitung 55 angeschlossen ist und flüssigkeitsseitig mittels einer vierten Flüssigkeitsleitung 58 an die erste Flüssigkeitsleitung 47 angeschlossen ist.

Die fünfte Gasleitung 51 führt ferner zu einer, aus der fünften Gasleitung 51 stammendes Gas thermisch und/oder mechanisch und/oder chemisch verwendenden, Verbrauchereinrichtung 59.

Die siebente Gasleitung 55 führt ferner zu einer, aus der siebenten Gasleitung 55 stammendes Gas thermisch und/oder mechanisch und/oder chemisch verwendenden, Verbrauchereinrichtung 59.

Wie bei der weiter oben ausführlich beschriebenen erfindungsgemäßen hydraulischen Kolbeneinrichtung 1 kann dementsprechend natürlich auch bei der erfindungsgemäßen Druckgasenergiewandlungseinrichtung 50 als Gas zum Beispiel Luft verwendet werden. Es ist aber auch bei der erfindungsgemäßen Druckgasenergiewandlungseinrichtung 50 genauso gut möglich, dass anstelle von oder zusammen mit Luft auch jedes beliebige andere Gas, beispielsweise Biogas und/oder Methan und/oder irgendein Kohlenwasserstoffgas und/oder ein Gemisch aus Kohlenwasserstoffgasen und/oder ein Gemisch aus Luft und einem oder mehreren Kohlenwasserstoffgasen in der erfindungsgemäßen Druckgasenergiewandlungseinrichtung 50 verwendet werden kann.

Entsprechendes gilt für die bei der erfindungsgemäßen Druckgasenergiewandlungseinrichtung 50 zu verwendende Flüssigkeit. Zwar wird aus rein wirtschaftspraktischen Gründen häufig Öl als Flüssigkeit in der erfindungsgemäßen Druckgasenergiewandlungseinrichtung 50 eingesetzt, jedoch ist der Betrieb der erfindungsgemäßen Druckgasenergiewandlungseinrichtung 50 prinzipiell ohne weiteres auch mit jeder beliebigen anderen Flüssigkeit, beispielsweise mit Wasser, möglich.

Beide vorstehend unter rein konstruktiven Gesichtspunkten beschriebenen Ausführungsbeispiele der erfindungsgemäßen Druckgasenergiewandlungseinrichtung 50 funktionieren folgendermaßen:

Man stelle sich vor, dass, ausgehend von den Ansichten der Fig. 5 und der Fig. 7, sich anfangs die Kolbenstange 14 in ihrer weitestmöglich nach links verschobenen Stellung befinden möge. Dementsprechend haben die erste Kammer 19, die dritte Kammer 21, die fünfte Kammer 23 und die siebente Kammer 25 anfangs jeweils ihren kleinstmöglichen Rauminhalt, während die zweite Kammer 20, die vierte Kammer 22, die sechste Kammer 24 und die achte Kammer 26 anfangs ihren jeweils größtmöglichen Rauminhalt aufweisen. Die zweite Kammer 20, die sechste Kammer 24 und die achte Kammer 26 sind anfangs jeweils mit Gas gefüllt, während die vierte Kammer 22 anfangs mit Flüssigkeit gefüllt ist. Als Gas möge bei den hier zu beschreibenden Ausführungsbeispielen der erfindungsgemäßen Druckgasenergiewandlungseinrichtung 50 Luft zum Einsatz kommen, und als Flüssigkeit wird bei den hier zu beschreibenden Ausführungsbeispielen der erfindungsgemäßen Druckgasenergiewandlungseinrichtung 50 Öl verwendet.

Die zu der ersten Gasanschlusseinrichtung 31 gehörende Ventileinrichtung, die zu der zweiten Gasanschlusseinrichtung 32 gehörende Ventileinrichtung, die zu der dritten Gasanschlusseinrichtung 33 gehörende Ventileinrichtung, die zu der vierten Gasanschlusseinrichtung 34 gehörende Ventileinrichtung, die zu der sechsten Gasanschlusseinrichtung 38 gehörende Ventileinrichtung, die zu der siebenten Gasanschlusseinrichtung 39 gehörende Ventileinrichtung, die zu der achten Gasanschlusseinrichtung 40 gehörende Ventileinrichtung und die zu der neunten Gasanschlusseinrichtung 41 gehörende Ventileinrichtung sind offen und bleiben - jedenfalls für die Zwecke der nachfolgenden Funktionsbeschreibung der beiden in den Fig. 5 bzw. 7 gezeigten Ausführungsbeispiele der Druckgasenergiewandlungseinrichtung 50 - auch beständig offen. Wie aus der nachfolgenden Funktionsbeschreibung der beiden in den Fig. 5 bzw. 7 gezeigten Ausführungsbeispiele der erfindungsgemäßen Druckgasenergiewandlungseinrichtung 50 noch ohne weiteres ersichtlich werden wird, können die erste Kammer 19, die zweite Kammer 20, die siebente Kammer 25 und die achte Kammer 26 beispielweise einfach dazu genutzt werden, sich entspannende und folglich abkühlende Druckluft aus der Druckluftspeichereinrichtung aufzufangen und zu einem Verbraucher kalter Luft durchzuleiten, oder sie können - bei Betrieb der erfindungsgemäßen Druckgasenergiewandlungseinrichtung 50 in warmer Umgebung oder in warmer Teilumgebung - dazu genutzt werden, einfach warme Außenluft anzusaugen und diese an einen Verbraucher warmer Luft durchzuleiten. Die im vorangegangenen Absatz genannten Möglichkeiten sind allerdings nur mögliche Nebeneffekte, die - falls gewünscht - beim Betrieb der erfindungsgemäßen Druckgasenergiewandlungseinrichtung 50 mit ausgenutzt werden können, aber nicht unbedingt ausgenutzt werden müssen.

Unbedingt wesentlich für den Betrieb der erfindungsgemäßen Druckgasenergiewandlungseinrichtung 50 sind allerdings der zweite Hohlzylinder 5 mit der dritten Kammer 21 und der vierten Kammer 22 sowie der dritte Hohlzylinder 8 mit der fünften Kammer 23 und der sechsten Kammer 24.

Die zur zehnten Gasanschlusseinrichtung 42 gehörende Ventileinrichtung ist anfangs geschlossen. Die zur zwölften Gasanschlusseinrichtung 46 gehörende Ventileinrichtung ist anfangs ebenfalls geschlossen. Die zur zweiten Flüssigkeitsanschlusseinrichtung 28 gehörende Ventileinrichtung ist anfangs geschlossen, während die zur ersten Flüssigkeitsanschlusseinrichtung 27 gehörende Ventileinrichtung anfangs offen ist. Die zur dritten Flüssigkeitsanschlusseinrichtung 29 gehörende Ventileinrichtung ist anfangs geschlossen, und die zur vierten Flüssigkeitsanschlusseinrichtung 30 gehörende Ventileinrichtung ist anfangs offen.

Die zur fünften Gasanschlusseinrichtung 35 gehörende Ventileinrichtung ist anfangs offen. Auch die zur elften Gasanschlusseinrichtung 45 gehörende Ventileinrichtung ist anfangs offen. Dementsprechend wird Druckluft aus der Druckluftspeichereinrichtung durch die elfte Gasanschlusseinrichtung 45 in die dritte Kammer 21 eingeleitet, was dazu führt, dass sich die Kolbenstange 14 mit den auf ihr fixierten vier Kolben 15, 16, 17, 18 in den Ansichten der Fig. 5 bzw. 7 nach rechts bewegt. Dementsprechend wird Luft aus der sechsten Kammer 24 durch die fünfte Gasanschlusseinrichtung 35 herausgedrückt und über die siebente Gasleitung 55 der Verbrauchereinrichtung 59, welche die Luft thermisch und/oder mechanisch und/oder chemisch verwendet, zugeführt. Die eben genannte Verbrauchereinrichtung 59 kann beispielsweise eine einen Elektrogenerator antreibende Turbine sein oder beispielsweise ein Ausführungsbeispiel einer weiter unten noch zu beschreibenden erfindungsgemäßen Druckgasenergiewandlungs-Wärmetauscher-Einrichtung 60, 146 oder beispielsweise ein Ausführungsbeispiel einer weiter unten noch zu beschreibenden erfindungsgemäßen Druckgasenergiewandlungs-Wärmetauscher-Einrichtungs-Vorstufeneinrichtung 137, 138, 149 oder beispielsweise ein Ausführungsbeispiel einer weiter unten noch zu beschreibenden erfindungsgemäßen Druckgasenergiewandlungsvorrichtung. Gleichzeitig steht die aus der sechsten Kammer 24 herausgepresste Luft über die achte Gasleitung 57 an der Luftseite der zweiten Druckregelventileinrichtung 56 an, welche Luftdruck und Öldruck gegeneinander regelt.

Bei der eben genannten Bewegung der Kolbenstange 14 mit den auf ihr fixierten vier Kolben 15, 16, 17, 18 in den Ansichten der Fig. 5 bzw. 7 nach rechts wird ferner Öl aus der vierten Kammer 22 herausgepresst und gelangt über die erste Flüssigkeitsanschlusseinrichtung 27 und die erste Flüssigkeitsleitung 47 zu einer durch strömendes Öl anzutreibenden Maschine 48, welche beispielsweise eine einen Elektrogenerator antreibende Turbine sein kann. Dabei wird der Ölfluss durch die erste Flüssigkeitsleitung 47 über die zweite Druckregelventileinrichtung 56, welche Luftdruck und Öldruck gegeneinander regelt, gesteuert, denn die erste Flüssigkeitsanschlusseinrichtung 27 kommuniziert über die erste Flüssigkeitsleitung 47, die daraus abzweigende vierte Flüssigkeitsleitung 58 und die zweite Druckregelventileinrichtung 56, welche Luftdruck und Öldruck gegeneinander regelt, mit der fünften Gasanschlusseinrichtung 35.

Außerdem wird bei der eben genannten Bewegung der Kolbenstange 14 mit den auf ihr fixierten vier Kolben 15, 16, 17, 18 in den Ansichten der Fig. 5 bzw. 7 nach rechts Öl aus der Ölspeichereinrichtung über die vierte Flüssigkeitsanschlusseinrichtung 30 in die fünfte Kammer 23 hinein angesaugt.

Sobald in den Ansichten der Fig. 5 bzw. 7 die Kolbenstange 14 mit den auf ihr fixierten vier Kolben 15, 16, 17, 18 ihre weitestmöglich nach rechts gerückte Position erreicht hat, haben die erste Kammer 19, die dritte Kammer 21, die fünfte Kammer 23 und die siebente Kammer 25 jeweils ihren größtmöglichen Rauminhalt, während die zweite Kammer 20, die vierte Kammer 22, die sechste Kammer 24 und die achte Kammer 26 jeweils ihren kleinstmöglichen Rauminhalt angenommen haben. Die erste Kammer 19, die dritte Kammer 21 und die siebente Kammer 25 sind jeweils mit Luft gefüllt, während die fünfte Kammer 23 mit Öl gefüllt ist.

Nun erfolgt eine Umschaltung der Ventileinrichtungen folgendermaßen: Die zu der elften Gasanschlusseinrichtung 45 gehörende Ventileinrichtung wird geschlossen. Die zu der zehnten Gasanschlusseinrichtung 42 gehörende Ventileinrichtung wird geöffnet. Die zu der fünften Gasanschlusseinrichtung 35 gehörende Ventileinrichtung wird geschlossen. Die zu der zwölften Gasanschlusseinrichtung 46 gehörende Ventileinrichtung wird geöffnet. Die zu der vierten Flüssigkeitsanschlusseinrichtung 30 gehörende Ventileinrichtung wird geschlossen. Die zu der zweiten Flüssigkeitsanschlusseinrichtung 28 gehörende Ventileinrichtung wird geöffnet. Die zu der ersten Flüssigkeitsanschlusseinrichtung 27 gehörende Ventileinrichtung wird geschlossen. Die zu der dritten Flüssigkeitsanschlusseinrichtung 29 gehörende Ventileinrichtung wird geöffnet.

Dementsprechend wird nun Druckluft aus der Druckluftspeichereinrichtung durch die zwölfte Gasanschlusseinrichtung 46 in die sechste Kammer 24 eingeleitet, was dazu führt, dass sich die Kolbenstange 14 mit den auf ihr fixierten vier Kolben 15, 16, 17, 18 in den Ansichten der Fig. 5 bzw. 7 nach links bewegt. Dementsprechend wird Luft aus der dritten Kammer 21 durch die zehnte Gasanschlusseinrichtung 42 herausgedrückt und über die fünfte Gasleitung 51 der Verbrauchereinrichtung 59, welche die Luft thermisch und/oder mechanisch und/oder chemisch verwendet, zugeführt. Gleichzeitig steht die aus der dritten Kammer 21 herausgepresste Luft über die sechste Gasleitung 53 an der Luftseite der ersten Druckregelventileinrichtung 52 an, welche Luftdruck und Öldruck gegeneinander regelt.

Bei der eben genannten Bewegung der Kolbenstange 14 mit den auf ihr fixierten vier Kolben 15, 16, 17, 18 in den Ansichten der Fig. 5 bzw. 7 nach links wird ferner Öl aus der fünften Kammer 23 herausgepresst und gelangt über die dritte Flüssigkeitsanschlusseinrichtung 29 und die zweite Flüssigkeitsleitung 49 zu der durch strömendes Öl anzutreibenden Maschine 48, welche beispielsweise eine einen Elektrogenerator antreibende Turbine sein kann. Dabei wird der Ölfluss durch die zweite Flüssigkeitsleitung 49 über die erste Druckregelventileinrichtung 52, welche Luftdruck und Öldruck gegeneinander regelt, gesteuert, denn die dritte Flüssigkeitsanschlusseinrichtung 29 kommuniziert über die zweite Flüssigkeitsleitung 49, die daraus abzweigende dritte Flüssigkeitsleitung 54 und die erste Druckregelventileinrichtung 52, welche Luftdruck und Öldruck gegeneinander regelt, mit der zehnten Gasanschlusseinrichtung 42.

Außerdem wird bei der eben genannten Bewegung der Kolbenstange 14 mit den auf ihr fixierten vier Kolben 15, 16, 17, 18 in den Ansichten der Fig. 5 bzw. 7 nach links Öl aus der Ölspeichereinrichtung über die zweite Flüssigkeitsanschlusseinrichtung 28 in die vierte Kammer 22 hinein angesaugt.

Sobald in den Ansichten der Fig. 5 bzw. 7 die Kolbenstange 14 mit den auf ihr fixierten vier Kolben 15, 16, 17, 18 wieder ihre weitestmöglich nach links gerückte Position erreicht hat, haben die erste Kammer 19, die dritte Kammer 21, die fünfte Kammer 23 und die siebente Kammer 25 jeweils wieder ihren kleinstmöglichen Rauminhalt angenommen, während die zweite Kammer 20, die vierte Kammer 22, die sechste Kammer 24 und die achte Kammer 26 jeweils wieder ihren größtmöglichen Rauminhalt angenommen haben. Die zweite Kammer 20, die sechste Kammer 24 und die achte Kammer 26 sind jeweils mit Luft gefüllt, während die vierte Kammer 22 mit Öl gefüllt ist.

Nun werden die Ventileinrichtungen wieder in ihre jeweilige Ausgangsstellung zurückgeschaltet, nämlich folgendermaßen: Die zu der elften Gasanschlusseinrichtung 45 gehörende Ventileinrichtung wird geöffnet. Die zu der zehnten Gasanschlusseinrichtung 42 gehörende Ventileinrichtung wird geschlossen. Die zu der fünften Gasanschlusseinrichtung 35 gehörende Ventileinrichtung wird geöffnet. Die zu der zwölften Gasanschlusseinrichtung 46 gehörende Ventileinrichtung wird geschlossen. Die zu der vierten Flüssigkeitsanschlusseinrichtung 30 gehörende Ventileinrichtung wird geöffnet. Die zu der zweiten Flüssigkeitsanschlusseinrichtung 28 gehörende Ventileinrichtung wird geschlossen. Die zu der ersten Flüssigkeitsanschlusseinrichtung 27 gehörende Ventileinrichtung wird geöffnet. Die zu der dritten Flüssigkeitsanschlusseinrichtung 29 gehörende Ventileinrichtung wird geschlossen. Dementsprechend wird nun wieder Druckluft aus der Druckluftspeichereinrichtung durch die elfte Gasanschlusseinrichtung 45 in die dritte Kammer 21 eingeleitet, was dazu führt, dass sich die Kolbenstange 14 mit den auf ihr fixierten vier Kolben 15, 16, 17, 18 in den Ansichten der Fig. 5 bzw. 7 nach rechts bewegt und der dementsprechende funktionale Ablauf sich wie bereits oben hinsichtlich der entsprechend nach rechts gerichteten Bewegung der Kolbenstange 14 beschrieben wiederholt.

So bewegt sich die Kolbenstange 14 mit den auf ihr fixierten vier Kolben 15, 16, 17, 18 hin und her und wandelt dabei die in Form von Druckluft in der Druckluftspeichereinrichtung gespeicherte Energie in der Verbrauchereinrichtung 59, die Gas thermisch und/oder mechanisch und/oder chemisch verwendet, sowie in der durch strömende Flüssigkeit anzutreibenden Maschine 48 in andere Energieformen um.

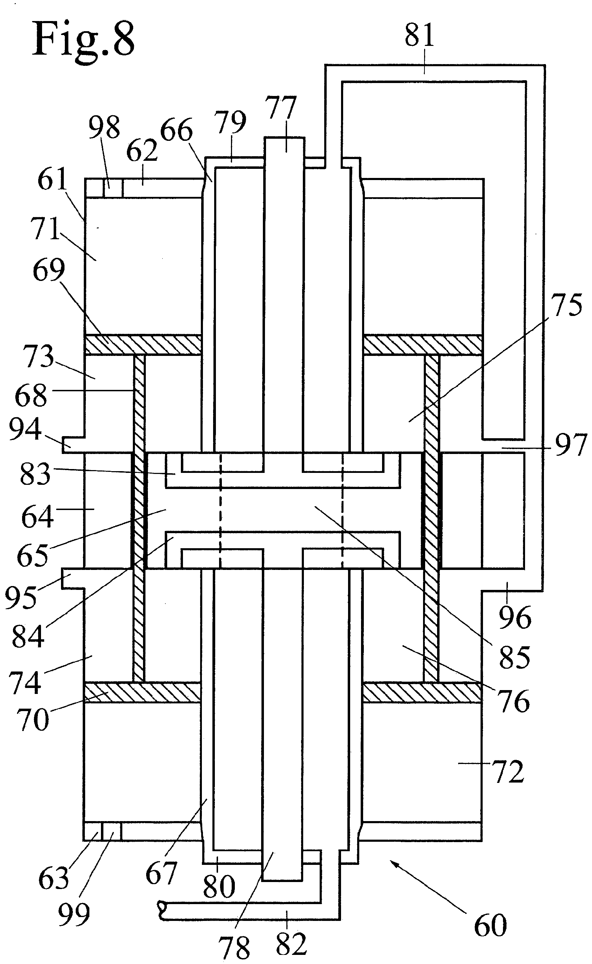

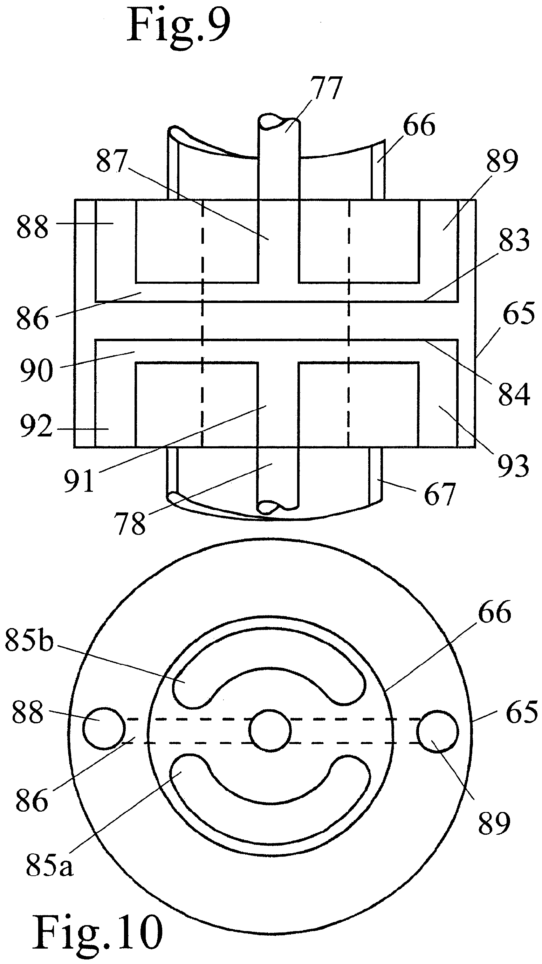

Das in den Figuren 8,9 und 10 gezeigte Ausführungsbeispiel, welches nicht Teil der Erfindung ist, einer Druckgasenergiewandlungs-Wärmetauschereinrichtung weist folgendes auf: einen fünften Hohlzyllinder 61, welcher eine neunte Stirnwand 62 und eine zehnte Stirnwand 63 aufweist; ein in Bezug auf die Längsrichtung des fünften Hohlzylinders 61 gesehen mittig angeordnetes erstes Mittelteil 64, welches im Inneren des fünften Hohlzylinders 61 an dessen innerer Wandung befestigt ist, sich in seiner longitudinalen Position über den gesamten Umfang der inneren Wandung des fünften Hohlzylinders 61 erstreckt, radial jedoch mittig ein durchgehendes Loch hat; ein zweites Mittelteil 65, welches in dem genannten Loch positioniert ist und dort fixiert ist, indem es sowohl als Stirnteil eines sechsten Hohlzylinders 66 als auch als Stirnteil eines siebenten Hohlzylinders 67 dient, wobei der sechste Hohlzylinder 66 sich, ausgehend von dem zweiten Mittelteil 65, in Richtung der neunten Stirnwand 62 und durch eine erste Öffnung in der neunten Stirnwand 62 hindurch erstreckt und an der neunten Stirnwand 62 fixiert ist und wobei der siebente Hohlzylinder 67 sich, ausgehend von dem zweiten Mittelteil 65, in Richtung der zehnten Stirnwand 63 und durch eine erste Öffnung in der zehnten Stirnwand 63 hindurch erstreckt und an der zehnten Stirnwand 63 fixiert ist und wobei der sechste Hohlzylinder 66 an seinem dem zweiten Mittelteil 65 gegenüberliegenden Ende durch eine elfte Stirnwand 79 begrenzt ist und wobei der siebente Hohlzylinder 67 an seinem dem zweiten Mittelteil 65 gegenüberliegenden Ende durch eine zwölfte Stirnwand 80 begrenzt ist; einen achten Hohlzylinder 68, der sich zwischen dem ersten Mittelteil 64 und dem zweiten Mittelteil 65 hindurch erstreckt und in Längsrichtung des fünften Hohlzylinders 61 hin und her beweglich ist, wobei der achte Hohlzylinder 68 an seinem zur neunten Stirnwand 62 hin weisenden Ende von einem fünften Kolben 69 abgeschlossen wird, der Kreisringform hat und dessen äußerer Umfang sich an die innere Wandung des fünften Hohlzylinders 61 anschmiegt und dessen innerer Umfang sich an eine äußere Wandung des sechsten Hohlzylinders 66 anschmiegt, und wobei der achte Hohlzylinder 68 an seinem zur zehnten Stirnwand 63 hin weisenden Ende von einem sechsten Kolben 70 abgeschlossen wird, der Kreisringform hat und dessen äußerer Umfang sich an die innere Wandung des fünften Hohlzylinders 61 anschmiegt und dessen innerer Umfang sich an eine äußere Wandung des siebenten Hohlzylinders 67 anschmiegt, und wobei ferner der fünfte Hohlzylinder 61, das erste Mittelteil 64, das zweite Mittelteil 65, der sechste Hohlzylinder 66, der siebente Hohlzylinder 67, der achte Hohlzylinder 68, der fünfte Kolben 69 und der sechste Kolben 70 so eingerichtet und angeordnet sind, dass sich folgende sechs gegeneinander hydraulisch-pneumatisch abgedichtete Kammern veränderlichen Rauminhalts ergeben: eine neunte Kammer 71, die begrenzt wird durch die neunte Stirnwand 62, den fünften Kolben 69, die innere Wandung des fünften Hohlzylinders 61 und die äußere Wandung des sechsten Hohlzylinders 66, eine zehnte Kammer 72, die begrenzt wird durch die zehnte Stirnwand 63, den sechsten Kolben 70, die innere Wandung des fünften Hohlzylinders 61 und die äußere Wandung des siebenten Hohlzylinders 67, eine elfte Kammer 73, die begrenzt wird durch den fünften Kolben 69, das erste Mittelteil 64, die innere Wandung des fünften Hohlzylinders 61 und eine äußere Wandung des achten Hohlzylinders 68, eine zwölfte Kammer 74, die begrenzt wird durch den sechsten Kolben 70, das erste Mittelteil 64, die innere Wandung des fünften Hohlzylinders 61 und die äußere Wandung des achten Hohlzylinders 68, eine dreizehnte Kammer 75, die begrenzt wird durch den fünften Kolben 69, das zweite Mittelteil 65, die äußere Wandung des sechsten Hohlzylinders 66 und eine innere Wandung des achten Hohlzylinders 68, eine vierzehnte Kammer 76, die begrenzt wird durch den sechsten Kolben 70, das zweite Mittelteil 65, die äußere Wandung des siebenten Hohlzylinders 67 und die innere Wandung des achten Hohlzylinders 68, wobei im Betrieb der Druckgasenergiewandlungs-Wärmetauscher-Einrichtung 60 die neunte Kammer 71, die zehnte Kammer 72, die dreizehnte Kammer 75 und die vierzehnte Kammer 76 zur Aufnahme von Gas und die elfte Kammer 73 und die zwölfte Kammer 74 zur Aufnahme von Flüssigkeit vorgesehen sind; eine neunte Gasleitung 77, welche innerhalb des sechsten Hohlzylinders 66 verläuft und sich, ausgehend von dem zweiten Mittelteil 65, durch eine Öffnung in der elften Stirnwand 79 hindurch erstreckt, wobei ein nicht von der neunten Gasleitung 77 ausgefüllter Innenraum des sechsten Hohlzylinders 66 im Betrieb der Druckgasenergiewandlungs-Wärmetauscher-Einrichtung 60 zur Aufnahme von Flüssigkeit vorgesehen ist; eine zehnte Gasleitung 78, welche innerhalb des siebenten Hohlzylinders 67 verläuft und sich, ausgehend von dem zweiten Mittelteil 65, durch eine Öffnung in der zwölften Stirnwand 80 hindurch erstreckt, wobei ein nicht von der zehnten Gasleitung 78 ausgefüllter Innenraum des siebenten Hohlzylinders 67 im Betrieb der Druckgasenergiewandlungs-Wärmetauscher-Einrichtung 60 zur Aufnahme von Flüssigkeit vorgesehen ist; eine fünfte Flüssigkeitsleitung 81, welche am dem zweiten Mittelteil 65 gegenüberliegenden Ende des sechsten Hohlzylinders 66 aus dem sechsten Hohlzylinder 66 abzweigt und sich außerhalb des fünften Hohlzylinders 61 bis hin zur Position der zwölften Kammer 74 erstreckt; eine mit einer Ventileinrichtung versehene neunte Flüssigkeitsleitung 96, welche an ihrem einen Ende durch eine im Bereich der zwölften Kammer 74 nahe dem ersten Mittelteil 64 vorgesehene erste Öffnung in der Seitenwandung des fünften Hohlzylinders 61 mit der zwölften Kammer 74 in Verbindung steht und an ihrem anderen Ende in die fünfte Flüssigkeitsleitung 81 mündet; eine mit einer Ventileinrichtung versehene zehnte Flüssigkeitsleitung 97, welche an ihrem einen Ende durch eine im Bereich der elften Kammer 73 nahe dem ersten Mittelteil 64 vorgesehene zweite Öffnung in der Seitenwandung des fünften Hohlzylinders 61 mit der elften Kammer 73 in Verbindung steht und an ihrem anderen Ende in die fünfte Flüssigkeitsleitung 81 mündet; eine sechste Flüssigkeitsleitung 82, welche am dem zweiten Mittelteil 65 gegenüberliegenden Ende des siebenten Hohlzylinders 67 aus dem siebenten Hohlzylinder 67 abzweigt und zum Anschluss an einen Flüssigkeitstank vorgesehen ist; eine innerhalb des zweiten Mittelteils 65 angeordnete erste Gasdurchleitungseinrichtung 83, welche so eingerichtet und sowohl an die neunte Gasleitung 77 als auch an die dreizehnte Kammer 75 angeschlossen ist, dass durch die erste Gasdurchleitungseinrichtung 83 Gas zwischen der neunten Gasleitung 77 und der dreizehnten Kammer 75 hin und her strömen kann; eine innerhalb des zweiten Mittelteils 65 angeordnete zweite Gasdurchleitungseinrichtung 84, welche so eingerichtet und sowohl an die zehnte Gasleitung 78 als auch an die vierzehnte Kammer 76 angeschlossen ist, dass durch die zweite Gasdurchleitungseinrichtung 84 Gas zwischen der zehnten Gasleitung 78 und der vierzehnten Kammer 76 hin und her strömen kann; eine innerhalb des zweiten Mittelteiles 65 angeordnete Flüssigkeitsdurchleitungseinrichtung 85, welche so eingerichtet ist, dass sie den zur Aufnahme von Flüssigkeit vorgesehenen Teil des Innenraumes des sechsten Hohlzylinders 66 und den zur Aufnahme von Flüssigkeit vorgesehenen Teil des Innenraums des siebenten Hohlzylinders 67 derart miteinander verbindet, dass Flüssigkeit durch die Flüssigkeitsdurchleitungseinrichtung 85 hindurch zwischen dem sechsten Hohlzylinder 66 und dem siebenten Hohlzylinder 67 hin und her strömen kann; eine mit einer Ventileinrichtung versehene siebente Flüssigkeitsleitung 94, welche durch eine im Bereich der elften Kammer 73 nahe dem ersten Mittelteil 64 vorgesehene dritte Öffnung in der Seitenwandung des fünften Hohlzylinders 61 mit der elften Kammer 73 in Verbindung steht, so dass bei entsprechender Bewegung des fünften Kolbens 69 Flüssigkeit aus der elften Kammer 73 in die siebente Flüssigkeitsleitung 94 hineingedrückt werden kann; eine mit einer Ventileinrichtung versehene achte Flüssigkeitsleitung 95, welche durch eine im Bereich der zwölften Kammer 74 nahe dem ersten Mittelteil 64 vorgesehene vierte Öffnung in der Seitenwandung des fünften Hohlzylinders 61 mit der zwölften Kammer 74 in Verbindung steht, so dass bei entsprechender Bewegung des sechsten Kolbens 70 Flüssigkeit aus der zwölften Kammer 74 in die achte Flüssigkeitsleitung 95 hineingedrückt werden kann; eine mit einer Ventileinrichtung versehene dreizehnte Gasanschlusseinrichtung 98, welche durch eine zweite Öffnung in der neunten Stirnwand 62 mit der neunten Kammer 71 in Verbindung steht, und eine mit einer Ventileinrichtung versehene vierzehnte Gasanschlusseinrichtung 99, welche durch eine zweite Öffnung in der zehnten Stirnwand 63 mit der zehnten Kammer 72 in Verbindung steht.

Die erste Gasdurchleitungseinrichtung 83 weist einen länglichen, innerhalb des zweiten Mittelteils 65 angeordneten ersten Kanal 86 auf, welcher in seiner Mitte mit einem ersten Steigrohr 87, an seinem einen Ende mit einem zweiten Steigrohr 88 und an seinem anderen Ende mit einem dritten Steigrohr 89 versehen ist, wobei das erste Steigrohr 87 in die neunte Gasleitung 77 mündet und das zweite Steigrohr 88 und das dritte Steigrohr 89 jeweils in die dreizehnte Kammer 75 münden.

Die zweite Gasdurchleitungseinrichtung 84 weist einen länglichen, innerhalb des zweiten Mittelteils 65 angeordneten zweiten Kanal 90 auf, welcher in seiner Mitte mit einem vierten Steigrohr 91, an seinem einen Ende mit einem fünften Steigrohr 92 und an seinem anderen Ende mit einem sechsten Steigrohr 93 versehen ist, wobei das vierte Steigrohr 91 in die zehnte Gasleitung 78 mündet und das fünfte Steigrohr 92 und das sechste Steigrohr 93 jeweils in die vierzehnte Kammer 76 münden.

Die Flüssigkeitsdurchleitungseinrichtung 85 weist einen dritten Kanal 85a und einen vierten Kanal 85b auf, wobei sich sowohl der dritte Kanal 85a als auch der vierte Kanal 85b jeweils durch das zweite Mittelteil 65 hindurch erstrecken und dabei sowohl von der ersten Gasdurchleitungseinrichtung 83 als auch von der zweiten Gasdurchleitungseinrichtung 84 vollständig getrennt sind und sowohl zum sechsten Hohlzylinder 66 hin als auch zum siebenten Hohlzylinder 67 hin offen sind.

Bei dem in den Fig. 8, 9 und 10 gezeigten Ausführungsbeispiel der erfindungsgemäßen Druckgasenergiewandlungs-Wärmetauscher-Einrichtung 60 weisen der dritte Kanal 85a und der vierte Kanal 85b einen bohnenförmigen bzw. nierenförmigen Querschnitt auf.

Der sechste Hohlzylinder 66 ist mittels eines Gewindes in eine im zweiten Mittelteil 65 umlaufende Nut in das zweite Mittelteil 65 eingeschraubt und auf diese Weise am zweiten Mittelteil 65 befestigt. Der siebente Hohlzylinder 67 ist ganz entsprechend mittels eines Gewindes in eine im zweiten Mittelteil 65 umlaufende Nut in das zweite Mittelteil 65 eingeschraubt und auf diese Weise am zweiten Mittelteil 65 befestigt.

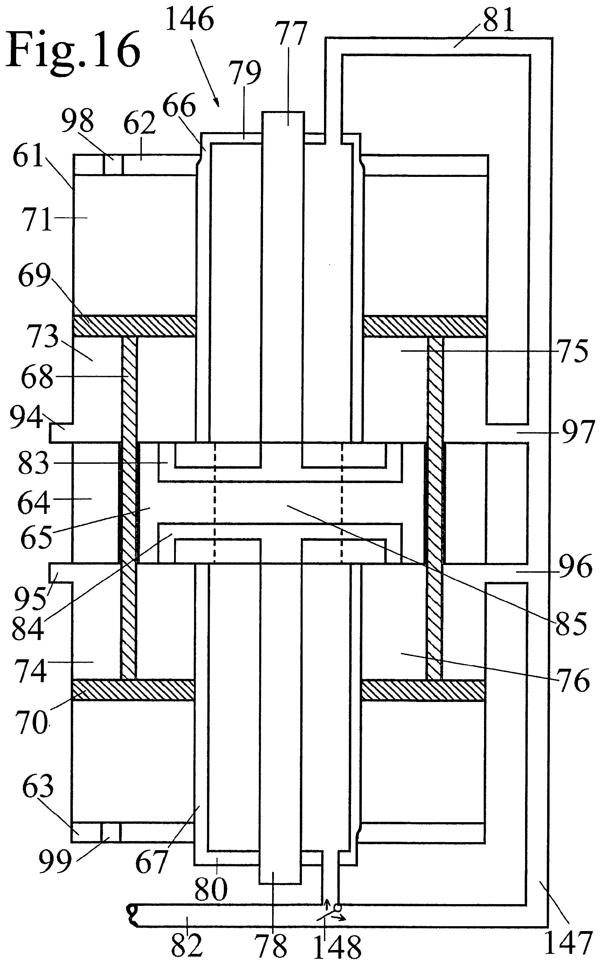

Bei dem in den Fig. 8, 9 und 10 gezeigten Ausführungsbeispiel der erfindungsgemäßen Druckgasenergiewandlungs-Wärmetauscher-Einrichtung 60 - wie übrigens auch bei dem weiter unten unter Bezugnahme auf Fig. 16 beschriebenen weiteren Ausführungsbeispiel der erfindungsgemäßen Druckgasenergiewandlungs-Wärmetauscher-Einrichtung 146 und wie überhaupt bei allen irgend möglichen Ausführungsbeispielen der erfindungsgemäßen Druckgasenergiewandlungs-Wärmetauscher-Einrichtung - kann als Gas grundsätzlich jedes beliebige Gas verwendet werden, beispielsweise Luft und/oder Biogas und/oder Methan und/oder irgendein Kohlenwasserstoffgas und/oder ein Gemisch aus Kohlenwasserstoffgasen und/oder ein Gemisch aus Luft und einem oder mehreren Kohlenwasserstoffgasen. Als Flüssigkeit wird zwar bevorzugterweise Öl verwendet, jedoch kann bei dem in den Fig. 8, 9 und 10 gezeigten Ausführungsbeispiel der erfindungsgemäßen Druckgasenergiewandlungs-Wärmetauscher-Einrichtung 60 - wie auch bei dem weiter unten unter Bezugnahme auf Fig. 16 beschriebenen weiteren Ausführungsbeispiel der erfindungsgemäßen Druckgasenergiewandlungs-Wärmetauscher-Einrichtung 146 und wie überhaupt bei allen irgend möglichen Ausführungsbeispielen der erfindungsgemäßen Druckgasenergiewandlungs-Wärmetauscher-Einrichtung - als Flüssigkeit grundsätzlich auch jede beliebige andere Flüssigkeit, beispielsweise Wasser, zum Einsatz kommen.

Das in den Fig. 8, 9 und 10 gezeigte Ausführungsbeispiel der Druckgasenergiewandlungs-Wärmetauscher-Einrichtung 60 funktioniert folgendermaßen:
Es wird für das vorliegende Ausführungsbeispiel davon ausgegangen, dass die Druckgasenergiewandlungs-Wärmetauscher-Einrichtung 60 senkrechtstehend montiert ist, die fünfte Flüssigkeitsleitung 81 sich also, ausgehend von dem sechsten Hohlzylinder 66, nach oben erstreckt und der achte Hohlzylinder 68 - oben verschraubt mit dem fünften Kolben 69 und unten verschraubt mit dem sechsten Kolben 70 - sich am unteren Totpunkt befindet. Dabei liegt der fünfte Kolben 69 an dem ersten Mittelteil 64 und an dem zweiten Mittelteil 65 an, und der sechste Kolben 70 liegt an der zehnten Stirnwand 63 an. Die sechste Flüssigkeitsleitung 82 ist an ihrem von dem siebenten Hohlzylinder 67 abgewandten Ende an einen in den Fig. 8, 9 und 10 nicht dargestellten Öltank angeschlossen. Die zur zehnten Flüssigkeitsleitung 97 gehörende Ventileinrichtung ist geöffnet und ermöglicht daher bei einem Hub des fünften Kolbens 69 nach oben ein Ansaugen von Öl aus dem Öltank in die elfte Kammer 73, und zwar über die sechste Flüssigkeitsleitung 82, den siebenten Hohlzylinder 67, den sechsten Hohlzylinder 66 und die fünfte Flüssigkeitsleitung 81. Die zur neunten Flüssigkeitsleitung 96 gehörende Ventileinrichtung ist geschlossen, und auch die zur siebenten Flüssigkeitsleitung 94 gehörende Ventileinrichtung ist geschlossen. Die zur achten Flüssigkeitsleitung 95 gehörende Ventileinrichtung ist geöffnet.

Die achte Flüssigkeitsleitung 95 führt bei dem vorliegenden Ausführungsbeispiel der erfindungsgemäßen Druckgasenergiewandlungs-Wärmetauscher-Einrichtung 60 zu einem Motor, welcher durch dasjenige Öl angetrieben wird, das bei Hub des sechsten Kolbens 70 nach oben durch die achte Flüssigkeitsleitung 95 hindurch zu ihm hin gedrückt wird. Das durch die achte Flüssigkeitsleitung 95 hindurch gedrückte Öl dient also ganz allgemein gesprochen zur Verrichtung von Arbeit.

Die zu der dreizehnten Gasanschlusseinrichtung 98 gehörende Ventileinrichtung ist geöffnet, damit bei einem Hub des fünften Kolbens 69 nach oben die in der neunten Kammer 71 befindliche Luft aus der neunten Kammer 71 über die dreizehnte Gasanschlusseinrichtung 98 entweichen kann. Dabei wird dann die neunte Kammer 71 einfach an die Außenatmosphäre entlüftet, oder die aus der neunten Kammer 71 herausgedrückte, teilentspannte Luft wird zum nächsten Verbraucher geleitet, wobei der eben genannte nächste Verbraucher apparativ beispielsweise auch wieder eine erfindungsgemäße Druckgasenergiewandlungs-Wärmetauscher-Einrichtung 60, 146 sein kann oder beispielsweise ein Ausführungsbeispiel einer weiter unten noch zu beschreibenden erfindungsgemäßen Druckgasenergiewandlungs-Wärmetauscher-Einrichtungs-Vorstufeneinrichtung 137, 138, 149 oder beispielsweise ein Ausführungsbeispiel einer weiter unten noch zu beschreibenden erfindungsgemäßen Druckgasenergiewandlungsvorrichtung.

Auch die zehnte Gasleitung 78 ist offen zum Weiterleiten von Luft an den nächsten Verbraucher, welcher, wie bereits erwähnt, beispielsweise auch wieder eine erfindungsgemäße Druckgasenergiewandlungs-Wärmetauscher-Einrichtung 60, 146 sein kann oder beispielsweise ein Ausführungsbeispiel einer weiter unten noch zu beschreibenden erfindungsgemäßen Druckgasenergiewandlungs-Wärmetauscher-Einrichtungs-Vorstufeneinrichtung 137, 138, 149 oder beispielsweise ein Ausführungsbeispiel einer weiter unten noch zu beschreibenden erfindungsgemäßen Druckgasenergiewandlungsvorrichtung.

Über die neunte Gasleitung 77 wird nun komprimierte Luft von einem Zylinder einer Vorstufe oder einer ähnlichen Einrichtung, beispielsweise von einem Ausführungsbeispiel der erfindungsgemäßen hydraulischen Kolbeneinrichtung 1 oder von einem Ausführungsbeispiel der erfindungsgemäßen Druckgasenergiewandlungseinrichtung 50, mengen- und druckoptimiert in die dreizehnte Kammer 75 geleitet. Dort dehnt sich die Luft aus und schiebt den achten Hohlzylinder 68 mit dem fünften Kolben 69 und dem sechsten Kolben 70 nach oben. Gleichzeitig kann über die vierzehnte Gasanschlusseinrichtung 99 Luft mit gleichem oder unterschiedlichem Druck in die zehnte Kammer 72 geleitet werden. Diese Luft wirkt auf den sechsten Kolben 70 und erhöht die Kraft, mit der der achte Hohlzylinder 68 nach oben gedrückt wird. Die zwölfte Kammer 74 war währenddessen mit warmem Öl gefüllt. Während dieses "Arbeitstaktes" mit Kolbenhubrichtung nach oben saugt sich die elfte Kammer 73 über die zehnte Flüssigkeitsleitung 97 aus dem Öltank wieder mit warmem Öl voll. Dieses Öl wird über die sechste Flüssigkeitsleitung 82 weiter durch den siebenten Hohlzylinder 67, durch das zweite Mittelteil 65 und durch den sechsten Hohlzylinder 66 in die fünfte Flüssigkeitsleitung 81 gesaugt. Gleichzeitig wird das Öl aus der zwölften Kammer 74 über die achte Flüssigkeitsleitung 95 zum Verbraucher bzw. zu dem durch Öl angetriebenen Motor gepresst. Dieser Vorgang dauert so lange an, bis der fünfte Kolben 69 die neunte Stirnwand 62, also den oberen Totpunkt, erreicht.

Sobald der fünfte Kolben 69 die neunte Stirnwand 62, also den oberen Totpunkt, erreicht hat, öffnet die zur neunten Flüssigkeitsleitung 96 gehörende Ventileinrichtung, schließt die zur zehnten Flüssigkeitsleitung 97 gehörende Ventileinrichtung, öffnet die zu der siebenten Flüssigkeitsleitung 94 gehörende Ventileinrichtung und schließt die zu der achten Flüssigkeitsleitung 95 gehörende Ventileinrichtung.

Nun beginnt der "Arbeitstakt" mit Kolbenhubrichtung nach unten, welcher im Grunde genommen einfach spiegelbildlich zu dem im vorletzten Absatz beschriebenen "Arbeitstakt" mit der Kolbenhubrichtung nach oben abläuft: Komprimierte Luft wird jetzt über die dreizehnte Gasanschlusseinrichtung 98 und zehnte Gasleitung 78 zugeführt. Die neunte Gasleitung 77 öffnet zum nächsten Verbraucher. Die vierzehnte Gasanschlusseinrichtung 99 entlüftet oder geht zum nächsten Verbraucher. Öl wird nun aufgrund der Abwärtsbewegung des fünften Kolbens 69 durch die siebente Flüssigkeitsleitung 94 hindurch zu dem durch Öl angetriebenen Motor gedrückt.

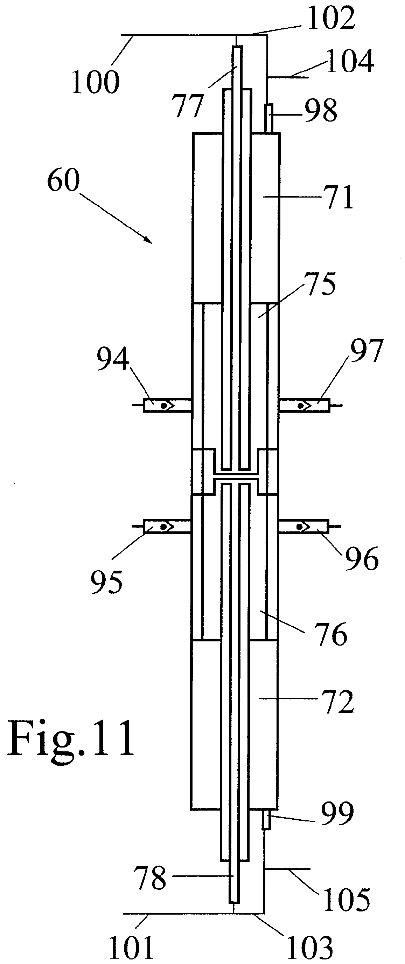

Anhand von Fig. 11 wird nun ein weiteres Funktionsbeispiel des Betriebs einer erfindungsgemäßen Druckgasenergiewandlungs-Wärmetauscher-Einrichtung 60 beschrieben. Fig. 11 zeigt schematisch und nicht maßstabsgerecht den Längsschnitt durch das Ausführungsbeispiel der erfindungsgemäßen Druckgasenergiewandlungs-Wärmetauscher-Einrichtung von Fig. 8, wobei in Fig. 11 zusätzlich noch Zuleitungen für Gas dargestellt sind.

Auch bei dem Beispiel von Fig. 11 wird als Gas Luft und als Flüssigkeit Öl verwendet, und die sich entspannende Luft wird mittels des warmen Öls erwärmt, um Vereisungen zu verhindern.

Über eine erste Druckgaszuleitung 100 und die neunte Gasleitung 77 wird in die dreizehnte Kammer 75 Druckluft geleitet. Die Menge resultierend aus dem Druck der eingeleiteten Druckluft wird so bemessen, dass nach Erreichen der letzten Entspannungsstufe der Druck erreicht wird, der nötig ist, um den nächsten Verbraucher zu bedienen oder das Erreichen der gewünschten Lufttemperatur zu gewährleisten.

Der achte Hohlzylinder 68 mit dem sechsten Kolben 70 und dem fünften Kolben 69 wird nach oben gedrückt. Dabei wird Öl aus der zwölften Kammer 74 über die achte Flüssigkeitsleitung 95 zum Motor / Verbraucher geleitet. Gleichzeitig saugt sich die elfte Kammer 73 mit Öl aus dem Öltank voll über die zehnte Flüssigkeitsleitung 97. Dabei ist die dreizehnte Gasanschlusseinrichtung 98 von der neunten Kammer 71 geöffnet zum Verbraucher über eine erste Abluftleitung 104.

Eine zweite Druckgaszuleitung 101 ist geschlossen, eine elfte Gasleitung 102 ist geschlossen und eine zwölfte Gasleitung 103 ist geöffnet.

Luft strömt aus der vierzehnten Kammer 76 über die zehnte Gasleitung 78 weiter über die zwölfte Gasleitung 103 und die vierzehnte Gasanschlusseinrichtung 99 in die zehnte Kammer 72. Es entsteht Druckausgleich in der vierzehnten Kammer 76 und der zehnten Kammer 72. Eine zweite Abluftleitung 105 ist geschlossen.

Hat der achte Hohlzylinder 68 mit seinem fünften Kolben 69 und dem sechsten Kolben 70 den oberen Totpunkt erreicht, dann schließen die erste Druckgaszuleitung 100 und die erste Abluftleitung 104, und es öffnet die elfte Gasleitung 102.

Nun strömt Druckluft aus der dreizehnten Kammer 75 in die neunte Kammer 71 und schafft Druckausgleich.

Jetzt schließt die zwölfte Gasleitung 103 und es öffnen die zweite Abluftleitung 105 und die zweite Druckgaszuleitung 101.

Über die zweite Druckgaszuleitung 101 und die zehnte Gasleitung 78 wird nun in die vierzehnte Kammer 76 Druckluft geleitet. Das führt dazu, dass der achte Hohlzylinder 68 mit dem fünften Kolben 69 und dem sechsten Kolben 70 nach unten gedrückt wird. Dabei wird Öl aus der elften Kammer 73 über die siebente Flüssigkeitsleitung 94 zum Motor / Verbraucher geleitet. Gleichzeitig saugt sich die zwölfte Kammer 74 mit Öl aus dem Öltank voll über die neunte Flüssigkeitsleitung 96.

Bei dieser Schaltung ist die "Energieausbeute" aus dem verdrängten Öl sehr gering in dem Sinne, dass die über das verdrängte Öl zu erhaltene Bewegungsenergie zur etwaigen Umwandlung in elektrische Energie sehr gering ist, denn die Schaltung arbeitet mit Staudruck und dementsprechend langsam ist die Bewegung des verdrängten Öls.

Fig. 16 zeigt ein weiteres Ausführungsbeispiel einer erfindungsgemäßen Druckgasenergiewandlungs-Wärmetauscher-Einrichtung 146, welches gegenüber dem oben mit Bezug auf die Fig. 8 bis 11 beschriebenen Ausführungsbeispiel der erfindungsgemäßen Druckgasenergiewandlungs-Wärmetauscher-Einrichtung 60 mit einigen zusätzlichen Bauteilen versehen ist, die eine gewisse Steuerung des Betriebs der Druckgasenergiewandlungs-Wärmetauscher-Einrichtung 146 in thermischer Hinsicht ermöglichen. Hintergrund dieser technischen Zusatzmaßnahme ist der, dass es in Bezug auf sich zeitlich ändernde Umgebungstemperaturen am Einsatzort einer erfindungsgemäßen Druckgasenergiewandlungs-Wärmetauscher-Einrichtung und/oder im Hinblick auf sich möglicherweise zeitlich ändernde Betriebsanforderungen im technisch-technologischen Umfeld einer erfindungsgemäßen Druckgasenergiewandlungs-Wärmetauscher-Einrichtung während des Einsatzes der erfindungsgemäßen Druckgasenergiewandlungs-Wärmetauscher-Einrichtung sinnvoll sein und manchmal möglicherweise sogar unbedingt notwendig werden kann, die Temperatur der Abluft bzw. des Abgases gezielt zu steuern. Während es beispielsweise im tiefsten Winter bei sehr kalten Außentemperaturen durchaus vorteilhaft sein kann, eine möglichst hohe Ablufttemperatur zu haben, damit die Druckgasenergiewandlungs-Wärmetauscher-Einrichtung nicht partiell einfriert und damit vielleicht sogar die Abluft zum Erwärmen irgendwelcher Räumlichkeiten genutzt werden kann, kann dieselbe hohe Ablufttemperatur im Hochsommer bei hohen Außentemperaturen unnütz oder sogar durchaus kontraproduktiv und gänzlich unerwünscht sein. Zumindest ist die Gefahr eines partiellen Einfrierens der Druckgasenergiewandlungs-Wärmetauscher-Einrichtung im Hochsommer geringer als im tiefsten Winter, und es kann daher bei Betrachtung des Gesamtsystems, in welchem die Druckgasenergiewandlungs-Wärmetauscher-Einrichtung eingesetzt ist, unter energetischen Gesichtspunkten vorteilhaft sein, im Sommer mehr Wärme im Öl zur weiteren dortigen Verwendung zu belassen, während es im Winter durchaus notwendig werden kann, mehr Wärme vom Öl auf die Luft bzw. auf das etwaig verwendete andere Gas zu übertragen. Wenn die Ablufttemperatur zu hoch ist, wird dem Öl bzw. der Flüssigkeit als Wärmeträger unnötig viel Energie in Form von Wärme entzogen. Dementsprechend ist das Vorsehen einer Steuerungsmöglichkeit in thermischer Hinsicht vorteilhaft und wünschenswert. Zu diesem Zweck ist bei dem in Fig. 16 dargestellten weiteren Ausführungsbeispiel der erfindungsgemäßen Druckgasenergiewandlungs-Wärmetauscher-Einrichtung 146, ergänzend zu den in Fig. 8 bereits gezeigten Bauteilen, folgendes vorgesehen: eine dreizehnte Flüssigkeitsleitung 147, welche mit ihrem einen Ende an die sechste Flüssigkeitsleitung 82 angeschlossen und so eingerichtet ist, dass diese dreizehnte Flüssigkeitsleitung 147 in der Lage ist, Flüssigkeit von der sechsten Flüssigkeitsleitung 82 zur neunten Flüssigkeitsleitung 96 und zur zehnten Flüssigkeitsleitung 97 zu leiten, ohne dass die Flüssigkeit dabei auf ihrem Weg zur neunten Flüssigkeitsleitung 96 und zur zehnten Flüssigkeitsleitung 97 den siebenten Hohlzylinder 67, die Flüssigkeitsdurchleitungseinrichtung 85 und den sechsten Hohlzylinder 66 durchläuft, wobei der Anschluss der dreizehnten Flüssigkeitsleitung 147 an die sechste Flüssigkeitsleitung 82 mit einer ersten Strömungssteuerungsventileinrichtung 148 versehen ist, welche steuerbar und derart ausgebildet ist, dass mittels der ersten Strömungssteuerungsventileinrichtung 148 gesteuert werden kann, welcher Anteil eines von dem Flüssigkeitstank über die sechste Flüssigkeitsleitung 82 bei der ersten Strömungssteuerungsventileinrichtung 148 ankommenden Flüssigkeitsstromes in den siebenten Hohlzylinder 67 und welcher Anteil in die dreizehnte Flüssigkeitsleitung 147 geleitet wird, wobei die Steuerungsmöglichkeit der ersten Strömungssteuerungsventileinrichtung 148 dabei mindestens die Möglichkeit beinhaltet zu steuern, ob der bei ihr über die sechste Flüssigkeitsleitung 82 ankommende Flüssigkeitsstrom vollständig in den siebenten Hohlzylinder 67 oder vollständig in die dreizehnte Flüssigkeitsleitung 147 geleitet wird. Dabei ist das in Fig. 16 dargestellte besondere Ausführungsbeispiel der erfindungsgemäßen Druckgasenergiewandlungs-Wärmetauscher-Einrichtung 146 speziell so eingerichtet, dass hier die dreizehnte Flüssigkeitsleitung 147 mit ihrem von der ersten Strömungssteuerungsventileinrichtung 148 entfernten Ende in die fünfte Flüssigkeitsleitung 81 mündet.

Die erste Strömungssteuerungsventileinrichtung 148 kann beispielsweise ein Thermostatventil aufweisen.

Besonders bevorzugterweise wird vorgesehen, dass die erste Strömungssteuerungsventileinrichtung 148 so eingerichtet ist, dass sie außer der bereits genannten Steuerungsmöglichkeit der vollständigen Einleitung des bei ihr über die sechste Flüssigkeitsleitung 82 ankommenden Flüssigkeitsstromes entweder in den siebenten Hohlzylinder 67 oder in die dreizehnte Flüssigkeitsleitung 147 ferner so steuerbar ist, dass sie den bei ihr über die sechste Flüssigkeitsleitung 82 ankommenden Flüssigkeitsstrom aufteilen kann, so dass ein Teil der Flüssigkeit in den siebenten Hohlzylinder 67 gelangt und gleichzeitig ein anderer Teil der Flüssigkeit in die dreizehnte Flüssigkeitsleitung 147 gelangt, wobei ein zugehöriges Strömungsaufteilungsverhältnis stufenlos und/oder in Stufen steuerbar ist. Dabei steuert die erste Strömungssteuerungsventileinrichtung 148 den Flüssigkeitsstrom in Abhängigkeit von einer Gas- und/oder Flüssigkeitstemperaturmessung. Sofern der eben genannten Steuerung eine Gastemperaturmessung zugrundelegt werden soll, kann diese grundsätzlich an einer beliebigen Stelle, an der Gas strömt, vorgenommen werden. Bevorzugt ist eine Temperaturmessung dort, wo das Gas bereits "gearbeitet" hat, also bereits expandiert ist.

Vorteilhafterweise wird bzw. werden diese eben genannte(n) Messung bzw. Messungen beispielsweise so eingerichtet, dass, sofern eine Gastemperaturmessung zur Steuerung der ersten Strömungssteuerungsventileinrichtung 148 vorgenommen wird, diese Gastemperaturmessung zumindest in einem Bereich der neunten Gasleitung 77 erfolgt, welcher von dem zweiten Mittelteil 65 weiter beabstandet ist als von der elften Stirnwand 79, und dass, sofern eine Flüssigkeitstemperaturmessung zur Steuerung der ersten Strömungssteuerungsventileinrichtung 148 vorgenommen wird, diese Flüssigkeitstemperaturmessung zumindest entweder in der fünften Flüssigkeitsleitung 81 erfolgt oder in einem Bereich des sechsten Hohlzylinders 66 erfolgt, welcher von dem zweiten Mittelteil 65 weiter beabstandet ist als von der elften Stirnwand 79.

Die Steuerung der ersten Strömungssteuerungsventileinrichtung 148 kann beispielsweise mechanisch und/oder elektromechanisch und/oder magnetisch und/oder elektromagnetisch und/oder elektronisch und/oder optisch und/oder elektro-optisch und/oder auf jede andere technisch geeignete Weise erfolgen.

Die Steuerung des in der Fig. 16 dargestellten speziellen Ausführungsbeispiels der erfindungsgemäßen Druckgasenergiewandlungs-Wärmetauscher-Einrichtung 146 in thermischer Hinsicht kann beispielsweise so erfolgen: Zunächst ist die erste Strömungssteuerungsventileinrichtung 148, welche ein Thermostatventil sein kann, derart eingestellt, dass alles an jenem Thermostatventil über die sechste Flüssigkeitsleitung 82 ankommende Öl genau so, wie bei dem Ausführungsbeispiel von Fig. 8 dauerhaft vorgesehen und bei jenem Ausführungsbeispiel aufgrund des dort vorgesehenen technischen Aufbaus gar nicht anders möglich, in den siebenten Hohlzylinder 67 gelenkt wird und sich von dort aus genau so, wie es oben mit Bezug auf Fig. 8 beschrieben wurde, weiter fortbewegt. Wenn mittels einer Messung der Temperatur der Abluft, welche im Bereich der neunten Gasleitung 77 dort erfolgt, wo die neunte Gasleitung 77 die elfte Stirnwand 79 durchstößt, festgestellt wird, dass die Temperatur der Abluft höher ist als aufgrund irgendwelcher vorher definierter Bedingungen nötig oder erlaubt, so wird das im vorangegangenen Satz genannte Thermostatventil mechanisch oder elektromechanisch derart gesteuert, dass es die Ölzufuhr von der sechsten Flüssigkeitsleitung 82 in den siebenten Hohlzylinder 67 ganz oder zum Teil unterbricht und stattdessen das aus der sechsten Flüssigkeitsleitung 82 ankommende Öl entsprechend ganz oder zum Teil in die dreizehnte Flüssigkeitsleitung 147 und von dort dann in die neunte Flüssigkeitsleitung 96 und die zehnte Flüssigkeitsleitung 97 führt. Zur neunten Flüssigkeitsleitung 96 und zur zehnten Flüssigkeitsleitung 97 gelangt das Öl als solches sowohl bei dem Ausführungsbeispiel von Fig. 8 als auch bei dem Ausführungsbeispiel von Fig. 16 immer. Während bei dem Ausführungsbeispiel von Fig. 8 jedoch permanent nur ein einziger Weg für das Öl dorthin vorgesehen ist, gibt es bei dem Ausführungsbeispiel von Fig. 16 für das Öl zwei verschiedene Wege hin zur neunten Flüssigkeitsleitung 96 und zur zehnten Flüssigkeitsleitung 97, wobei gesteuert werden kann, welchen Weg das Öl nehmen soll bzw. wie sich das Öl mengenmäßig auf die beiden möglichen Wege verteilt. Je weniger Öl in den siebenten Hohlzylinder 67 und von dort über die Flüssigkeitsdurchleitungseinrichtung 85 zum sechsten Hohlzylinder 66 fließt, um so weniger Wärme kann dort - also im "Kolbeninnenraum" - vom Öl auf die die zehnte Gasleitung 78 und die neunte Gasleitung 77 durchströmende Luft übertragen werden. Wird der Ölfluss auf dem eben genannten Weg komplett unterbrochen, hat das demgemäß eine Unterbrechung der Wärmezufuhr an die die zehnte Gasleitung 78 und die neunte Gasleitung 77 durchströmende Luft zur Folge. Dementsprechend sinkt die Temperatur der Abluft, wenn - wie im vorliegenden Absatz etwas weiter oben bereits beschrieben - das genannte Thermostatventil - d.h. also die erste Strömungssteuerungsventileinrichtung 148 - die Ölzufuhr von der sechsten Flüssigkeitsleitung 82 in den siebenten Hohlzylinder 67 ganz oder zum Teil unterbricht und stattdessen das aus der sechsten Flüssigkeitsleitung 82 ankommende Öl entsprechend ganz oder zum Teil in die dreizehnte Flüssigkeitsleitung 147 führt. Die Abluft wird dann also weniger erhitzt, wird "kühler" in die Umgebung abgegeben oder weiterer Verwendung zugeführt. Falls später irgendwann die Ablufttemperatur als zu niedrig angesehen werden sollte, kann dann die Stellung des genannten Thermostatventils - d.h. also der ersten Strömungssteuerungsventileinrichtung 148 - so geändert werden, dass wieder mehr oder sogar alles Öl, welches über die sechste Flüssigkeitsleitung 82 bei der ersten Strömungssteuerungsventileinrichtung 148 eintrifft, in den siebenten Hohlzylinder 67 geleitet und auf diese Weise der in der zehnten Gasleitung 78 und in der neunten Gasleitung 77 strömenden Luft wieder Wärme bzw. mehr Wärme zugeführt wird.

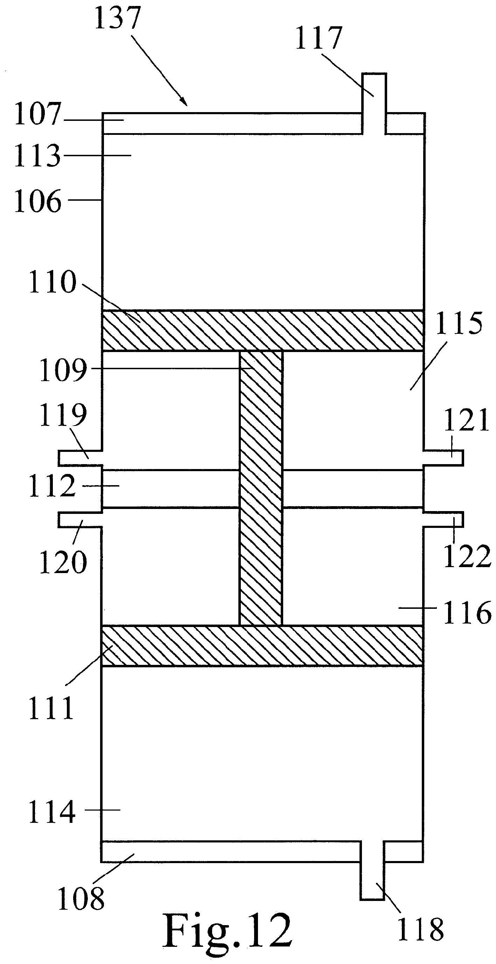

Fig. 12 zeigt ein erstes Ausführungsbeispiel einer erfindungsgemäßen Druckgasenergiewandlungs-Wärmetauscher-Einrichtungs-Vorstufeneinrichtung 137, welche bevorzugterweise einer erfindungsgemäßen Druckgasenergiewandlungs-Wärmetauscher-Einrichtung, beispielsweise dem vorstehend mit Bezug auf die Fig. 8 bis 11 beschriebenen Ausführungsbeispiel der erfindungsgemäßen Druckgasenergiewandlungs-Wärmetauscher-Einrichtung 60 oder dem oben mit Bezug auf die Fig. 16 beschriebenen weiteren Ausführungsbeispiel der erfindungsgemä-ßen Druckgasenergiewandlungs-Wärmetauscher-Einrichtung 146, als Vorstufe vorangeschaltet werden kann und dann als eine solche Zweiergruppe ein Ausführungsbeispiel einer erfindungsgemäßen Druckgasenergiewandlungsvorrichtung bildet.

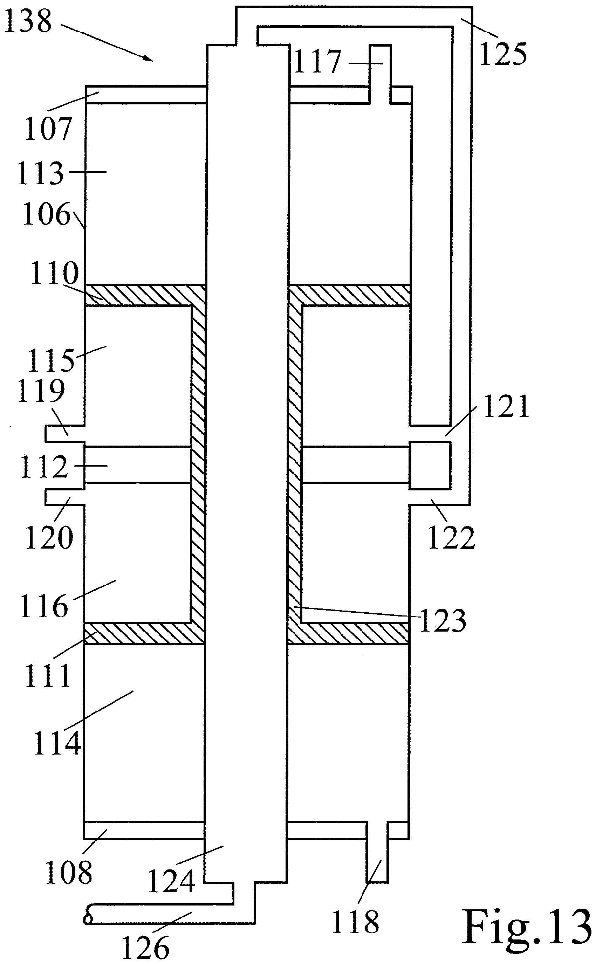

Fig. 13 zeigt ein zweites Ausführungsbeispiel einer erfindungsgemäßen Druckgasenergiewandlungs-Wärmetauscher-Einrichtungs-Vorstufeneinrichtung 138, welche auch bevorzugterweise einer erfindungsgemäßen Druckgasenergiewandlungs-Wärmetauscher-Einrichtung, beispielsweise dem oben mit Bezug auf die Fig. 8 bis 11 beschriebenen Ausführungsbeispiel der erfindungsgemäßen Druckgasenergiewandlungs-Wärmetauscher-Einrichtung 60 oder dem oben mit Bezug auf die Fig. 16 beschriebenen weiteren Ausführungsbeispiel der erfindungsgemäßen Druckgasenergiewandlungs-Wärmetauscher-Einrichtung 146, als Vorstufe vorangeschaltet werden kann und dann als eine solche Zweiergruppe ein weiteres Ausführungsbeispiel einer erfindungsgemäßen Druckgasenergiewandlungsvorrichtung bildet.

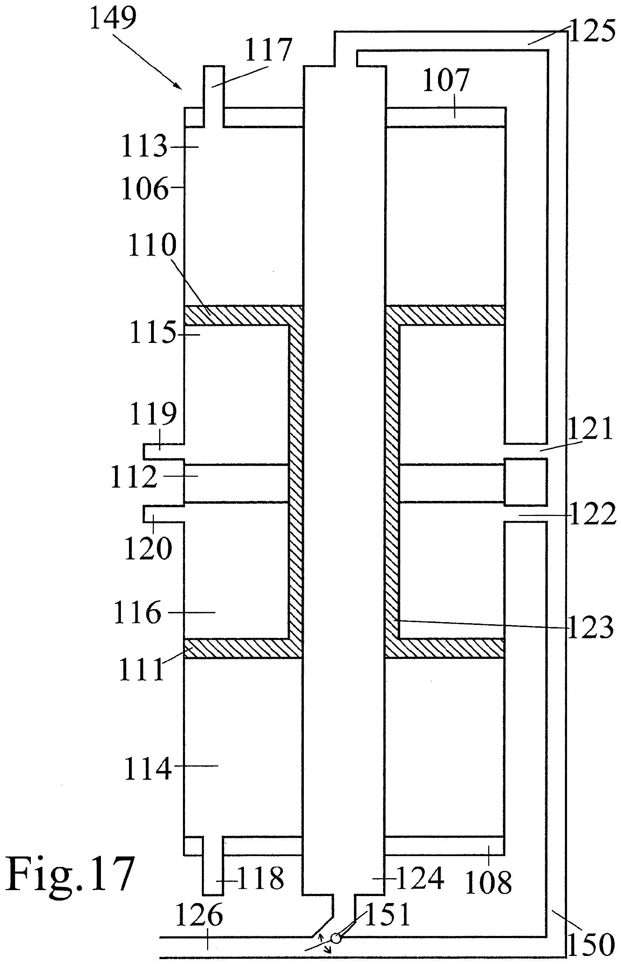

Fig. 17 zeigt ein drittes Ausführungsbeispiel einer erfindungsgemäßen Druckgasenergiewandlungs-Wärmetauscher-Einrichtungs-Vorstufeneinrichtung 149, welche auch bevorzugterweise einer erfindungsgemäßen Druckgasenergiewandlungs-Wärmetauscher-Einrichtung, beispielsweise dem oben mit Bezug auf die Fig. 8 bis 11 beschriebenen Ausführungsbeispiel der erfindungsgemäßen Druckgasenergiewandlungs-Wärmetauscher-Einrichtung 60 oder dem oben mit Bezug auf die Fig. 16 beschriebenen weiteren Ausführungsbeispiel der erfindungsgemäßen Druckgasenergiewandlungs-Wärmetauscher-Einrichtung 146, als Vorstufe vorangeschaltet werden kann und dann als eine solche Zweiergruppe ein weiteres Ausführungsbeispiel einer erfindungsgemäßen Druckgasenergiewandlungsvorrichtung bildet.

Es sei an dieser Stelle unbedingt erwähnt, dass jedes einzelne Ausführungsbeispiel der nachfolgend beschriebenen erfindungsgemäßen Druckgasenergiewandlungs-Wärmetauscher-Einrichtungs-Vorstufeneinrichtung 137, 138, 149 zwar einer wie oben beschriebenen erfindungsgemäßen Druckgasenergiewandlungs-Wärmetauscher-Einrichtung 60, 146 operativ vorangeschaltet sein kann, was dann zu einer erfindungsgemäßen Druckgasenergiewandlungsvorrichtung führt, so wie sie noch weiter unten beschrieben werden wird, dass es jedoch genauso gut möglich ist, jedes einzelne Ausführungsbeispiel der nachfolgend beschriebenen Druckgasenergiewandlungs-Wärmetauscher-Einrichtungs-Vorstufeneinrichtung 137, 138, 149 für sich alleine als Energiewandlungseinrichtung, d.h. ohne nachgeschaltete erfindungsgemä-ße Druckgasenergiewandlungs-Wärmetauscher-Einrichtung 60, 146, zu betreiben.

Das in Fig. 12 dargestellte erste Ausführungsbeispiel der erfindungsgemäßen Druckgasenergiewandlungs-Wärmetauscher-Einrichtungs-Vorstufeneinrichtung 137 weist folgendes auf: einen neunten Hohlzylinder 106, welcher an seinem einen Ende eine dreizehnte Stirnwand 107 und an seinem anderen Ende eine vierzehnte Stirnwand 108 aufweist; ein in Bezug auf die Längsrichtung des neunten Hohlzylinders 106 gesehen mittig angeordnetes drittes Mittelteil 112, welches im Inneren des neunten Hohlzylinders 106 an dessen innerer Wandung befestigt ist, sich in seiner longitudinalen Position über den gesamten Umfang der inneren Wandung des neunten Hohlzylinders 106 erstreckt und somit eine zu der dreizehnten Stirnwand 107 und der vierzehnten Stirnwand 108 parallel orientierte Mittelwand bildet, radial jedoch mittig ein durchgehendes Loch hat; eine zweite Kolbenstange 109, welche sich durch das eben genannte Loch hindurch erstreckt und in ihrer Längsrichtung hin und her bewegbar ist; einen auf einem Ende der zweiten Kolbenstange 109 fixierten siebenten Kolben 110, welcher sich an die Innenwandung des neunten Hohlzylinders 106 anschmiegt und den Raum zwischen dem dritten Mittelteil 112 und der dreizehnten Stirnwand 107 hydraulisch-pneumatisch dichtend in eine fünfzehnte Kammer 113 und eine siebzehnte Kammer 115 jeweils veränderlichen Volumens teilt, wobei die siebzehnte Kammer 115 an das dritte Mittelteil 112 angrenzt und die fünfzehnte Kammer 113 an die dreizehnte Stirnwand 107 angrenzt und die siebzehnte Kammer 115 zur Aufnahme von Flüssigkeit und die fünfzehnte Kammer 113 zur Aufnahme von Gas vorgesehen ist; einen auf dem anderen Ende der zweiten Kolbenstange 109 fixierten achten Kolben 111, welcher sich an die Innenwandung des neunten Hohlzylinders 106 anschmiegt und den Raum zwischen dem dritten Mittelteil 112 und der vierzehnten Stirnwand 108 hydraulisch-pneumatisch dichtend in eine sechzehnte Kammer 114 und eine achtzehnte Kammer 116 jeweils veränderlichen Volumens teilt, wobei die achtzehnte Kammer 116 an das dritte Mittelteil 112 angrenzt und die sechzehnte Kammer 114 an die vierzehnte Stirnwand 108 angrenzt und die achtzehnte Kammer 116 zur Aufnahme von Flüssigkeit und die sechzehnte Kammer 114 zur Aufnahme von Gas vorgesehen ist; eine mit einer zugehörigen Ventileinrichtung versehene fünfzehnte Gasanschlusseinrichtung 117, durch welche je nach Ventilstellung Gas von außerhalb der Druckgasenergiewandlungs-Wärmetauscher-Einrichtungs-Vorstufeneinrichtung 137 in die fünfzehnte Kammer 113 hineinströmen oder aus der fünfzehnten Kammer 113 und damit aus der Druckgasenergiewandlungs-Wärmetauscher-Einrichtungs-Vorstufeneinrichtung 137 herausströmen kann, wobei die fünfzehnte Gasanschlusseinrichtung 117 an der oder nahe der dreizehnten Stirnwand 107 positioniert ist; eine mit einer zugehörigen Ventileinrichtung versehene sechzehnte Gasanschlusseinrichtung 118, durch welche je nach Ventilstellung Gas von außerhalb der Druckgasenergiewandlungs-Wärmetauscher-Einrichtungs-Vorstufeneinrichtung 137 in die sechzehnte Kammer 114 hineinströmen oder aus der sechzehnten Kammer 114 und damit aus der Druckgasenergiewandlungs-Wärmetauscher-Einrichtungs-Vorstufeneinrichtung 137 herausströmen kann, wobei die sechzehnte Gasanschlusseinrichtung 118 an der oder nahe der vierzehnten Stirnwand 108 positioniert ist; eine mit einer zugehörigen Ventileinrichtung versehene fünfte Flüssigkeitsanschlusseinrichtung 121 zum Einleiten von Flüssigkeit von außerhalb der Druckgasenergiewandlungs-Wärmetauscher-Einrichtungs-Vorstufeneinrichtung 137 in die siebzehnte Kammer 115 hinein, wobei die fünfte Flüssigkeitsanschlusseinrichtung 121 nahe dem dritten Mittelteil 112 positioniert ist; eine mit einer zugehörigen Ventileinrichtung versehene sechste Flüssigkeitsanschlusseinrichtung 122 zum Einleiten von Flüssigkeit von außerhalb der Druckgasenergiewandlungs-Wärmetauscher-Einrichtungs-Vorstufeneinrichtung 137 in die achtzehnte Kammer 116 hinein, wobei die sechste Flüssigkeitsanschlusseinrichtung 122 nahe dem dritten Mittelteil 112 positioniert ist; eine mit einer zugehörigen Ventileinrichtung versehene siebente Flüssigkeitsanschlusseinrichtung 119 zum Herausführen von Flüssigkeit nach außerhalb der Druckgasenergiewandlungs-Wärmetauscher-Einrichtungs-Vorstufeneinrichtung 137 aus der siebzehnten Kammer 115 heraus, wobei die siebente Flüssigkeitsanschlusseinrichtung 119 nahe dem dritten Mittelteil 112 positioniert ist, und eine mit einer zugehörigen Ventileinrichtung versehene achte Flüssigkeitsanschlusseinrichtung 120 zum Herausführen von Flüssigkeit nach außerhalb der Druckgasenergiewandlungs-Wärmetauscher-Einrichtungs-Vorstufeneinrichtung 137 aus der achtzehnten Kammer 116 heraus, wobei die achte Flüssigkeitsanschlusseinrichtung 120 nahe dem dritten Mittelteil 112 positioniert ist.

Wie bei der oben ausführlich beschriebenen erfindungsgemäßen hydraulischen Kolbeneinrichtung 1, wie bei der oben ferner ausführlich beschriebenen erfindungsgemäßen Druckgasenergiewandlungseinrichtung 50 und wie bei der oben auch bereits ausführlich beschriebenen erfindungsgemäßen Druckgasenergiewandlungs-Wärmetauscher-Einrichtung 60, 146 kann dementsprechend natürlich auch bei der erfindungsgemäßen Druckgasenergiewandlungs-Wärmetauscher-Einrichtungs-Vorstufeneinrichtung 137, 138, 149 als Gas zum Beispiel Luft verwendet werden. Es ist aber auch bei der erfindungsgemäßen Druckgasenergiewandlungs-Wärmetauscher-Einrichtungs-Vorstufeneinrichtung 137, 138, 149 genauso gut möglich, dass anstelle von oder zusammen mit Luft auch jedes beliebige andere Gas, beispielsweise Biogas und/oder Methan und/oder irgendein Kohlenwasserstoffgas und/oder ein Gemisch aus Kohlenwasserstoffgasen und/oder ein Gemisch aus Luft und einem oder mehreren Kohlenwasserstoffgasen in der erfindungsgemäßen Druckgasenergiewandlungs-Wärmetauscher-Einrichtungs-Vorstufeneinrichtung 137, 138, 149 verwendet werden kann. Als Flüssigkeit wird bevorzugterweise Öl verwendet, jedoch kann bei der erfindungsgemäßen Druckgasenergiewandlungs-Wärmetauscher-Einrichtungs-Vorstufeneinrichtung 137, 138, 149 als Flüssigkeit grundsätzlich auch jede beliebige andere Flüssigkeit, beispielsweise Wasser, zum Einsatz kommen. Sofern die Druckgasenergiewandlungs-Wärmetauscher-Einrichtungs-Vorstufeneinrichtung 137, 138, 149 als operative Vorstufe für eine erfindungsgemäße Druckgasenergiewandlungs-Wärmetauscher-Einrichtung 60, 146 eingesetzt werden soll, ist es natürlich sinnvoll, eine Abstimmung der Art der verwendeten Flüssigkeit und insbesondere der Art des verwendeten Gases auf die Gegebenheiten bei der jeweils konkreten Druckgasenergiewandlungs-Wärmetauscher-Einrichtung 60, 146, für welche die jeweils konkrete Druckgasenergiewandlungs-Wärmetauscher-Einrichtungs-Vorstufeneinrichtung 137, 138, 149 jeweils als Vorstufe dienend geschaltet werden soll, vorzunehmen.

Wird angenommen, dass bei den hier zu beschreibenden Ausführungsbeispielen der erfindungsgemäßen Druckgasenergiewandlungs-Wärmetauscher-Einrichtungs-Vorstufeneinrichtung 137, 138, 149 als Gas Luft und als Flüssigkeit Öl verwendet wird und dass das hier zu beschreibende erste Ausführungsbeispiel der erfindungsgemäßen Druckgasenergiewandlungs-Wärmetauscher-Einrichtungs-Vorstufeneinrichtung 137 wie in Fig. 12 gezeigt mit dem neunten Hohlzylinder 106 senkrecht stehend und dabei der vierzehnten Stirnwand 108 unten und der dreizehnten Stirnwand 107 oben angeordnet ist und sich die zweite Kolbenstange 109 mit dem auf ihr fixierten achten Kolben 111 und dem auf ihr fixierten siebenten Kolben 110 anfänglich in Position an ihrem unteren Totpunkt befindet, so funktioniert dieses erste Ausführungsbeispiel der erfindungsgemäßen Druckgasenergiewandlungs-Wärmetauscher-Einrichtungs-Vorstufeneinrichtung 137 folgendermaßen:

Es befindet sich anfänglich in der achtzehnten Kammer 116 Öl und in der fünfzehnten Kammer 113 Luft. Die zu der fünfzehnten Gasanschlusseinrichtung 117 gehörende Ventileinrichtung ist geöffnet derart, dass Luft aus der fünfzehnten Kammer 113 über die fünfzehnte Gasanschlusseinrichtung 117 entweichen kann. Die zu der sechzehnten Gasanschlusseinrichtung 118 gehörende Ventileinrichtung ist geöffnet derart, dass Druckluft durch die sechzehnte Gasanschlusseinrichtung 118 in die sechzehnte Kammer 114 hineingeführt werden kann. Die zu der sechsten Flüssigkeitsanschlusseinrichtung 122 gehörende Ventileinrichtung ist geschlossen. Die zu der achten Flüssigkeitsanschlusseinrichtung 120 gehörende Ventileinrichtung ist geöffnet. Die zu der fünften Flüssigkeitsanschlusseinrichtung 121 gehörende Ventileinrichtung ist geöffnet, und die zu der siebenten Flüssigkeitsanschlusseinrichtung 119 gehörende Ventileinrichtung ist geschlossen.

Nun wird durch die sechzehnte Gasanschlusseinrichtung 118 Druckluft in die sechzehnte Kammer 114 eingeführt, was zu einem Anheben der zweiten Kolbenstange 109 samt dem siebenten Kolben 110 und dem achten Kolben 111 führt. Dementsprechend wird die Luft aus der fünfzehnten Kammer 113 durch die fünfzehnte Gasanschlusseinrichtung 117 hindurch herausgedrückt, das Öl aus der achtzehnten Kammer 116 wird durch die achte Flüssigkeitsanschlusseinrichtung 120 herausgedrückt, und durch die fünfte Flüssigkeitsanschlusseinrichtung 121 wird Öl in die siebzehnte Kammer 115 hinein angesaugt. Zwar kühlt sich die in die sechzehnte Kammer 114 hinein entspannte Druckluft beim Entspannen ab, jedoch erfolgt dabei durch den achten Kolben 111 hindurch ein Wärmeaustausch mit dem in der achtzehnten Kammer 116 befindlichen Öl, welches regelmäßig warm ist oder zumindest Zimmertemperatur hat, so dass auf diese Weise der Temperaturabfall der Luft beim Entspannen jedenfalls abgemildert wird.

Sobald die zweite Kolbenstange 109 mit dem auf ihr fixierten achten Kolben 111 und dem auf ihr fixierten siebenten Kolben 110 an ihrem oberen Totpunkt angelangt ist, wird die zu der fünfzehnten Gasanschlusseinrichtung 117 gehörende Ventileinrichtung derart umgeschaltet, dass Druckluft in die fünfzehnte Kammer 113 durch die fünfzehnte Gasanschlusseinrichtung 117 hineingeführt werden kann. Die zu der sechzehnten Gasanschlusseinrichtung 118 gehörende Ventileinrichtung wird derart umgeschaltet, dass die Luft aus der sechzehnten Kammer 114 durch die sechzehnte Gasanschlusseinrichtung 118 herausgeführt werden kann. Die zu der sechsten Flüssigkeitsanschlusseinrichtung 122 gehörende Ventileinrichtung wird geöffnet. Die zu der achten Flüssigkeitsanschlusseinrichtung 120 gehörende Ventileinrichtung wird geschlossen. Die zu der fünften Flüssigkeitsanschlusseinrichtung 121 gehörende Ventileinrichtung wird geschlossen, und die zu der siebenten Flüssigkeitsanschlusseinrichtung 119 gehörende Ventileinrichtung wird geöffnet.

Nun wird durch die fünfzehnte Gasanschlusseinrichtung 117 Druckluft in die fünfzehnte Kammer 113 eingeführt, was zu einem Hub der zweiten Kolbenstange 109 samt dem siebenten Kolben 110 und dem achten Kolben 111 nach unten führt. Dementsprechend wird die Luft aus der sechzehnten Kammer 114 durch die sechzehnte Gasanschlusseinrichtung 118 hindurch herausgedrückt, das Öl aus der siebzehnten Kammer 115 wird durch die siebente Flüssigkeitsanschlusseinrichtung 119 herausgedrückt, und durch die sechste Flüssigkeitsanschlusseinrichtung 122 wird Öl in die achtzehnte Kammer 116 hinein angesaugt. Zwar kühlt sich die in die fünfzehnte Kammer 113 hinein entspannte Druckluft beim Entspannen ab, jedoch erfolgt dabei durch den siebenten Kolben 110 hindurch ein Wärmeaustausch mit dem in der siebzehnten Kammer 115 befindlichen Öl, welches regelmäßig warm ist oder zumindest Zimmertemperatur hat, so dass auf diese Weise der Temperaturabfall der Luft beim Entspannen jedenfalls abgemildert wird.

Sobald die zweite Kolbenstange 109 mit dem auf ihr fixierten achten Kolben 111 und dem auf ihr fixierten siebenten Kolben 110 wieder an ihrem unteren Totpunkt angelangt ist, wird die zu der sechzehnten Gasanschlusseinrichtung 118 gehörende Ventileinrichtung wieder umgeschaltet derart, dass Druckluft durch die sechzehnte Gasanschlusseinrichtung 118 in die sechzehnte Kammer 114 hineingeführt werden kann. Die zu der fünfzehnten Gasanschlusseinrichtung 117 gehörende Ventileinrichtung wird umgeschaltet derart, dass Luft aus der fünfzehnten Kammer 113 über die fünfzehnte Gasanschlusseinrichtung 117 entweichen kann. Die zu der sechsten Flüssigkeitsanschlusseinrichtung 122 gehörende Ventileinrichtung wird geschlossen.

Die zu der achten Flüssigkeitsanschlusseinrichtung 120 gehörende Ventileinrichtung wird geöffnet. Die zu der fünften Flüssigkeitsanschlusseinrichtung 121 gehörende Ventileinrichtung wird geöffnet, und die zu der siebenten Flüssigkeitsanschlusseinrichtung 119 gehörende Ventileinrichtung wird geschlossen.

Dann wird wieder Druckluft durch die sechzehnte Gasanschlusseinrichtung 118 in die sechzehnte Kammer 114 hinein eingelassen, und der bereits oben beschriebene Hubtakt der zweiten Kolbenstange 109 samt dem siebenten Kolben 110 und dem achten Kolben 111 nach oben beginnt von neuem.

Das in Fig. 13 gezeigte zweite Ausführungsbeispiel der erfindungsgemäßen Druckgasenergiewandlungs-Wärmetauscher-Einrichtungs-Vorstufeneinrichtung 138 unterscheidet sich zwar in einigen Details von dem vorstehend beschriebenen ersten Ausführungsbeispiel der erfindungsgemäßen Druckgasenergiewandlungs-Wärmetauscher-Einrichtungs-Vorstufeneinrichtung 137, jedoch sind gleiche oder im wesentlichen gleiche Teile in den Fig. 12 und 13 jeweils mit den gleichen Bezugszeichen versehen.

Das in Fig. 13 dargestellte zweite Ausführungsbeispiel der erfindungsgemäßen Druckgasenergiewandlungs-Wärmetauscher-Einrichtungs-Vorstufeneinrichtung 138 weist gegenüber dem in Fig. 12 dargestellten ersten Ausführungsbeispiel der erfindungsgemäßen Druckgasenergiewandlungs-Wärmetauscher-Einrichtungs-Vorstufeneinrichtung 137 zusätzlich einen zehnten Hohlzylinder 124 auf, welcher innerhalb des neunten Hohlzylinders 106 angeordnet ist, sich durch die Öffnung in dem dritten Mittelteil 112 hindurch erstreckt und sich an seinem einen Ende durch eine Öffnung in der dreizehnten Stirnwand 107 hindurch und an seinem anderen Ende durch eine Öffnung in der vierzehnten Stirnwand 108 hindurch über die dreizehnte Stirnwand 107 bzw. über die vierzehnte Stirnwand 108 hinaus erstreckt. Eine weitere Besonderheit des zweiten Ausführungsbeispiels der erfindungsgemäßen Druckgasenergiewandlungs-Wärmetauscher-Einrichtungs-Vorstufeneinrichtung 138 besteht darin, dass die zweite Kolbenstange als erstes Kolbenrohr 123 ausgebildet ist, welches den zehnten Hohlzylinder 124 umschließt, sich hydraulisch-pneumatisch dichtend an den zehnten Hohlzylinder 124 anschmiegt und so ausgelegt ist, dass es auf dem zehnten Hohlzylinder 124 hin und her gleiten kann. Dementsprechend sind natürlich sowohl der siebente Kolben 110 als auch der achte Kolben 111 jeweils mit einem Loch versehen, durch welches hindurch sich der zehnte Hohlzylinder 124 erstreckt, und sowohl der siebente Kolben 110 als auch der achte Kolben 111 schmiegen sich hydraulisch-pneumatisch dichtend an den zehnten Hohlzylinder 124 an und sind so ausgelegt, dass sie zusammen mit dem ersten Kolbenrohr 123, auf dem sie jeweils fixiert sind, auf dem zehnten Hohlzylinder 124 hin und her gleiten können. Desweiteren ist als eine Besonderheit bei dem zweiten Ausführungsbeispiel der erfindungsgemäßen Druckgasenergiewandlungs-Wärmetauscher-Einrichtungs-Vorstufeneinrichtung 138 eine elfte Flüssigkeitsleitung 125 vorgesehen, welche zwecks Flüssigkeitstransportes sowohl an die fünfte Flüssigkeitsanschlusseinrichtung 121 als auch an die sechste Flüssigkeitsanschlusseinrichtung 122 als auch an dasjenige Ende des zehnten Hohlzylinders 124, welches über die dreizehnte Stirnwand 107 hinausragt, angeschlossen ist. Über eine zwölfte Flüssigkeitsleitung 126, welche zwecks Flüssigkeitstransportes an dasjenige Ende des zehnten Hohlzylinders 124, welches über die vierzehnte Stirnwand 108 hinausragt, angeschlossen ist, kann Flüssigkeit, beispielsweise Öl, in den zehnten Hohlzylinder 124 hineingedrückt werden und von dort über die elfte Flüssigkeitsleitung 125 sowohl zur fünften Flüssigkeitsanschlusseinrichtung 121 als auch zur sechsten Flüssigkeitsanschlusseinrichtung 122 hin fließen.

Aus einem Vergleich der Fig. 12 und 13 wird unmittelbar und ohne weiteres klar, dass - abgesehen von den dargelegten rein konstruktiven Unterschieden - das zweite Ausführungsbeispiel der erfindungsgemäßen Druckgasenergiewandlungs-Wärmetauscher-Einrichtungs-Vorstufeneinrichtung 138 prinzipiell genauso funktioniert, wie das in seiner Funktionsweise oben ausführlich beschriebene erste Ausführungsbeispiel der erfindungsgemäßen Druckgasenergiewandlungs-Wärmetauscher-Einrichtungs-Vorstufeneinrichtung 137. Allerdings steht aufgrund des bei dem zweiten Ausführungsbeispiel der erfindungsgemäßen Druckgasenergiewandlungs-Wärmetauscher-Einrichtungs-Vorstufeneinrichtung 138 durch den zehnten Hohlzylinder 124 hindurchströmenden Öls eine größere und verbessert angeordnete Fläche für den Wärmeaustausch zwischen der Flüssigkeit und dem Gas zur Verfügung, so dass bei dem zweiten Ausführungsbeispiel der erfindungsgemäßen Druckgasenergiewandlungs-Wärmetauscher-Einrichtungs-Vorstufeneinrichtung 138 effektiv im Betrieb ein noch weitaus besserer Wärmeaustausch stattfindet als bei dem ersten Ausführungsbeispiel der erfindungsgemäßen Druckgasenergiewandlungs-Wärmetauscher-Einrichtungs-Vorstufeneinrichtung 137.

Fig. 17 zeigt ein drittes Ausführungsbeispiel einer erfindungsgemäßen Druckgasenergiewandlungs-Wärmetauscher-Einrichtungs-Vorstufeneinrichtung 149, welches gegenüber dem oben mit Bezug auf die Fig. 13 beschriebenen zweiten Ausführungsbeispiel der erfindungsgemäßen Druckgasenergiewandlungs-Wärmetauscher-Einrichtungs-Vorstufeneinrichtung 138 mit einigen zusätzlichen Bauteilen versehen ist, die eine gewisse Steuerung des Betriebs der Druckgasenergiewandlungs-Wärmetauscher-Einrichtungs-Vorstufeneinrichtung 149 in thermischer Hinsicht ermöglichen. Hintergrund dieser technischen Zusatzmaßnahme ist der, dass es in Bezug auf sich zeitlich ändernde Umgebungstemperaturen am Einsatzort einer erfindungsgemäßen Druckgasenergiewandlungs-Wärmetauscher-Einrichtungs-Vorstufeneinrichtung und/oder im Hinblick auf sich möglicherweise zeitlich ändernde Betriebsanforderungen im technisch-technologischen Umfeld einer erfindungsgemäßen Druckgasenergiewandlungs-Wärmetauscher-Einrichtungs-Vorstufeneinrichtung während des Einsatzes der erfindungsgemäßen Druckgasenergiewandlungs-Wärmetauscher-Einrichtungs-Vorstufeneinrichtung sinnvoll sein und manchmal möglicherweise sogar unbedingt notwendig werden kann, die Temperatur der Abluft bzw. des Abgases gezielt zu steuern. Während es beispielsweise im tiefsten Winter bei sehr kalten Außentemperaturen durchaus vorteilhaft sein kann, eine möglichst hohe Ablufttemperatur zu haben, damit die Druckgasenergiewandlungs-Wärmetauscher-Einrichtungs-Vorstufeneinrichtung nicht partiell einfriert und damit vielleicht sogar - wenn beispielsweise die Druckgasenergiewandlungs-Wärmetauscher-Einrichtungs-Vorstufeneinrichtung autonom, d.h. ohne nachgeschaltete Druckgasenergiewandlungs-Wärmetauscher-Einrichtung betrieben wird - die Abluft zum Erwärmen irgendwelcher Räumlichkeiten genutzt werden kann, kann dieselbe hohe Ablufttemperatur im Hochsommer bei hohen Außentemperaturen unnütz oder sogar durchaus kontraproduktiv und gänzlich unerwünscht sein. Zumindest ist die Gefahr eines partiellen Einfrierens der Druckgasenergiewandlungs-Wärmetauscher-Einrichtungs-Vorstufeneinrichtung im Hochsommer geringer als im tiefsten Winter, und es kann daher bei Betrachtung des Gesamtsystems, in welchem die Druckgasenergiewandlungs-Wärmetauscher-Einrichtungs-Vorstufeneinrichtung eingesetzt ist, unter energetischen Gesichtspunkten vorteilhaft sein, im Sommer mehr Wärme im Öl zur weiteren dortigen Verwendung zu belassen, während es im Winter durchaus notwendig werden kann, mehr Wärme vom Öl auf die Luft bzw. auf das etwaig verwendete andere Gas zu übertragen. Wenn die Ablufttemperatur zu hoch ist, wird dem Öl bzw. der Flüssigkeit als Wärmeträger unnötig viel Energie in Form von Wärme entzogen. Dementsprechend ist das Vorsehen einer Steuerungsmöglichkeit in thermischer Hinsicht vorteilhaft und wünschenswert. Zu diesem Zweck ist bei dem in Fig. 17 dargestellten dritten Ausführungsbeispiel der erfindungsgemäßen Druckgasenergiewandlungs-Wärmetauscher-Einrichtungs-Vorstufeneinrichtung 149 ergänzend zu den in Fig. 13 bereits gezeigten Bauteilen folgendes vorgesehen: eine vierzehnte Flüssigkeitsleitung 150, welche mit ihrem einen Ende an die zwölfte Flüssigkeitsleitung 126 angeschlossen und so eingerichtet ist, dass diese vierzehnte Flüssigkeitsleitung 150 in der Lage ist, Flüssigkeit von der zwölften Flüssigkeitsleitung 126 zur fünften Flüssigkeitsanschlusseinrichtung 121 und zur sechsten Flüssigkeitsanschlusseinrichtung 122 zu leiten, ohne dass die Flüssigkeit dabei auf ihrem Weg zur fünften Flüssigkeitsanschlusseinrichtung 121 und zur sechsten Flüssigkeitsanschlusseinrichtung 122 den zehnten Hohlzylinder 124 durchläuft, wobei der Anschluss der vierzehnten Flüssigkeitsleitung 150 an die zwölfte Flüssigkeitsleitung 126 mit einer zweiten Strömungssteuerungsventileinrichtung 151 versehen ist, welche steuerbar und derart ausgebildet ist, dass mittels der zweiten Strömungssteuerungsventileinrichtung 151 gesteuert werden kann, welcher Anteil eines über die zwölfte Flüssigkeitsleitung 126 bei der zweiten Strömungssteuerungsventileinrichtung 151 ankommenden Flüssigkeitsstromes in den zehnten Hohlzylinder 124 und welcher Anteil in die vierzehnte Flüssigkeitsleitung 150 geleitet wird, wobei die Steuerungsmöglichkeit der zweiten Strömungssteuerungsventileinrichtung 151 dabei mindestens die Möglichkeit beinhaltet zu steuern, ob der bei ihr über die zwölfte Flüssigkeitsleitung 126 ankommende Flüssigkeitsstrom vollständig in den zehnten Hohlzylinder 124 oder vollständig in die vierzehnte Flüssigkeitsleitung 150 geleitet wird. Dabei ist das in Fig. 17 dargestellte dritte Ausführungsbeispiel der erfindungsgemäßen Druckgasenergiewandlungs-Wärmetauscher-Einrichtungs-Vorstufeneinrichtung 149 speziell so eingerichtet, dass hier die vierzehnte Flüssigkeitsleitung 150 mit ihrem von der zweiten Strömungssteuerungsventileinrichtung 151 entfernten Ende in die elfte Flüssigkeitsleitung 125 mündet.

Die zweite Strömungssteuerungsventileinrichtung 151 kann beispielsweise ein Thermostatventil aufweisen.

Besonders bevorzugterweise wird vorgesehen, dass die zweite Strömungssteuerungsventileinrichtung 151 so eingerichtet ist, dass sie außer der bereits genannten Steuerungsmöglichkeit der vollständigen Einleitung des bei ihr über die zwölfte Flüssigkeitsleitung 126 ankommenden Flüssigkeitsstromes entweder in den zehnten Hohlzylinder 124 oder in die vierzehnte Flüssigkeitsleitung 150 ferner so steuerbar ist, dass sie den bei ihr über die zwölfte Flüssigkeitsleitung 126 ankommenden Flüssigkeitsstrom aufteilen kann, so dass ein Teil der Flüssigkeit in den zehnten Hohlzylinder 124 gelangt und gleichzeitig ein anderer Teil der Flüssigkeit in die vierzehnte Flüssigkeitsleitung 150 gelangt, wobei ein zugehöriges Strömungsaufteilungsverhältnis stufenlos und/oder in Stufen steuerbar ist. Dabei steuert die zweite Strömungssteuerungsventileinrichtung 151 den Flüssigkeitsstrom in Abhängigkeit von einer Gas-und/oder Flüssigkeitstemperaturmessung. Sofern der eben genannten Steuerung eine Gastemperaturmessung zugrundelegt werden soll, kann diese grundsätzlich an einer beliebigen Stelle, an der Gas strömt, vorgenommen werden. Bevorzugt ist eine Temperaturmessung dort, wo das Gas bereits "gearbeitet" hat, also bereits expandiert ist.

Vorteilhafterweise wird bzw. werden diese eben genannte(n) Messung bzw. Messungen beispielsweise so eingerichtet, dass, sofern eine Gastemperaturmessung zur Steuerung der zweiten Strömungssteuerungsventileinrichtung 151 vorgenommen wird, diese Gastemperaturmessung zumindest entweder im Bereich der fünfzehnten Gasanschlusseinrichtung 117 oder im Bereich der sechzehnten Gasanschlusseinrichtung 118 erfolgt oder in einem Bereich der fünfzehnten Kammer 113, welcher von dem dritten Mittelteil 112 weiter beabstandet ist als von der dreizehnten Stirnwand 107, oder in einem Bereich der sechzehnten Kammer 114, welcher von dem dritten Mittelteil 112 weiter beabstandet ist als von der vierzehnten Stirnwand 108, und dass, sofern eine Flüssigkeitstemperaturmessung zur Steuerung der zweiten Strömungssteuerungsventileinrichtung 151 vorgenommen wird, diese Flüssigkeitstemperaturmessung zumindest entweder in der elften Flüssigkeitsleitung 125 erfolgt oder in einem Bereich des zehnten Hohlzylinders 124, welcher von dem dritten Mittelteil 112 weiter beabstandet ist als von der dreizehnten Stirnwand 107.

Die Steuerung der zweiten Strömungssteuerungsventileinrichtung 151 kann beispielsweise mechanisch und/oder elektromechanisch und/oder magnetisch und/oder elektromagnetisch und/oder elektronisch und/oder optisch und/oder elektro-optisch und/oder auf jede andere technisch geeignete Weise erfolgen.

Die Steuerung des in der Fig. 17 dargestellten dritten Ausführungsbeispiels der erfindungsgemäßen Druckgasenergiewandlungs-Wärmetauscher-Einrichtungs-Vorstufeneinrichtung 149 in thermischer Hinsicht kann beispielsweise so erfolgen: Zunächst ist die zweite Strömungssteuerungsventileinrichtung 151, welche ein Thermostatventil sein kann, derart eingestellt, dass alles an jenem Thermostatventil über die zwölfte Flüssigkeitsleitung 126 ankommende Öl genau so, wie bei dem Ausführungsbeispiel von Fig. 13 dauerhaft vorgesehen und bei jenem Ausführungsbeispiel aufgrund des dort vorgesehenen technischen Aufbaus gar nicht anders möglich, in den zehnten Hohlzylinder 124 gelenkt wird und sich von dort aus genau so, wie es oben mit Bezug auf Fig. 13 beschrieben wurde, weiter fortbewegt. Wenn mittels einer Messung der Temperatur der Abluft, welche im Bereich der fünfzehnten Gasanschlusseinrichtung 117 erfolgt, festgestellt wird, dass die Temperatur der Abluft höher ist als aufgrund irgendwelcher vorher definierter Bedingungen nötig oder erlaubt, so wird das im vorangegangenen Satz genannte Thermostatventil mechanisch oder elektromechanisch derart gesteuert, dass es die Ölzufuhr von der zwölften Flüssigkeitsleitung 126 in den zehnten Hohlzylinder 124 ganz oder zum Teil unterbricht und stattdessen das aus der zwölften Flüssigkeitsleitung 126 ankommende Öl entsprechend ganz oder zum Teil in die vierzehnte Flüssigkeitsleitung 150 und von dort dann zur fünften Flüssigkeitsanschlusseinrichtung 121 und zur sechsten Flüssigkeitsanschlusseinrichtung 122 führt. Zur fünften Flüssigkeitsanschlusseinrichtung 121 und zur sechsten Flüssigkeitsanschlusseinrichtung 122 gelangt das Öl als solches sowohl bei dem Ausführungsbeispiel von Fig. 13 als auch bei dem Ausführungsbeispiel von Fig. 17 immer. Während bei dem Ausführungsbeispiel von Fig. 13 jedoch permanent nur ein einziger Weg für das Öl dorthin vorgesehen ist, gibt es bei dem Ausführungsbeispiel von Fig. 17 für das Öl zwei verschiedene Wege hin zur fünften Flüssigkeitsanschlusseinrichtung 121 und zur sechsten Flüssigkeitsanschlusseinrichtung 122, wobei gesteuert werden kann, welchen Weg das Öl nehmen soll bzw. wie sich das Öl mengenmäßig auf die beiden möglichen Wege verteilt. Je weniger Öl in den zehnten Hohlzylinder 124 fließt, um so weniger Wärme kann vom Öl auf die in der sechzehnten Kammer 114 und auf die in der fünfzehnten Kammer 113 befindliche Luft übertragen werden. Wird der Ölfluss auf dem eben genannten Weg komplett unterbrochen, hat das demgemäß eine Unterbrechung der Wärmezufuhr an die in der sechzehnten Kammer 114 und an die in der fünfzehnten Kammer 113 befindliche Luft zur Folge. Dementsprechend sinkt die Temperatur der Abluft, wenn - wie im vorliegenden Absatz etwas weiter oben bereits beschrieben - das genannte Thermostatventil - d.h. also die zweite Strömungssteuerungsventileinrichtung 151 - die Ölzufuhr von der zwölften Flüssigkeitsleitung 126 in den zehnten Hohlzylinder 124 ganz oder zum Teil unterbricht und stattdessen das aus der zwölften Flüssigkeitsleitung 126 ankommende Öl entsprechend ganz oder zum Teil in die vierzehnte Flüssigkeitsleitung 150 führt. Die Abluft wird dann also weniger erhitzt, wird "kühler" in die Umgebung abgegeben oder weiterer Verwendung zugeführt. Falls später irgendwann die Ablufttemperatur als zu niedrig angesehen werden sollte, kann dann die Stellung des genannten Thermostatventils - d.h. also der zweiten Strömungssteuerungsventileinrichtung 151 - so geändert werden, dass wieder mehr oder sogar alles Öl, welches über die zwölfte Flüssigkeitsleitung 126 bei der zweiten Strömungssteuerungsventileinrichtung 151 eintrifft, in den zehnten Hohlzylinder 124 geleitet und auf diese Weise der in der sechzehnten Kammer 114 und der in der fünfzehnten Kammer 113 befindlichen Luft wieder Wärme bzw. mehr Wärme zugeführt wird.

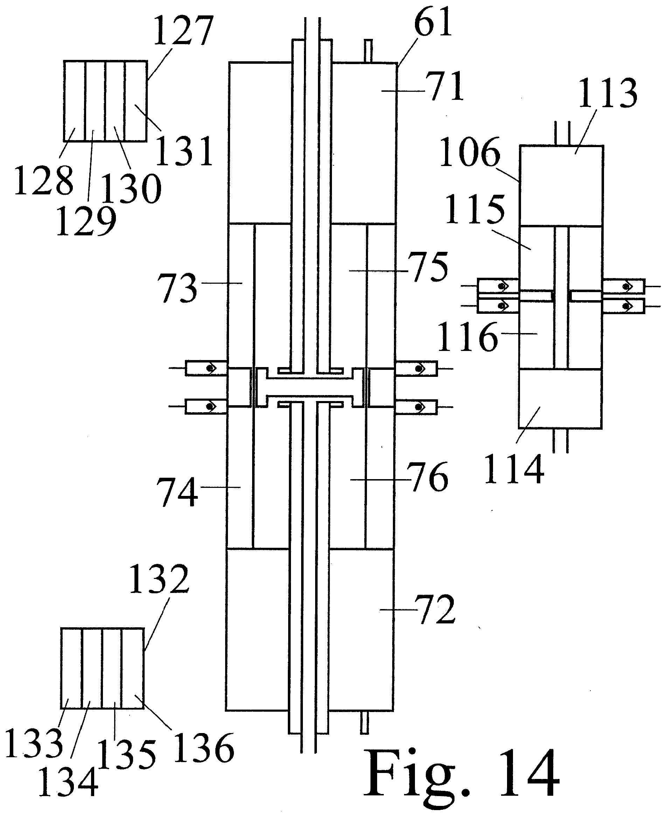

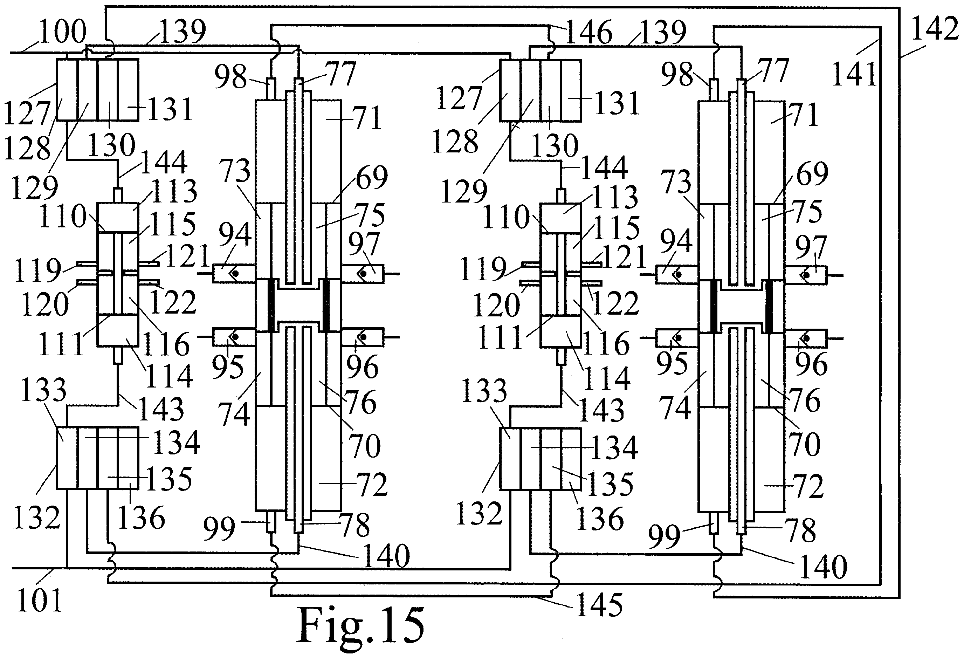

Mit Bezug auf die Fig. 14 und 15 werden nachfolgend Ausführungsbeispiele erfindungsgemäßer Druckgasenergiewandlungsvorrichtungen beschrieben.

Eine erfindungsgemäße Druckgasenergiewandlungsvorrichtung hebt sich von aus dem Stand der Technik bekannten Druckgasenergiewandlungsvorrichtungen dadurch ab, dass sie mindestens eine Zweiergruppe aufweist, welche eine erfindungsgemäße Druckgasenergiewandlungs-Wärmetauscher-Einrichtung und eine erfindungsgemäße Druckgasenergiewandlungs-Wärmetauscher-Einrichtungs-Vorstufeneinrichtung, welche der Druckgasenergiewandlungs-Wärmetauscher-Einrichtung als Vorstufe operativ vorgeschaltet ist, aufweist. Dabei ist es ganz besonders bevorzugt, zwei, drei, vier oder mehr der genannten Zweiergruppen vorzusehen, wobei diese Zweiergruppen miteinander kombiniert und verschaltet werden.

Auch bei der erfindungsgemäßen Druckgasenergiewandlungsvorrichtung kann als Gas zum Beispiel Luft verwendet werden. Es ist aber auch genauso gut möglich, dass anstelle von oder zusammen mit Luft auch jedes beliebige andere Gas, beispielsweise Biogas und/oder Methan und/oder irgendein Kohlenwasserstoffgas und/oder ein Gemisch aus Kohlenwasserstoffgasen und/oder ein Gemisch aus Luft und einem oder mehreren Kohlenwasserstoffgasen verwendet werden kann.

Hinsichtlich der zu verwendenden Flüssigkeit wird zwar aus rein wirtschaftspraktischen Gründen häufig Öl als Flüssigkeit in der erfindungsgemäßen Druckgasenergiewandlungsvorrichtung eingesetzt, jedoch ist der Betrieb der erfindungsgemäßen Druckgasenergiewandlungsvorrichtung prinzipiell ohne weiteres auch mit jeder beliebigen anderen Flüssigkeit, beispielsweise mit Wasser, möglich.

Die erfindungsgemäße Druckgasenergiewandlungsvorrichtung in ihren unterschiedlichen Ausführungsbeispielen hat stets zum Zweck, mögliche Verschaltungen und Kombinationen von mit Druckgas arbeitenden Energiewandlungseinrichtungen zu einer kombinierten Einheit mit dem Ziel vorzusehen, gespeicherte Druckluft so weit wie möglich zum atmosphärischen Druck zu entspannen, um das starke Abkühlen bzw. Einfrieren zu vermeiden und möglichst viel Energie zurückzugewinnen. Auf allen Figuren der vorliegenden Anmeldung sind sämtliche Flüssigkeitsanschlüsse bzw. Ölanschlüsse, die an den Hohlzylindern angeschweißt oder anderweitig befestigt sind oder die durch Kanäle im Mittelteil geführt werden, mit Rückschlagventilen versehen, so dass ohne elektrisch oder pneumatisch gesteuerte Ventile immer der gewünschte erforderliche Flüssigkeitsstrom bzw. Ölstrom erreicht wird. Saugt sich eine Kammer voll, schließt das Ventil zum Motor / Abnehmer durch den entstehenden Unterdruck und gleichzeitig öffnet das Ventil zum Flüssigkeitstank / Flüssigkeitsvörratsbehälter bzw. Öltank / Ölvorratsbehälter. Umgekehrt wird die gegenüberliegende Kammer entleert / ausgepresst zum Motor / Abnehmer, wobei durch den entstehenden Überdruck das entsprechende Ventil öffnet und gleichzeitig das Ventil zum Flüssigkeitstank / Flüssigkeitsvorratsbehälter bzw. Öltank / Ölvorratsbehälter schließt. Im Grunde genommen arbeitet dieses System wie ein Herz, wobei man die Rückschlagventile als die Herzklappen ansehen kann.

Der Grundaufbau der erfindungsgemäßen Druckgasenergiewandlungsvorrichtung beinhaltet als Vorstufe eine erfindungsgemäße Druckgasenergiewandlungs-Wärmetauscher-Einrichtungs-Vorstufeneinrichtung, die der Haupteinheit, also der erfindungsgemäßen Druckgasenergiewandlungs-Wärmetauscher-Einrichtung sozusagen die Druckluft genau abgestimmt auf Druck und Menge zuführt. Diesem Ganzen vorgeschaltet ist optimalerweise sogar außerdem eine erfindungsgemäße Druckgasenergiewandlungseinrichtung 50, wobei letzteres jedoch nicht unbedingt notwendig ist. Die Druckluft wird in der Druckgasenergiewandlungseinrichtung 50 möglichst genau an den gewünschten Druck herangeregelt oder bei Bedarf in der Druckgasenergiewandlungs-Wärmetauscher-Einrichtungs-Vorstufeneinrichtung nachgeregelt, indem die Kolbenstange oder ein Kolben mit einem Wegmesssystem ausgestattet ist, das es erlaubt, nach einer vorher berechneten Wegstrecke, die die Kolben zurückgelegt haben, das jeweilige Gaseinlassventil zu schließen, um so das Ausdehnen der Druckluft zu nutzen.

Als Druckgasenergiewandlungs-Wärmetauscher-Einrichtungs-Vorstufeneinrichtung wird bei dem Ausführungsbeispiel der erfindungsgemäßen Druckgasenergiewandlungseinrichtung von Fig. 14 das erste Ausführungsbeispiel der erfindungsgemäßen Druckgasenergiewandlungs-Wärmetauscher-Einrichtungs-Vorstufeneinrichtung 137 verwendet, welches bereits oben mit Bezug auf Fig. 12 beschrieben worden war. Dieses erste Ausführungsbeispiel der erfindungsgemäßen Druckgasenergiewandlungs-Wärmetauscher-Einrichtungs-Vorstufeneinrichtung 137 besteht aus dem neunten Hohlzylinder 106, der durch das dritte Mittelteil 112 in zwei gleiche Hälften geteilt ist. Durch dieses dritte Mittelteil 112 führt die zweite Kolbenstange 109, an deren Enden der siebente Kolben 110 und der achte Kolben 111 montiert sind. Dadurch entstehen vier Kammern. Zwischen der dreizehnten Stirnwand 107 und dem siebenten Kolben 110 die fünfzehnte Kammer 113 für Luft. Zwischen dem siebenten Kolben 110 und dem dritten Mittelteil 112 die siebzehnte Kammer 115 für Öl. Zwischen dem dritten Mittelteil 112 und dem achten Kolben 111 die achtzehnte Kammer 116 für Öl und zwischen dem achten Kolben 111 und der vierzehnten Stirnwand 108 die sechzehnte Kammer 114 für Luft.

Um die Wärmetauscherfunktion zu verbessern, kann bei Bedarf die zweite Kolbenstange 109 der Druckgasenergiewandlungs-Wärmetauscher-Einrichtungs-Vorstufeneinrichtung als ein erstes Kolbenrohr 123 gestaltet werden bzw. durch das erste Kolbenrohr 123 ersetzt werden. Durch dieses erste Kolbenrohr 123 sowie durch die dreizehnte Stirnwand 107 und die vierzehnte Stirnwand 108 und das dritte Mittelteil 112 wird der zehnte Hohlzyinder 124 geführt, durch den dann Öl angesaugt werden kann und so die fünfzehnte Kammer 113 und die sechzehnte Kammer 114, in denen sich Luft befindet, auch von innen "geheizt" werden (vgl. hierzu das in Fig. 13 gezeigte zweite Ausführungsbeispiel der Druckgasenergiewandlungs-Wärmetauscher-Einrichtungs-Vorstufeneinrichtung 138).

In der weiteren Beschreibung wird allerdings der Einfachheit halber einfach ganz allgemein von einem Ansaugen des Öls über die fünfte Flüssigkeitsanschlusseinrichtung 121 und die sechste Flüssigkeitsanschlusseinrichtung 122 ausgegangen, ohne die spezielle Möglichkeit des Ansaugens des Öls über die zwölfte Flüssigkeitsleitung 126, den zehnten Hohlzylinder 124 und die elfte Flüssigkeitsleitung 125 zu erwähnen.

Im Idealfall wird nun Druckluft aus dem Druckluftvorratsbehälter über die Druckgasenergiewandlungseinrichtung 50 auf den gewünschten Druck herangeregelt und so der Druckgasenergiewandlungs-Wärmetauscher-Einrichtungs-Vorstufeneinrichtung zugeführt, z.B. über die fünfzehnte Gasanschlusseinrichtung 117. Dabei wird die fünfzehnte Kammer 113 mit Druckluft gefüllt, und dementsprechend werden der siebente Kolben 110, die zweite Kolbenstange 109 und der achte Kolben 111 nach unten gedrückt. Die sechzehnte Gasanschlusseinrichtung 118 ist dabei geöffnet zur zehnten Gasleitung 78.

Währenddessen ist die siebente Flüssigkeitsanschlusseinrichtung 119, von welcher aus eine Öldruckleitung zu einem Ölmotor führt, geöffnet. Die achte Flüssigkeitsanschlusseinrichtung 120 ist geschlossen. Die fünfte Flüssigkeitsanschlusseinrichtung 121 ist geschlossen, und die sechste Flüssigkeitsanschlusseinrichtung 122 ist zum Zwecke des Ansaugens von Öl geöffnet.

Die Druckluftzufuhr zur sechzehnten Gasanschlusseinrichtung 118 ist dabei natürlich geschlossen. Hat der achte Kolben 111 die vierzehnte Stirnwand 108 erreicht, schließt spätestens jetzt die Druckluftzufuhr zur fünfzehnten Gasanschlusseinrichtung 117, und es öffnet sich eine Verbindungsleitung von der fünfzehnten Gasanschlusseinrichtung 117 zur neunten Gasleitung 77.

Die Druckgasenergiewandlungs-Wärmetauscher-Einrichtung 60 beginnt nun zu arbeiten, so wie es oben mit Bezug auf Fig. 11 beschrieben wurde. Ist dieser beschriebene Arbeitstakt ausgeführt, wird nun die Verbindung der sechzehnten Gasanschlusseinrichtung 118 zur zehnten Gasleitung 78 geschlossen und die sechzehnte Gasanschlusseinrichtung 118 mit Druck beaufschlagt. Der achte Kolben 111 und der siebente Kolben 110 werden jetzt dementsprechend nach oben gedrückt, bis der siebente Kolben 110 die dreizehnte Stirnwand 107 erreicht hat.

Dabei ist die siebente Flüssigkeitsanschlusseinrichtung 119 zum Ölmotor hin geschlossen. Die achte Flüssigkeitsanschlusseinrichtung 120 ist offen und über eine Druckleitung mit dem Ölmotor verbunden. Die fünfte Flüssigkeitsanschlusseinrichtung 121 ist zum Ansaugen von Öl offen, und die sechste Flüssigkeitsanschlusseinrichtung 122 ist geschlossen.

Nun wird die Druckluftzufuhr zur sechzehnten Gasanschlusseinrichtung 118 geschlossen und die Verbindung zur zehnten Gasleitung 78 geöffnet. Der weitere Ablauf ist dann wie oben bereits mit Bezug auf Fig. 11 beschrieben.

Es ist natürlich nicht zwingend erforderlich, die Druckluftzufuhr bei Erreichen der oberen oder unteren Totpunkte des siebenten Kolbens 110 und des achten Kolbens 111 zu unterbrechen. Insbesondere bei niederen zur Verfügung stehenden Drücken kann es sinnvoll sein, die Zufuhr von Druckluft so lange aufrechtzuerhalten, bis auch die Druckgasenergiewandlungs-Wärmetauscher-Einrichtung den gewünschten Arbeitstakt ganz oder zum Teil geleistet hat.

Aus der Kombination der erfindungsgemäßen Druckgasenergiewandlungs-Wärmetauscher-Einrichtungs-Vorstufeneinrichtung und der erfindungsgemäßen Druckgasenergiewandlungs-Wärmetauscher-Einrichtung als Zweiergruppe wird ein Ausführungsbeispiel einer erfindungsgemäßen Druckgasenergiewandlungsvorrichtung. Die Kombination dieser beiden Aggregate, d.h. der erfindungsgemäßen Druckgasenergiewandlungs-Wärmetauscher-Einrichtungs-Vorstufeneinrichtung und der erfindungsgemäßen Druckgasenergiewandlungs-Wärmetauscher-Einrichtung, und der dazugehörigen Ventile wird nun im weiteren als "Einheit" bezeichnet. Es ist möglich, die erfindungsgemäße Druckgasenergiewandlungs-Wärmetauscher-Einrichtungs-Vorstufeneinrichtung oder die erfindungsgemäße Druckgasenergiewandlungs-Wärmetauscher-Einrichtung jeweils für sich alleine oder gemeinsam zu nutzen oder unendlich viele Einheiten hintereinander bzw. parallel zu verschalten.

Insbesondere mit Bezug auf Fig. 15 und unter gleichzeitigem Rückgriff auf Fig. 14 wird nun als ein weiteres mögliches Ausführungsbeispiel der erfindungsgemäßen Druckgasenergiewandlungsvorrichtung eine solche Druckgasenergiewandlungsvorrichtung beschrieben, bei der zwei Einheiten miteinander verschaltet sind. Dabei wird im folgenden die in der linken Hälfte des Bildes von Fig. 15 zu sehende Einheit als "erste Einheit" bezeichnet, und die in der rechten Hälfte des Bildes von Fig. 15 zu sehende Einheit wird als "zweite Einheit" bezeichnet.

Es wird davon ausgegangen, dass bei beiden Einheiten in der erfindungsgemäßen Druckgasenergiewandlungs-Wärmetauscher-Einrichtungs-Vorstufeneinrichtung jeweils sowohl der siebente Kolben 110 als auch der achte Kolben 111 zunächst am oberen Totpunkt stehen. In der jeweiligen erfindungsgemäßen Druckgasenergiewandlungs-Wärmetauscher-Einrichtung der beiden Einheiten stehen der fünfte Kolben 69 und der sechste Kolben 70 jeweils am unteren Totpunkt.

Die erste Druckgaszuleitung 100 sowie die zweite Druckgaszuleitung 101 sind mit Gasdruck beaufschlagt, z.B. aus einem Vorratsbehälter über einen Druckminderer oder aus einer Druckgasenergiewandlungseinrichtung 50 wie oben beschrieben. Der eben genannte Gasdruck steht bei jeder der beiden Einheiten an insgesamt vier Zuleitungsventilen an, nämlich jeweils an einem ersten Ventil 128 eines ersten Vierfach-Ventilblocks 127 und an einem fünften Ventil 133 eines zweiten Vierfach-Ventilblocks 132. Diese eben genannten insgesamt vier Ventile, nämlich das erste Ventil 128 in der ersten Einheit, das erste Ventil 128 in der zweiten Einheit, das fünfte Ventil 133 in der ersten Einheit und das fünfte Ventil 133 in der zweiten Einheit, sind zunächst geschlossen.

Als Gas kann zum Beispiel Luft verwendet werden. Es ist aber auch genauso gut möglich, dass anstelle von oder zusammen mit Luft auch jedes beliebige andere Gas, beispielsweise Biogas und/oder Methan und/oder irgendein Kohlenwasserstoffgas und/oder ein Gemisch aus Kohlenwasserstoffgasen und/oder ein Gemisch aus Luft und einem oder mehreren Kohlenwasserstoffgasen verwendet werden kann.

Das in Fig. 15 dargestellte Ausführungsbeispiel einer erfindungsgemäßen Druckgasenergiewandlungsvorrichtung funktioniert, nach erfolgtem erstem Startdurchlauf, also im eingeschwungenen Zustand, folgendermaßen:
Da nachfolgend der bereits eingeschwungene Zustand der Druckgasenergiewandlungsvorrichtung beschrieben werden soll, startet die erste Einheit mit Takt 1, während in der zweiten Einheit Takt 4 gestartet wird (genaueres zu Takt 4 siehe weiter unten). Dabei öffnet an dem ersten Vierfach-Ventilblock 127 der ersten Einheit das erste Ventil 128, während ein zweites Ventil 129, ein drittes Ventil 130 und ein viertes Ventil 131 geschlossen sind. Dementsprechend strömt daraufhin Druckgas durch eine dreizehnte Gasleitung 144 in die fünfzehnte Kammer 113 der ersten Einheit. Der siebente Kolben 110 und der achte Kolben 111 der ersten Einheit werden zum unteren Totpunkt gedrückt. Dabei wird Öl aus der siebzehnten Kammer 115 der ersten Einheit über die siebente Flüssigkeitsanschlusseinrichtung 119, von welcher eine Öldruckleitung zum Ölmotor führt, zum Ölmotor gedrückt.

Dabei ist die fünfte Flüssigkeitsanschlusseinrichtung 121 geschlossen. Die sechste Flüssigkeitsanschlusseinrichtung 122 ist geöffnet, und über die sechste Flüssigkeitsanschlusseinrichtung 122 saugt sich die achtzehnte Kammer 116 der ersten Einheit mit Öl voll.

An dem zweiten Vierfach-Ventilblock 132 der ersten Einheit sind das fünfte Ventil 133 geschlossen, ein sechstes Ventil 134 und ein siebentes Ventil 135 offen und ein achtes Ventil 136 geschlossen. An dem ersten Vierfach-Ventilblock 127 der zweiten Einheit sind das erste Ventil 128 geschlossen und ein zweites Ventil 129, ein drittes Ventil 130 und ein viertes Ventil 131 offen. An dem zweiten Vierfach-Ventilblock 132 der zweiten Einheit sind das fünfte Ventil 133 geschlossen, ein sechstes Ventil 134 offen, ein siebentes Ventil 135 und ein achtes Ventil 136 geschlossen.

Gas aus der fünfzehnten Kammer 113, aus der dreizehnten Kammer 75 und aus der zehnten Kammer 72 der zweiten Einheit kann nun über das vierte Ventil 131 des ersten Vierfach-Ventilblocks 127 der zweiten Einheit in die Atmosphäre entweichen oder einem weiteren Verbraucher, z.B. einem Auftriebskraftwerk oder einer Turbine, zugeführt werden.

Ist die fünfzehnte Kammer 113 der ersten Einheit komplett mit Gas gefüllt, schließt das erste Ventil 128 der ersten Einheit und unterbricht die Druckluftzufuhr über die erste Druckgaszuleitung 100.

Nun beginnt Takt 2 an der ersten Einheit, und gleichzeitig beginnt Takt 1 an der zweiten Einheit. Das zweite Ventil 129 der ersten Einheit öffnet, das Druckgas aus der fünfzehnten Kammer 113 der ersten Einheit strömt über die dreizehnte Gasleitung 144 und die vierzehnte Gasleitung 139 und die neunte Gasleitung 77 in die dreizehnte Kammer 75 der ersten Einheit. Der fünfte Kolben 69 und der sechste Kolben 70 in der ersten Einheit werden zum oberen Totpunkt gedrückt. Dabei wird Öl aus der zwölften Kammer 74 der ersten Einheit über die achte Flüssigkeitsleitung 95 zum Ölmotor gedrückt. Die neunte Flüssigkeitsleitung 96 ist geschlossen, und auch die siebente Flüssigkeitsleitung 94 zum Ölmotor ist geschlossen. Die zehnte Flüssigkeitsleitung 97 ist zum Ansaugen von Öl geöffnet, so dass sich die elfte Kammer 73 der ersten Einheit über die zehnte Flüssigkeitsleitung 97 mit Öl vollsaugt. Die siebente Flüssigkeitsleitung 94 zum Ölmotor ist geschlossen. Zu dem am Anfang dieses Absatzes genannten Zeitpunkt, d.h. zu Beginn des Taktes 2 an der ersten Einheit und dem gleichzeitigen Beginn des Taktes 1 an der zweiten Einheit, muss bzw. kann davon ausgegangen werden, dass in der sechzehnten Kammer 114 der zweiten Einheit und in der vierzehnten Kammer 76 der zweiten Einheit nach Teilentspannung Gas vorhanden ist. Dieses Gas wird über eine neunzehnte Gasleitung 145 und die vierzehnte Gasanschlusseinrichtung 99 der zehnten Kammer 72 der ersten Einheit zugeführt. Dabei sind am zweiten Vierfach-Ventilblock 132 der zweiten Einheit das fünfte Ventil 133 geschlossen, das sechste Ventil 134 offen, das siebente Ventil 135 offen und das achte Ventil 136 geschlossen.

Nun beginnt Takt 3 an der ersten Einheit, und gleichzeitig beginnt Takt 2 an der zweiten Einheit. Am zweiten Vierfach-Ventilblock 132 der ersten Einheit öffnet das fünfte Ventil 133, und es strömt daraufhin Druckgas durch die achtzehnte Gasleitung 143 in die sechzehnte Kammer 114 der ersten Einheit. Das sechste Ventil 134 der ersten Einheit ist geschlossen.

Das sechste Ventil 134, das siebente Ventil 135 und das achte Ventil 136 der zweiten Einheit sind geöffnet, so dass die zehnte Kammer 72 der ersten Einheit und die neunte Kammer 71 der zweiten Einheit entlüften können bzw. deren Gas einem weiteren Verbraucher zugeführt werden kann. Der achte Kolben 111 und der siebente Kolben 110 der ersten Einheit werden zum oberen Totpunkt gedrückt. Dabei wird Öl aus der achtzehnten Kammer 116 der ersten Einheit über die achte Flüssigkeitsanschlusseinrichtung 120 und eine daran angeschlossene Öldruckleitung zum Ölmotor gedrückt.

Die fünfte Flüssigkeitsanschlusseinrichtung 121 ist offen, so dass sich die siebzehnte Kammer 115 der ersten Einheit über die fünfte Flüssigkeitsanschlusseinrichtung 121 mit Öl vollsaugen kann. Die siebente Flüssigkeitsanschlusseinrichtung 119 und die sechste Flüssigkeitsanschlusseinrichtung 122 sind geschlossen.

Bei Beginn von Takt 2 der zweiten Einheit und von Takt 3 der ersten Einheit öffnet beim ersten Vierfach-Ventilblock 127 der ersten Einheit das dritte Ventil 130, und das immer noch unter Druck stehende Gas aus der dreizehnten Kammer 75 der ersten Einheit sowie das nun durch die Aufwärtsbewegung des siebenten Kolbens 110 und des achten Kolbens 111 der ersten Einheit - ausgelöst durch Takt 3 - verdrängte Gas aus der fünfzehnten Kammer 113 der ersten Einheit strömt nun über eine fünfzehnte Gasleitung 142 zur vierzehnten Gasanschlusseinrichtung 99 in die zehnte Kammer 72 der zweiten Einheit und unterstützt dort die Bewegung des fünften Kolbens 69 und des sechsten Kolbens 70 zum oberen Totpunkt während des Taktes 2 der zweiten Einheit. Hat die Druckgasenergiewandlungs-Wärmetauscher-Einrichtungs-Vorstufeneinrichtung der ersten Einheit den Takt 3 mit Erreichen des oberen Totpunktes des siebenten Kolbens 110 und des achten Kolbens 111 abgeschlossen, dann beginnt bei der ersten Einheit Takt 4 und bei der zweiten Einheit Takt 3, d.h., bei der ersten Einheit öffnet am zweiten Vierfach-Ventilblock 132 das sechste Ventil 134, während das fünfte Ventil 133, das siebente Ventil 135 und das achte Ventil 136 geschlossen sind. Dadurch strömt jetzt Druckgas aus der sechzehnten Kammer 114 der ersten Einheit über die sechzehnte Gasleitung 140 und über die zehnte Gasleitung 78 in die vierzehnte Kammer 76 der ersten Einheit und es werden der fünfte Kolben 69 und der sechste Kolben 70 der ersten Einheit zum unteren Totpunkt gedrückt. Dabei wird Öl aus der elften Kammer 73 über die siebente Flüssigkeitsleitung 94 zum Ölmotor gedrückt.

Die zehnte Flüssigkeitsleitung 97 ist geschlossen. Auch die achte Flüssigkeitsleitung 95 zum Ölmotor hin ist geschlossen.

Die neunte Flüssigkeitsleitung 96 ist geöffnet, so dass sich die zwölfte Kammer 74 der ersten Einheit über diese neunte Flüssigkeitsleitung 96 mit Öl vollsaugen kann.

Bei Beginn des Taktes 4 der ersten Einheit und des Taktes 3 der zweiten Einheit öffnet beim ersten Vierfach-Ventilblock 127 der ersten Einheit das vierte Ventil 131, und das Restdruckgas aus der dreizehnten Kammer 75 der ersten Einheit und der zehnten Kammer 72 der zweiten Einheit kann beispielsweise in die Atmosphäre entlassen werden oder beispielsweise einem weiteren Verbraucher zugeführt werden.

Jetzt beginnt die erste Einheit wieder mit Takt 1, und die zweite Einheit beginnt mit Takt 4. Dabei wird beim ersten Vierfach-Ventilblock 127 der zweiten Einheit das vierte Ventil 131 geöffnet und so das Gas aus der dreizehnten Kammer 75 der zweiten Einheit sowie das Gas aus der neunten Kammer 71 der ersten Einheit ins Freie entlassen oder weiterer Verwendung zugeführt. Ferner wird beim zweiten Vierfach-Ventilblock 132 der ersten Einheit das siebente Ventil 135 geöffnet, und über eine siebzehnte Gasleitung 141 und die dreizehnte Gasanschlusseinrichtung 98 wird der neunten Kammer 71 der zweiten Einheit das teilentspannte Druckgas aus der sechzehnten Kammer 114 und der vierzehnten Kammer 76 der ersten Einheit zugeführt und unterstützt die Bewegung des fünften Kolbens 69 und des sechsten Kolbens 70 der zweiten Einheit in Richtung des unteren Totpunktes während des Taktes 4. Ist der Takt 4 der zweiten Einheit beendet, d.h. beginnt an der zweiten Einheit wieder Takt 1 und an der ersten Einheit schon wieder Takt 2, öffnet beim zweiten Vierfach-Ventilblock 132 der ersten Einheit das achte Ventil 136 und entlässt das Restdruckgas in die Atmosphäre oder führt es dem nächsten Verbraucher zu.

Dieser in den vorangegangenen Absätzen zur Funktionsweise des in Fig. 15 dargestellten Ausführungsbeispiels der erfindungsgemäßen Druckgasenergiewandlungsvorrichtung beschriebene Ablauf wiederholt sich nun ständig. Das Anlangen der Kolben an den Endpunkten kann mit einem Wegmesssystem z.B. an den Kolbenstangen in den Mittelteilen oder mit Kontaktschaltern in den Stirnwänden bzw. mit berührungslosen Tastern festgestellt werden. Diese Schalter lösen die nächste Ventilschaltung aus.

Die Reihe der Einheiten lässt sich beliebig erweitern und somit der Umfang der erfindungsgemäßen Druckgasenergiewandlungsvorrichtung beliebig vergrößern.

Für die in der vorliegenden Patentanmeldung beschriebenen und beanspruchten Vorrichtungen, also für erfindungsgemäße hydraulische Kolbeneinrichtungen und für erfindungsgemäße Druckgasenergiewandlungseinrichtungen, gibt es diverse unterschiedliche praktische Anwendungsmöglichkeiten auf ganz unterschiedlichen Feldern der Technik. Nur als eines von sehr vielen weiteren möglichen praktischen Anwendungsbeispielen sei hier abschließend ganz am Rande erwähnt, dass sich die eben genannten Vorrichtungen jeweils sowohl einzeln als auch in unterschiedlichen Kombinationen beispielsweise zur Realisierung von druckgasbasierten, beispielsweise druckluftbasierten, Antrieben für Landfahrzeuge und/oder für Wasserfahrzeuge und/oder für Luftfahrzeuge eignen. Nähere Details zu derartigen Antrieben bzw. Fahrzeugen sind Gegenstand anderer Patentanmeldungen des Erfinders und Anmelders der vorliegenden Patentanmeldung.

### Bezugszeichenliste

- 1: hydraulische Kolbeneinrichtung
- 2: erster Hohlzylinder
- 3: erste Stirnwand
- 4: zweite Stirnwand
- 5: zweiter Hohlzylinder
- 6: dritte Stirnwand
- 7: vierte Stirnwand
- 8: dritter Hohlzylinder
- 9: fünfte Stirnwand
- 10: sechste Stirnwand
- 11: vierter Hohlzylinder
- 12: siebente Stirnwand
- 13: achte Stirnwand
- 14: Kolbenstange
- 15: erster Kolben
- 16: zweiter Kolben
- 17: dritter Kolben
- 18: vierter Kolben
- 19: erste Kammer
- 20: zweite Kammer
- 21: dritte Kammer
- 22: vierte Kammer
- 23: fünfte Kammer
- 24: sechste Kammer
- 25: siebente Kammer
- 26: achte Kammer
- 27: erste Flüssigkeitsanschlusseinrichtung
- 28: zweite Flüssigkeitsanschlusseinrichtung
- 29: dritte Flüssigkeitsanschlusseinrichtung
- 30: vierte Flüssigkeitsanschlusseinrichtung
- 31: erste Gasanschlusseinrichtung
- 32: zweite Gasanschlusseinrichtung
- 33: dritte Gasanschlusseinrichtung
- 34: vierte Gasanschlusseinrichtung
- 35: fünfte Gasanschlusseinrichtung
- 36: erste Gasleitung
- 37: zweite Gasleitung
- 38: sechste Gasanschlusseinrichtung
- 39: siebente Gasanschlusseinrichtung
- 40: achte Gasanschlusseinrichtung
- 41: neunte Gasanschlusseinrichtung
- 42: zehnte Gasanschlusseinrichtung
- 43: dritte Gasleitung
- 44: vierte Gasleitung
- 45: elfte Gasanschlusseinrichtung
- 46: zwölfte Gasanschlusseinrichtung
- 47: erste Flüssigkeitsleitung
- 48: durch strömende Flüssigkeit anzutreibende Maschine
- 49: zweite Flüssigkeitsleitung
- 50: Druckgasenergiewandlungseinrichtung
- 51: fünfte Gasleitung
- 52: erste Druckregelventileinrichtung, welche Gasdruck und Flüssigkeitsdruck gegeneinander regelt
- 53: sechste Gasleitung
- 54: dritte Flüssigkeitsleitung
- 55: siebente Gasleitung
- 56: zweite Druckregelventileinrichtung, welche Gasdruck und Flüssigkeitsdruck gegeneinander regelt
- 57: achte Gasleitung
- 58: vierte Flüssigkeitsleitung
- 59: Verbrauchereinrichtung, die Gas thermisch und/oder mechanisch und/oder chemisch verwendet
- 64: erstes Mittelteil
- 65: zweites Mittelteil
- 66: sechster Hohlzylinder
- 67: siebenter Hohlzylinder
- 68: achter Hohlzylinder
- 69: fünfter Kolben
- 70: sechster Kolben
- 71: neunte Kammer
- 72: zehnte Kammer
- 73: elfte Kammer
- 74: zwölfte Kammer
- 75: dreizehnte Kammer
- 76: vierzehnte Kammer
- 77: neunte Gasleitung
- 78: zehnte Gasleitung
- 79: elfte Stirnwand
- 80: zwölfte Stirnwand
- 81: fünfte Flüssigkeitsleitung
- 82: sechste Flüssigkeitsleitung
- 83: erste Gasdurchleitungseinrichtung
- 84: zweite Gasdurchleitungseinrichtung
- 85: Flüssigkeitsdurchleitungseinrichtung
- 85a: dritter Kanal
- 85b: vierter Kanal
- 86: erster Kanal
- 87: erstes Steigrohr
- 88: zweites Steigrohr
- 89: drittes Steigrohr
- 90: zweiter Kanal
- 91: viertes Steigrohr
- 92: fünftes Steigrohr
- 93: sechstes Steigrohr
- 94: siebente Flüssigkeitsleitung
- 95: achte Flüssigkeitsleitung
- 96: neunte Flüssigkeitsleitung
- 97: zehnte Flüssigkeitsleitung
- 98: dreizehnte Gasanschlusseinrichtung
- 99: vierzehnte Gasanschlusseinrichtung
- 100: erste Druckgaszuleitung
- 101: zweite Druckgaszuleitung
- 102: elfte Gasleitung
- 103: zwölfte Gasleitung
- 104: erste Abluftleitung
- 105: zweite Abluftleitung
- 106: neunter Hohlzylinder
- 107: dreizehnte Stirnwand
- 108: vierzehnte Stirnwand
- 109: zweite Kolbenstange
- 110: siebenter Kolben
- 111: achter Kolben
- 112: drittes Mittelteil
- 113: fünfzehnte Kammer
- 114: sechzehnte Kammer
- 115: siebzehnte Kamer
- 116: achtzehnte Kammer
- 117: fünfzehnte Gasanschlusseinrichtung
- 118: sechzehnte Gasanschlusseinrichtung
- 119: siebente Flüssigkeitsanschlusseinrichtung
- 120: achte Flüssigkeitsanschlusseinrichtung
- 121: fünfte Flüssigkeitsanschlusseinrichtung
- 122: sechste Flüssigkeitsanschlusseinrichtung
- 123: erstes Kolbenrohr
- 124: zehnter Hohlzylinder
- 125: elfte Flüssigkeitsleitung
- 126: zwölfte Flüssigkeitsleitung
- 127: erster Vierfach-Ventilblock
- 128: erstes Ventil
- 129: zweites Ventil
- 130: drittes Ventil
- 131: viertes Ventil
- 132: zweiter Vierfach-Ventilblock
- 133: fünftes Ventil
- 134: sechstes Ventil
- 135: siebentes Ventil
- 136: achtes Ventil
- 137: erstes Ausführungsbeispiel einer erfindungsgemäßen Druckgasenergiewandlungs-Wärmetauscher-Einrichtungs-Vorstufeneinrichtung
- 138: zweites Ausführungsbeispiel einer erfindungsgemäßen Druckgasenergiewandlungs-Wärmetauscher-Einrichtungs-Vorstufeneinrichtung
- 139: vierzehnte Gasleitung
- 140: sechzehnte Gasleitung
- 141: siebzehnte Gasleitung
- 142: fünfzehnte Gasleitung
- 143: achtzehnte Gasleitung
- 144: dreizehnte Gasleitung
- 145: neunzehnte Gasleitung
- 146: weiteres Ausführungsbeispiel einer erfindungsgemäßen Druckgasenergiewandlungs-Wärmetauscher-Einrichtung
- 147: dreizehnte Flüssigkeitsleitung
- 148: erste Strömungssteuerungsventileinrichtung
- 149: drittes Ausführungsbeispiel einer erfindungsgemäßen Druckgasenergiewandlungs-wärmetauscher-Einrichtungs-Vorstufeneinrichtung
- 150: vierzehnte Flüssigkeitsleitung
- 151: zweite Strömungssteuerungsventileinrichtung

## Patentansprüche

1. Hydraulische Kolbeneinrichtung (1), welche mindestens zum Zwecke einer Gasverdichtung verwendbar ist, wobei die hydraulische Kolbeneinrichtung (1) aufweist
- einen ersten Hohlzylinder (2), welcher an seinem einen Ende eine erste Stirnwand (3) und an seinem anderen Ende eine zweite Stirnwand (4) aufweist,
- einen zweiten Hohlzylinder (5), welcher an seinem einen Ende eine dritte Stirnwand (6) und an seinem anderen Ende eine vierte Stirnwand (7) aufweist,
- einen dritten Hohlzylinder (8), welcher an seinem einen Ende eine fünfte Stirnwand (9) und an seinem anderen Ende eine sechste Stirnwand (10) aufweist,
- einen vierten Hohlzylinder (11), welcher an seinem einen Ende eine siebente Stirnwand (12) und an seinem anderen Ende eine achte Stirnwand (13) aufweist, und
- eine Kolbenstange (14), auf welcher ein erster Kolben (15), ein zweiter Kolben (16), ein dritter Kolben (17) und ein vierter Kolben (18) fixiert sind,
wobei der erste Hohlzylinder (2), der zweite Hohlzylinder (5), der dritte Hohlzylinder (8) und der vierte Hohlzylinder (11) derart in einer Reihe angeordnet sind, dass
- die zweite Stirnwand (4) und die dritte Stirnwand (6) einander zugewandt sind,
- die vierte Stirnwand (7) und die fünfte Stirnwand (9) einander zugewandt sind,
- die sechste Stirnwand (10) und die siebente Stirnwand (12) einander zugewandt sind und
- dementsprechend die erste Stirnwand (3) ein Ende der genannten Reihe von Hohlzylindern (2, 5, 8, 11) und die achte Stirnwand (13) ein anderes Ende der genannten Reihe von Hohlzylindern (2, 5, 8, 11) bilden,
und wobei
- die Kolbenstange (14) mit den auf ihr fixierten vier Kolben (15, 16, 17, 18) so angeordnet ist, dass sich ihr eines Ende im ersten Hohlzylinder (2) befindet und sich ihr anderes Ende im vierten Hohlzylinder (11) befindet und sich die Kolbenstange (14) dementsprechend durch eine Öffnung in der zweiten Stirnwand (4), durch eine Öffnung in der dritten Stirnwand (6), durch den zweiten Hohlzylinder (5), durch eine Öffnung in der vierten Stirnwand (7), durch eine Öffnung in der fünften Stirnwand (9), durch den dritten Hohlzylinder (8), durch eine Öffnung in der sechsten Stirnwand (10) und durch eine Öffnung in der siebenten Stirnwand (12) hindurch erstreckt,
- der erste Kolben (15) sich im ersten Hohlzylinder (2) befindet und diesen in eine erste Kammer (19) und eine zweite Kammer (20) teilt, wobei die erste Kammer (19) und die zweite Kammer (20) durch den ersten Kolben (15) gegeneinander abgedichtet sind,
- der zweite Kolben (16) sich im zweiten Hohlzylinder (5) befindet und diesen in eine dritte Kammer (21) und eine vierte Kammer (22) teilt, wobei die dritte Kammer (21) und die vierte Kammer (22) durch den zweiten Kolben (16) gegeneinander abgedichtet sind,
- der dritte Kolben (17) sich im dritten Hohlzylinder (8) befindet und diesen in eine fünfte Kammer (23) und eine sechste Kammer (24) teilt, wobei die fünfte Kammer (23) und die sechste Kammer (24) durch den dritten Kolben (17) gegeneinander abgedichtet sind,
- der vierte Kolben (18) sich im vierten Hohlzylinder (11) befindet und diesen in eine siebente Kammer (25) und eine achte Kammer (26) teilt, wobei die siebente Kammer (25) und die achte Kammer (26) durch den vierten Kolben (18) gegeneinander abgedichtet sind,
- die Kolbenstange (14) mit den auf ihr fixierten vier Kolben (15, 16, 17, 18) in Längsrichtung hin und her beweglich ist, so dass die Größe des jeweiligen Rauminhalts jeder einzelnen der acht Kammern (19, 20, 21, 22, 23, 24, 25, 26) entsprechend dem jeweiligen Kolbenhub veränderlich ist,
- sowohl die vierte Kammer (22) als auch die fünfte Kammer (23) jeweils zur vollständigen Befüllung mit Flüssigkeit vorgesehen sind,
- sowohl die erste Kammer (19) als auch die zweite Kammer (20) als auch die dritte Kammer (21) als auch die sechste Kammer (24) als auch die siebente Kammer (25) als auch die achte Kammer (26) vollständig mit Gas gefüllt sind,
- die vierte Kammer (22) mit einer ersten Flüssigkeitsanschlusseinrichtung (27) und mit einer zweiten Flüssigkeitsanschlusseinrichtung (28) versehen ist,
- die fünfte Kammer (23) mit einer dritten Flüssigkeitsanschlusseinrichtung (29) und mit einer vierten Flüssigkeitsanschlusseinrichtung (30) versehen ist,
- die erste Kammer (19) mit einer ersten Gasanschlusseinrichtung (31) und mit einer zweiten Gasanschlusseinrichtung (32) versehen ist,
- die siebente Kammer (25) mit einer dritten Gasanschlusseinrichtung (33) und mit einer vierten Gasanschlusseinrichtung (34) versehen ist,
- die sechste Kammer (24) mit einer fünften Gasanschlusseinrichtung (35) versehen ist,
- eine erste Gasleitung (36) von der zweiten Gasanschlusseinrichtung (32) zu der fünften Gasanschlusseinrichtung (35) führt,
- eine zweite Gasleitung (37) von der vierten Gasanschlusseinrichtung (34) zu der fünften Gasanschlusseinrichtung (35) führt,
- die zweite Kammer (20) mit einer sechsten Gasanschlusseinrichtung (38) und mit einer siebenten Gasanschlusseinrichtung (39) versehen ist,
- die achte Kammer (26) mit einer achten Gasanschlusseinrichtung (40) und mit einer neunten Gasanschlusseinrichtung (41) versehen ist,
- die dritte Kammer (21) mit einer zehnten Gasanschlusseinrichtung (42) versehen ist,
- eine dritte Gasleitung (43) von der siebenten Gasanschlusseinrichtung (39) zu der zehnten Gasanschlusseinrichtung (42) führt,
- eine vierte Gasleitung (44) von der neunten Gasanschlusseinrichtung (41) zu der zehnten Gasanschlusseinrichtung (42) führt,
- die dritte Kammer (21) mit einer elften Gasanschlusseinrichtung (45) versehen ist,
- die sechste Kammer (24) mit einer zwölften Gasanschlusseinrichtung (46) versehen ist,
- die erste Gasanschlusseinrichtung (31) mittels einer zu ihr gehörigen Ventileinrichtung so eingerichtet ist, dass die erste Gasanschlusseinrichtung (31) bei entsprechend geeigneter Ventileinstellung zum Ansaugen von Gas in die erste Kammer (19) dient,
- die dritte Gasanschlusseinrichtung (33) mittels einer zu ihr gehörigen Ventileinrichtung so eingerichtet ist, dass die dritte Gasanschlusseinrichtung (33) bei entsprechend geeigneter Ventileinstellung zum Ansaugen von Gas in die siebente Kammer (25) dient,
- die sechste Gasanschlusseinrichtung (38) mittels einer zu ihr gehörigen Ventileinrichtung so eingerichtet ist, dass die sechste Gasanschlusseinrichtung (38) bei entsprechend geeigneter Ventileinstellung zum Ansaugen von Gas in die zweite Kammer (20) dient,
- die achte Gasanschlusseinrichtung (40) mittels einer zu ihr gehörigen Ventileinrichtung so eingerichtet ist, dass die achte Gasanschlusseinrichtung (40) bei entsprechend geeigneter Ventileinstellung zum Ansaugen von Gas in die achte Kammer (26) dient,
- die zweite Gasanschlusseinrichtung (32) mittels einer zu ihr gehörigen Ventileinrichtung so eingerichtet ist, dass die zweite Gasanschlusseinrichtung (32) bei entsprechend geeigneter Ventileinstellung zum Abführen komprimierten Gases aus der ersten Kammer (19) in die erste Gasleitung (36) dient,
- die vierte Gasanschlusseinrichtung (34) mittels einer zu ihr gehörigen Ventileinrichtung so eingerichtet ist, dass die vierte Gasanschlusseinrichtung (34) bei entsprechend geeigneter Ventileinstellung zum Abführen komprimierten Gases aus der siebenten Kammer (25) in die zweite Gasleitung (37) dient,
- die fünfte Gasanschlusseinrichtung (35) mittels einer zu ihr gehörigen Ventileinrichtung so eingerichtet ist, dass die fünfte Gasanschlusseinrichtung (35) bei entsprechend geeigneter Ventileinstellung zum Einführen komprimierten Gases aus der ersten Gasleitung (36) bzw. aus der zweiten Gasleitung (37) in die sechste Kammer (24) dient,
- die siebente Gasanschlusseinrichtung (39) mittels einer zu ihr gehörigen Ventileinrichtung so eingerichtet ist, dass die siebente Gasanschlusseinrichtung (39) bei entsprechend geeigneter Ventileinstellung zum Abführen komprimierten Gases aus der zweiten Kammer (20) in die dritte Gasleitung (43) dient,
- die neunte Gasanschlusseinrichtung (41) mittels einer zu ihr gehörigen Ventileinrichtung so eingerichtet ist, dass die neunte Gasanschlusseinrichtung (41) bei entsprechend geeigneter Ventileinstellung zum Abführen komprimierten Gases aus der achten Kammer (26) in die vierte Gasleitung (44) dient,
- die zehnte Gasanschlusseinrichtung (42) mittels einer zu ihr gehörigen Ventileinrichtung so eingerichtet ist, dass die zehnte Gasanschlusseinrichtung (42) bei entsprechend geeigneter Ventileinstellung zum Einführen komprimierten Gases aus der dritten Gasleitung (43) bzw. aus der vierten Gasleitung (44) in die dritte Kammer (21) dient,
- die elfte Gasanschlusseinrichtung (45) mittels einer zu ihr gehörigen Ventileinrichtung so eingerichtet ist, dass die elfte Gasanschlusseinrichtung (45) bei entsprechend geeigneter Ventileinstellung zum Abführen komprimierten Gases aus der dritten Kammer (21) dient,
- die zwölfte Gasanschlusseinrichtung (46) mittels einer zu ihr gehörigen Ventileinrichtung so eingerichtet ist, dass die zwölfte Gasanschlusseinrichtung (46) bei entsprechend geeigneter Ventileinstellung zum Abführen komprimierten Gases aus der sechsten Kammer (24) dient,
- die erste Flüssigkeitsanschlusseinrichtung (27) mittels einer zu ihr gehörigen Ventileinrichtung so eingerichtet ist, dass die erste Flüssigkeitsanschlusseinrichtung (27) bei entsprechend geeigneter Ventileinstellung als Flüssigkeitseinlass zum Einpumpen von Flüssigkeit in die vierte Kammer (22) dient,
- die dritte Flüssigkeitsanschlusseinrichtung (29) mittels einer zu ihr gehörigen Ventileinrichtung so eingerichtet ist, dass die dritte Flüssigkeitsanschlusseinrichtung (29) bei entsprechend geeigneter Ventileinstellung als Flüssigkeitseinlass zum Einpumpen von Flüssigkeit in die fünfte Kammer (23) dient,
- die zweite Flüssigkeitsanschlusseinrichtung (28) mittels einer zu ihr gehörigen Ventileinrichtung so eingerichtet ist, dass die zweite Flüssigkeitsanschlusseinrichtung (28) bei entsprechend geeigneter Ventileinstellung als Flüssigkeitsauslass zum Herausdrücken von Flüssigkeit aus der vierten Kammer (22) dient, und
- die vierte Flüssigkeitsanschlusseinrichtung (30) mittels einer zu ihr gehörigen Ventileinrichtung so eingerichtet ist, dass die vierte Flüssigkeitsanschlusseinrichtung (30) bei entsprechend geeigneter Ventileinstellung als Flüssigkeitsauslass zum Herausdrücken von Flüssigkeit aus der vierten Kammer (23) dient.

2. Hydraulische Kolbeneinrichtung (1) nach Anspruch 1, **dadurch gekennzeichnet, dass** sie so eingerichtet ist, dass aus der elften Gasanschlusseinrichtung (45) abgeführtes komprimiertes Gas einem Verbraucher komprimierten Gases und/oder einer Druckgasspeichereinrichtung zugeführt wird.

3. Hydraulische Kolbeneinrichtung (1) nach einem der vorhergehenden Ansprüche, **dadurch gekennzeichnet, dass** sie so eingerichtet ist, dass aus der zwölften Gasanschlusseinrichtung (46) abgeführtes komprimiertes Gas einem Verbraucher komprimierten Gases und/oder einer Druckgasspeichereinrichtung zugeführt wird.

4. Hydraulische Kolbeneinrichtung (1) nach einem der vorhergehenden Ansprüche, **dadurch gekennzeichnet, dass** sie so eingerichtet ist, dass aus der zweiten Flüssigkeitsanschlusseinrichtung (28) herausgedrückte Flüssigkeit einer Flüssigkeitsspeichereinrichtung zugeführt wird.

5. Hydraulische Kolbeneinrichtung (1) nach einem der vorhergehenden Ansprüche, **dadurch gekennzeichnet, dass** sie so eingerichtet ist, dass aus der vierten Flüssigkeitsanschlusseinrichtung (30) herausgedrückte Flüssigkeit einer Flüssigkeitsspeichereinrichtung zugeführt wird.

6. Hydraulische Kolbeneinrichtung (1) nach Anspruch 4 oder nach Anspruch 5, **dadurch gekennzeichnet, dass** sie so eingerichtet ist, dass sie der Flüssigkeitsspeichereinrichtung Flüssigkeit zum Einpumpen in die erste Flüssigkeitsanschlusseinrichtung (27) und/oder in die dritte Flüssigkeitsanschlusseinrichtung (29) entnehmen kann.

7. Hydraulische Kolbeneinrichtung (1) nach einem der vorhergehenden Ansprüche, **dadurch gekennzeichnet, dass**
- alle vier Hohlzylinder (2, 5, 8, 11) jeweils die gleiche Länge haben,
- der zweite Hohlzylinder (5) und der dritte Hohlzylinder (8) jeweils den gleichen Durchmesser haben,
- der erste Hohlzylinder (2) und der vierte Hohlzylinder (11) jeweils den gleichen Durchmesser haben und
- der Durchmesser des ersten Hohlzylinders (2) größer ist als der Durchmesser des zweiten Hohlzylinders (5).

8. Hydraulische Kolbeneinrichtung (1) nach Anspruch 7, **dadurch gekennzeichnet, dass** der Durchmesser des ersten Hohlzylinders (2) mindestens doppelt so groß ist wie der Durchmesser des zweiten Hohlzylinders (5).

9. Hydraulische Kolbeneinrichtung (1) nach einem der vorhergehenden Ansprüche, **dadurch gekennzeichnet, dass** der erste Hohlzylinder (2) und der zweite Hohlzylinder (5) unmittelbar aneinander ansitzen, so dass die zweite Stirnwand (4) und die dritte Stirnwand (6) zumindest teilweise zusammenfallen.

10. Hydraulische Kolbeneinrichtung (1) nach einem der vorhergehenden Ansprüche, **dadurch gekennzeichnet, dass** der dritte Hohlzylinder (8) und der vierte Hohlzylinder (11) unmittelbar aneinander ansitzen, so dass die sechste Stirnwand (10) und die siebente Stirnwand (12) zumindest teilweise zusammenfallen.

11. Hydraulische Kolbeneinrichtung (1) nach einem der vorhergehenden Ansprüche, **dadurch gekennzeichnet, dass** das Gas Luft und/oder Biogas und/oder Methan und/oder irgendein Kohlenwasserstoffgas und/oder ein Gemisch aus Kohlenwasserstoffgasen und/oder ein Gemisch aus Luft und einem oder mehreren Kohlenwasserstoffgasen ist.

12. Hydraulische Kolbeneinrichtung (1) nach einem der vorhergehenden Ansprüche, **dadurch gekennzeichnet, dass** die Flüssigkeit Öl ist.

13. Hydraulische Kolbeneinrichtung (1) nach einem der vorhergehenden Ansprüche, **dadurch gekennzeichnet, dass** der Durchmesser der Kolbenstange (14) über die Länge der Kolbenstange (14) hinweg variiert derart, dass
- die Kolbenstange (14) in ihrem Bereich zwischen dem ersten Kolben (15) und dem zweiten Kolben (16) einen anderen Durchmesser hat als in ihrem Bereich zwischen dem zweiten Kolben (16) und dem dritten Kolben (17) und
- die Kolbenstange (14) in ihrem Bereich zwischen dem dritten Kolben (17) und dem vierten Kolben (18) einen anderen Durchmesser hat als in ihrem Bereich zwischen dem zweiten Kolben (16) und dem dritten Kolben (17).

14. Druckgasenergiewandlungseinrichtung (50) mit
- einer hydraulischen Kolbeneinrichtung (1) nach Anspruch 1,
- einer Druckgasspeichereinrichtung und
- einer Flüssigkeitsspeichereinrichtung,
wobei
- die elfte Gasanschlusseinrichtung (45) an die Druckgasspeichereinrichtung angeschlossen und mittels der zu der elften Gasanschlusseinrichtung (45) gehörigen Ventileinrichtung so eingerichtet ist, dass die elfte Gasanschlusseinrichtung (45) bei entsprechend geeigneter Ventileinstellung zum Einführen komprimierten Gases aus der Druckgasspeichereinrichtung in die dritte Kammer (21) dient,
- die zwölfte Gasanschlusseinrichtung (46) an die Druckgasspeichereinrichtung angeschlossen und mittels der zu der zwölften Gasanschlusseinrichtung (46) gehörigen Ventileinrichtung so eingerichtet ist, dass die zwölfte Gasanschlusseinrichtung (46) bei entsprechend geeigneter Ventileinstellung zum Einführen komprimierten Gases aus der Druckgasspeichereinrichtung in die sechste Kammer (24) dient,
- die zweite Flüssigkeitsanschlusseinrichtung (28) an die Flüssigkeitsspeichereinrichtung angeschlossen und mittels der zu der zweiten Flüssigkeitsanschlusseinrichtung (28) gehörigen Ventileinrichtung so eingerichtet ist, dass die zweite Flüssigkeitsanschlusseinrichtung (28) bei entsprechend geeigneter Ventileinstellung zum Ansaugen von Flüssigkeit aus der Flüssigkeitsspeichereinrichtung in die vierte Kammer (22) dient,
- die vierte Flüssigkeitsanschlusseinrichtung (30) an die Flüssigkeitsspeichereinrichtung angeschlossen und mittels der zu der vierten Flüssigkeitsanschlusseinrichtung (30) gehörigen Ventileinrichtung so eingerichtet ist, dass die vierte Flüssigkeitsanschlusseinrichtung (30) bei entsprechend geeigneter Ventileinstellung zum Ansaugen von Flüssigkeit aus der Flüssigkeitsspeichereinrichtung in die fünfte Kammer (23) dient,
- die erste Flüssigkeitsanschlusseinrichtung (27) mittels der zu ihr gehörigen Ventileinrichtung so eingerichtet ist, dass die erste Flüssigkeitsanschlusseinrichtung (27) bei entsprechend geeigneter Ventileinstellung zum Einleiten von Flüssigkeit aus der vierten Kammer (22) in eine erste Flüssigkeitsleitung (47) dient, welche so eingerichtet ist, dass sie in sie eingeleitete und durch sie hindurchströmende Flüssigkeit zu einer durch die strömende Flüssigkeit anzutreibenden Maschine (48) leitet, wobei diese Maschine (48) beispielsweise eine Antriebseinrichtung für einen Elektroenergiegenerator sein kann,
- die dritte Flüssigkeitsanschlusseinrichtung (29) mittels der zu ihr gehörigen Ventileinrichtung so eingerichtet ist, dass die dritte Flüssigkeitsanschlusseinrichtung (29) bei entsprechend geeigneter Ventileinstellung zum Einleiten von Flüssigkeit aus der fünften Kammer (23) in eine zweite Flüssigkeitsleitung (49) dient, welche so eingerichtet ist, dass sie in sie eingeleitete und durch sie hindurchströmende Flüssigkeit zu einer durch die strömende Flüssigkeit anzutreibenden Maschine (48), welche beispielsweise eine Antriebseinrichtung für einen Elektroenergiegenerator sein kann, leitet,
- die zehnte Gasanschlusseinrichtung (42) mittels der zu ihr gehörigen Ventileinrichtung so eingerichtet ist, dass die zehnte Gasanschlusseinrichtung (42) bei entsprechend geeigneter Ventileinstellung zum Einleiten von Gas aus der dritten Kammer (21) in eine fünfte Gasleitung (51) dient,
- eine erste Druckregelventileinrichtung (52) vorhanden ist, welche Gasdruck und Flüssigkeitsdruck gegeneinander regelt, gasseitig mittels einer sechsten Gasleitung (53) an die fünfte Gasleitung (51) angeschlossen ist und flüssigkeitsseitig mittels einer dritten Flüssigkeitsleitung (54) an die zweite Flüssigkeitsleitung (49) angeschlossen ist,
- die fünfte Gasanschlusseinrichtung (35) mittels der zu ihr gehörigen Ventileinrichtung so eingerichtet ist, dass die fünfte Gasanschlusseinrichtung (35) bei entsprechend geeigneter Ventileinstellung zum Einleiten von Gas aus der sechsten Kammer (24) in eine siebente Gasleitung (55) dient,
- eine zweite Druckregelventileinrichtung (56) vorhanden ist, welche Gasdruck und Flüssigkeitsdruck gegeneinander regelt, gasseitig mittels einer achten Gasleitung (57) an die siebente Gasleitung (55) angeschlossen ist und flüssigkeitsseitig mittels einer vierten Flüssigkeitsleitung (58) an die erste Flüssigkeitsleitung (47) angeschlossen ist,
- die fünfte Gasleitung (51) ferner zu einer, aus der fünften Gasleitung (51) stammendes Gas thermisch und/oder mechanisch und/oder chemisch verwendenden, Verbrauchereinrichtung (59) führt und
- die siebente Gasleitung (55) ferner zu einer, aus der siebenten Gasleitung (55) stammendes Gas thermisch und/oder mechanisch und/oder chemisch verwendenden, Verbrauchereinrichtung (59) führt.

## Claims

1. Hydraulic piston device (1) which is usable at least for the purpose of gas compression, wherein the hydraulic piston device (1) has
- a first hollow cylinder (2) which has a first end wall (3) at its one end and a second end wall (4) at its other end,
- a second hollow cylinder (5) which has a third end wall (6) at its one end and a fourth end wall (7) at its other end,
- a third hollow cylinder (8) which has a fifth end wall (9) at its one end and a sixth end wall (10) at its other end,
- a fourth hollow cylinder (11) which has a seventh end wall (12) at its one end and an eighth end wall (13) at its other end, and
- a piston rod (14) on which a first piston (15), a second piston (16), a third piston (17) and a fourth piston (18) are fixed,
wherein the first hollow cylinder (2), the second hollow cylinder (5), the third hollow cylinder (8) and the fourth hollow cylinder (11) are arranged in a row in such a manner that
- the second end wall (4) and the third end wall (6) face each other,
- the fourth end wall (7) and the fifth end wall (9) face each other,
- the sixth end wall (10) and the seventh end wall (12) face each other, and
- accordingly the first end wall (3) forms one end of the above-mentioned row of hollow cylinders (2, 5, 8, 11) and the eighth end wall (13) forms another end of the above-mentioned row of hollow cylinders (2, 5, 8, 11),
and wherein
- the piston rod (14) with the four pistons (15, 16, 17, 18) fixed thereon is arranged in such a manner that its one end is located in the first hollow cylinder (2) and its other end is located in the fourth hollow cylinder (11), and the piston rod (14) accordingly extends through an opening in the second end wall (4), through an opening in the third end wall (6), through the second hollow cylinder (5), through an opening in the fourth end wall (7), through an opening in the fifth end wall (9), through the third hollow cylinder (8), through an opening in the sixth end wall (10) and through an opening in the seventh end wall (12),
- the first piston (15) is located in the first hollow cylinder (2) and divides the latter into a first chamber (19) and a second chamber (20), wherein the first chamber (19) and the second chamber (20) are sealed in relation to each other by the first piston (15),
- the second piston (16) is located in the second hollow cylinder (5) and divides the latter into a third chamber (21) and a fourth chamber (22), wherein the third chamber (21) and the fourth chamber (22) are sealed in relation to each other by the second piston (16),
- the third piston (17) is located in the third hollow cylinder (8) and divides the latter into a fifth chamber (23) and a sixth chamber (24), wherein the fifth chamber (23) and the sixth chamber (24) are sealed in relation to each other by the third piston (17),
- the fourth piston (18) is located in the fourth hollow cylinder (11) and divides the latter into a seventh chamber (25) and an eighth chamber (26), wherein the seventh chamber (25) and the eighth chamber (26) are sealed in relation to each other by the fourth piston (18),
- the piston rod (14) with the four pistons (15, 16, 17, 18) fixed thereon is movable to and fro in the longitudinal direction, and therefore the size of the respective space contents of each individual chamber of the eight chambers (19, 20, 21, 22, 23, 24, 25, 26) is variable in accordance with the respective piston stroke,
- both the fourth chamber (22) and the fifth chamber (23) are in each case provided for complete filling with liquid,
- the first chamber (19) and the second chamber (20) and the third chamber (21) and the sixth chamber (24) and the seventh chamber (25) and the eighth chamber (26) are completely filled with gas,
- the fourth chamber (22) is provided with a first liquid connection device (27) and with a second liquid connection device (28),
- the fifth chamber (23) is provided with a third liquid connection device (29) and with a fourth liquid connection device (30),
- the first chamber (19) is provided with a first gas connection device (31) and with a second gas connection device (32),
- the seventh chamber (25) is provided with a third gas connection device (33) and with a fourth gas connection device (34),
- the sixth chamber (24) is provided with a fifth gas connection device (35),
- a first gas line (36) leads from the second gas connection device (32) to the fifth gas connection device (35),
- a second gas line (37) leads from the fourth gas connection device (34) to the fifth gas connection device (35),
- the second chamber (20) is provided with a sixth gas connection device (38) and with a seventh gas connection device (39),
- the eighth chamber (26) is provided with an eighth gas connection device (40) and with a ninth gas connection device (41),
- the third chamber (21) is provided with a tenth gas connection device (42),
- a third gas line (43) leads from the seventh gas connection device (39) to the tenth gas connection device (42),
- a fourth gas line (44) leads from the ninth gas connection device (41) to the tenth gas connection device (42),
- the third chamber (21) is provided with an eleventh gas connection device (45),
- the sixth chamber (24) is provided with a twelfth gas connection device (46),
- the first gas connection device (31), by means of a valve device belonging thereto, is configured in such a manner that, at a correspondingly suitable valve position, the first gas connection device (31) serves for sucking up gas into the first chamber (19),
- the third gas connection device (33), by means of a valve device belonging thereto, is configured in such a manner that, at a correspondingly suitable valve position, the third gas connection device (33) serves for sucking up gas into the seventh chamber (25),
- the sixth gas connection device (38), by means of a valve device belonging thereto, is configured in such a manner that, at a correspondingly suitable valve position, the sixth gas connection device (38) serves for sucking up gas into the second chamber (20),
- the eighth gas connection device (40), by means of a valve device belonging thereto, is configured in such a manner that, at a correspondingly suitable valve position, the eighth gas connection device (40) serves for sucking up gas into the eighth chamber (26),
- the second gas connection device (32), by means of a valve device belonging thereto, is configured in such a manner that, at a correspondingly suitable valve position, the second gas connection device (32) serves for conducting compressed gas out of the first chamber (19) into the first gas line (36),
- the fourth gas connection device (34), by means of a valve device belonging thereto, is configured in such a manner that, at a correspondingly suitable valve position, the fourth gas connection device (34) serves for conducting compressed gas out of the seventh chamber (25) into the second gas line (37),
- the fifth gas connection device (35), by means of a valve device belonging thereto, is configured in such a manner that, at a correspondingly suitable valve position, the fifth gas connection device (35) serves for introducing compressed gas from the first gas line (36) or from the second gas line (37) into the sixth chamber (24),
- the seventh gas connection device (39), by means of a valve device belonging thereto, is configured in such a manner that, at a correspondingly suitable valve position, the seventh gas connection device (39) serves for conducting compressed gas out of the second chamber (20) into the third gas line (43),
- the ninth gas connection device (41), by means of a valve device belonging thereto, is configured in such a manner that, at a correspondingly suitable valve position, the ninth gas connection device (41) serves for conducting compressed gas out of the eighth chamber (26) into the fourth gas line (44),
- the tenth gas connection device (42), by means of a valve device belonging thereto, is configured in such a manner that, at a correspondingly suitable valve position, the tenth gas connection device (42) serves for introducing compressed gas from the third gas line (43) or from the fourth gas line (44) into the third chamber (21),
- the eleventh gas connection device (45), by means of a valve device belonging thereto, is configured in such a manner that, at a correspondingly suitable valve position, the eleventh gas connection device (45) serves for conducting compressed gas out of the third chamber (21),
- the twelfth gas connection device (46), by means of a valve device belonging thereto, is configured in such a manner that, at a correspondingly suitable valve position, the twelfth gas connection device (46) serves for conducting compressed gas out of the sixth chamber (24),
- the first liquid connection device (27), by means of a valve device belonging thereto, is configured in such a manner that, at a correspondingly suitable valve position, the first liquid connection device (27) serves as a liquid inlet for pumping liquid into the fourth chamber (22),
- the third liquid connection device (29), by means of a valve device belonging thereto, is configured in such a manner that, at a correspondingly suitable valve position, the third liquid connection device (29) serves as a liquid inlet for pumping liquid into the fifth chamber (23),
- the second liquid connection device (28), by means of a valve device belonging thereto, is configured in such a manner that, at a correspondingly suitable valve position, the second liquid connection device (28) serves as a liquid outlet for pushing liquid out of the fourth chamber (22), and
- the fourth liquid connection device (30), by means of a valve device belonging thereto, is configured in such a manner that, at a correspondingly suitable valve position, the fourth liquid connection device (30) serves as a liquid outlet for pushing liquid out of the fourth chamber (23).

2. Hydraulic piston device (1) according to Claim 1, **characterized in that** it is configured in such a manner that compressed gas conducted out of the eleventh gas connection device (45) is supplied to a consumer of compressed gas and/or to a compressed gas storage device.

3. Hydraulic piston device (1) according to either of the preceding claims, **characterized in that** it is configured in such a manner that compressed gas conducted out of the twelfth gas connection device (46) is supplied to a consumer of compressed gas and/or to a compressed gas storage device.

4. Hydraulic piston device (1) according to one of the preceding claims, **characterized in that** it is configured in such a manner that liquid pushed out of the second liquid connection device (28) is supplied to a liquid storage device.

5. Hydraulic piston device (1) according to one of the preceding claims, **characterized in that** it is configured in such a manner that liquid pushed out of the fourth liquid connection device (30) is supplied to a liquid storage device.

6. Hydraulic piston device (1) according to Claim 4 or according to Claim 5, **characterized in that** it is configured in such a manner that it can extract liquid from the liquid storage device for pumping into the first liquid connection device (27) and/or into the third liquid connection device (29).

7. Hydraulic piston device (1) according to one of the preceding claims, **characterized in that**
- all four hollow cylinders (2, 5, 8, 11) each have the same length,
- the second hollow cylinder (5) and the third hollow cylinder (8) each have the same diameter,
- the first hollow cylinder (2) and the fourth hollow cylinder (11) each have the same diameter, and
- the diameter of the first hollow cylinder (2) is greater than the diameter of the second hollow cylinder (5).

8. Hydraulic piston device (1) according to Claim 7, **characterized in that** the diameter of the first hollow cylinder (2) is at least twice as large as the diameter of the second hollow cylinder (5).

9. Hydraulic piston device (1) according to one of the preceding claims, **characterized in that** the first hollow cylinder (2) and the second hollow cylinder (5) sit directly on each other such that the second end wall (4) and the third end wall (6) at least partially coincide.

10. Hydraulic piston device (1) according to one of the preceding claims, **characterized in that** the third hollow cylinder (8) and the fourth hollow cylinder (11) sit directly on each other such that the sixth end wall (10) and the seventh end wall (12) at least partially coincide.

11. Hydraulic piston device (1) according to one of the preceding claims, **characterized in that** the gas is air and/or biogas and/or methane and/or any hydrocarbon gas and/or a mixture of hydrocarbon gases and/or a mixture of air and one or more hydrocarbon gases.

12. Hydraulic piston device (1) according to one of the preceding claims, **characterized in that** the liquid is oil.

13. Hydraulic piston device (1) according to one of the preceding claims, **characterized in that** the diameter of the piston rod (14) varies over the length of the piston rod (14) in such a manner that
- the piston rod (14) has a different diameter in its region between the first piston (15) and the second piston (16) than in its region between the second piston (16) and the third piston (17), and
- the piston rod (14) has a different diameter in its region between the third piston (17) and the fourth piston (18) than in its region between the second piston (16) and the third piston (17).

14. Compressed gas energy conversion device (50), having
- a hydraulic piston device (1) according to Claim 1,
- a compressed gas storage device, and
- a liquid storage device,
wherein
- the eleventh gas connection device (45) is connected to the compressed gas storage device and, by means of the valve device belonging to the eleventh gas connection device (45), is configured in such a manner that, at a correspondingly suitable valve position, the eleventh gas connection device (45) serves for introducing compressed gas out of the compressed gas storage device into the third chamber (21),
- the twelfth gas connection device (46) is connected to the compressed gas storage device and, by means of the valve device belonging to the twelfth gas connection device (46), is configured in such a manner that, at a correspondingly suitable valve position, the twelfth gas connection device (46) serves for introducing compressed gas out of the compressed gas storage device into the sixth chamber (24),
- the second liquid connection device (28) is connected to the liquid storage device and, by means of the valve device belonging to the second liquid storage device (28), is configured in such a manner that, at a correspondingly suitable valve position, the second liquid storage device (28) serves for sucking up liquid out of the liquid storage device into the fourth chamber (22),
- the fourth liquid connection device (30) is connected to the liquid storage device and, by means of the valve device belonging to the fourth liquid connection device (30), is configured in such a manner that, at a correspondingly suitable valve position, the fourth liquid connection device (30) serves for sucking up liquid out of the liquid storage device into the fifth chamber (23),
- the first liquid connection device (27), by means of the valve device belonging thereto, is configured in such a manner that, at a correspondingly suitable valve position, the first liquid connection device (27) serves for introducing liquid from the fourth chamber (22) into a first liquid line (47) which is configured in such a manner that it conducts liquid introduced into it and flowing through it to a machine (48) to be driven by the flowing liquid, wherein this machine (48) can be, for example, a drive device for an electrical energy generator,
- the third liquid connection device (29), by means of the valve device belonging thereto, is configured in such a manner that, at a correspondingly suitable valve position, the third liquid connection device (29) serves for introducing liquid from the fifth chamber (23) into a second liquid line (49) which is configured in such a manner that it conducts liquid introduced into it and flowing through it to a machine (48) to be driven by the flowing liquid, which machine can be, for example, a drive device for an electrical energy generator,
- the tenth gas connection device (42), by means of the valve device belonging thereto, is configured in such a manner that, at a correspondingly suitable valve position, the tenth gas connection device (42) serves for introducing gas from the third chamber (21) into a fifth gas line (51),
- there is a first pressure-controlling valve device (52) which controls the gas pressure and liquid pressure in relation to each other, is connected on the gas side to the fifth gas line (51) by means of a sixth gas line (53) and is connected on the liquid side to the second liquid line (49) by means of a third liquid line (54),
- the fifth gas connection device (35), by means of the valve device belonging thereto, is configured in such a manner that, at a correspondingly suitable valve position, the fifth gas connection device (35) serves for introducing gas from the sixth chamber (24) into a seventh gas line (55),
- there is a second pressure-controlling valve device (56) which controls the gas pressure and liquid pressure in relation to each other, is connected on the gas side to the seventh gas line (55) by means of an eighth gas line (57) and is connected on the liquid side to the first liquid line (47) by means of a fourth liquid line (58),
- the fifth gas line (51) furthermore leads to a consumer device (59) thermally and/or mechanically and/or chemically using gas originating from the fifth gas line (51), and
- the seventh gas line (55) furthermore leads to a consumer device (59) thermally and/or mechanically and/or chemically using gas originating from the seventh gas line (55).

## Revendications

1. Dispositif hydraulique à piston (1), qui peut être utilisé au moins dans le but d'une compression de gaz, le dispositif hydraulique à piston (1) présentant
- un premier cylindre creux (2), qui présente à l'une de ses extrémités une première paroi frontale (3) et à son autre extrémité une deuxième paroi frontale (4),
- un deuxième cylindre creux (5) qui présente à l'une de ses extrémités une troisième paroi frontale (6) et à son autre extrémité une quatrième paroi frontale (7),
- un troisième cylindre creux (8) qui présente à l'une de ses extrémités une cinquième paroi frontale (9) et à son autre extrémité une sixième paroi frontale (10),
- un quatrième cylindre creux (11), qui présente à l'une de ses extrémités une septième paroi frontale (12) et à son autre extrémité une huitième paroi frontale (13), et
- une tige de piston (14) sur laquelle sont fixés un premier piston (15), un deuxième piston (16), un troisième piston (17) et un quatrième piston (18),
le premier cylindre creux (2), le deuxième cylindre creux (5), le troisième cylindre creux (8) et le quatrième cylindre creux (11) étant agencés en une ligne de telle sorte que
- la deuxième paroi frontale (4) et la troisième paroi frontale (6) se font face,
- la quatrième paroi frontale (7) et la cinquième paroi frontale (9) se font face,
- la sixième paroi frontale (10) et la septième paroi frontale (12) se font face, et
- en conséquence, la première paroi frontale (3) forme une extrémité de ladite ligne de cylindres creux (2, 5, 8, 11) et la huitième paroi frontale (13) forme une autre extrémité de ladite ligne de cylindres creux (2, 5, 8, 11),
et
- la tige de piston (14) avec les quatre pistons (15, 16, 17, 18) qui lui sont fixés étant agencée de telle sorte qu'une de ses extrémités se trouve dans le premier cylindre creux (2) et que son autre extrémité se trouve dans le quatrième cylindre creux (11) et la tige de piston (14) s'étend en conséquence à travers une ouverture dans la deuxième paroi frontale (4), à travers une ouverture dans la troisième paroi frontale (6), à travers le deuxième cylindre creux (5), à travers une ouverture dans la quatrième paroi frontale (7), à travers une ouverture dans la cinquième paroi frontale (9), à travers le troisième cylindre creux (8), à travers une ouverture dans la sixième paroi frontale (10) et à travers une ouverture dans la septième paroi frontale (12),
- le premier piston (15) se trouvant dans le premier cylindre creux (2) et divisant celui-ci en une première chambre (19) et une deuxième chambre (20), la première chambre (19) et la deuxième chambre (20) étant étanchéifiées l'une par rapport à l'autre par le premier piston (15),
- le deuxième piston (16) se trouvant dans le deuxième cylindre creux (5) et divisant celui-ci en une troisième chambre (21) et une quatrième chambre (22), la troisième chambre (21) et la quatrième chambre (22) étant étanchéifiées l'une par rapport à l'autre par le deuxième piston (16),
- le troisième piston (17) se trouvant dans le troisième cylindre creux (8) et divisant celui-ci en une cinquième chambre (23) et une sixième chambre (24), la cinquième chambre (23) et la sixième chambre (24) étant étanchéifiées l'une par rapport à l'autre par le troisième piston (17),
- le quatrième piston (18) se trouvant dans le quatrième cylindre creux (11) et divisant celui-ci en une septième chambre (25) et une huitième chambre (26), la septième chambre (25) et la huitième chambre (26) étant étanchéifiées l'une par rapport à l'autre par le quatrième piston (18),
- la tige de piston (14) avec les quatre pistons (15, 16, 17, 18) qui lui sont fixés étant mobile en va-et-vient dans la direction longitudinale, de telle sorte que la taille du volume respectif de chacune des huit chambres individuelles (19, 20, 21, 22, 23, 24, 25, 26) est variable en fonction de la course de piston respective,
- aussi bien la quatrième chambre (22) que la cinquième chambre (23) étant respectivement prévues pour être complètement remplies de liquide,
- aussi bien la première chambre (19) que la deuxième chambre (20) que la troisième chambre (21) que la sixième chambre (24) que la septième chambre (25) que la huitième chambre (26) étant complètement remplies de gaz,
- la quatrième chambre (22) étant munie d'un premier dispositif de raccordement de liquide (27) et d'un deuxième dispositif de raccordement de liquide (28),
- la cinquième chambre (23) étant munie d'un troisième dispositif de raccordement de liquide (29) et d'un quatrième dispositif de raccordement de liquide (30),
- la première chambre (19) étant munie d'un premier dispositif de raccordement de gaz (31) et d'un deuxième dispositif de raccordement de gaz (32),
- la septième chambre (25) étant munie d'un troisième dispositif de raccordement de gaz (33) et d'un quatrième dispositif de raccordement de gaz (34),
- la sixième chambre (24) étant munie d'un cinquième dispositif de raccordement de gaz (35),
- une première conduite de gaz (36) menant du deuxième dispositif de raccordement de gaz (32) au cinquième dispositif de raccordement de gaz (35),
- une deuxième conduite de gaz (37) menant du quatrième dispositif de raccordement de gaz (34) au cinquième dispositif de raccordement de gaz (35),
- la deuxième chambre (20) étant munie d'un sixième dispositif de raccordement de gaz (38) et d'un septième dispositif de raccordement de gaz (39),
- la huitième chambre (26) étant munie d'un huitième dispositif de raccordement de gaz (40) et d'un neuvième dispositif de raccordement de gaz (41),
- la troisième chambre (21) étant munie d'un dixième dispositif de raccordement de gaz (42),
- une troisième conduite de gaz (43) menant du septième dispositif de raccordement de gaz (39) au dixième dispositif de raccordement de gaz (42),
- une quatrième conduite de gaz (44) menant du neuvième dispositif de raccordement de gaz (41) au dixième dispositif de raccordement de gaz (42),
- la troisième chambre (21) étant munie d'un onzième dispositif de raccordement de gaz (45),
- la sixième chambre (24) étant munie d'un douzième dispositif de raccordement de gaz (46),
- le premier dispositif de raccordement de gaz (31) étant adapté, au moyen d'un dispositif de soupape qui lui est associé, de telle sorte que le premier dispositif de raccordement de gaz (31) sert, lorsque la soupape est réglée de manière appropriée, à aspirer du gaz dans la première chambre (19),
- le troisième dispositif de raccordement de gaz (33) étant adapté, au moyen d'un dispositif de soupape qui lui est associé, de telle sorte que le troisième dispositif de raccordement de gaz (33) sert, lorsque la soupape est réglée de manière appropriée, à aspirer du gaz dans la septième chambre (25),
- le sixième dispositif de raccordement de gaz (38) étant adapté, au moyen d'un dispositif de soupape qui lui est associé, de telle sorte que le sixième dispositif de raccordement de gaz (38) sert, lorsque la soupape est réglée de manière appropriée, à aspirer du gaz dans la deuxième chambre (20),
- le huitième dispositif de raccordement de gaz (40) étant adapté, au moyen d'un dispositif de soupape qui lui est associé, de telle sorte que le huitième dispositif de raccordement de gaz (40) sert, lorsque la soupape est réglée de manière appropriée, à aspirer du gaz dans la huitième chambre (26),
- le deuxième dispositif de raccordement de gaz (32) étant adapté, au moyen d'un dispositif de soupape qui lui est associé, de telle sorte que le deuxième dispositif de raccordement de gaz (32) sert, lorsque la soupape est réglée de manière appropriée, à évacuer du gaz comprimé de la première chambre (19) dans la première conduite de gaz (36),
- le quatrième dispositif de raccordement de gaz (34) étant adapté, au moyen d'un dispositif de soupape qui lui est associé, de telle sorte que le quatrième dispositif de raccordement de gaz (34) sert, lorsque la soupape est réglée de manière appropriée, à évacuer du gaz comprimé de la septième chambre (25) dans la deuxième conduite de gaz (37),
- le cinquième dispositif de raccordement de gaz (35), étant adapté, au moyen d'un dispositif de soupape qui lui est associé, de telle sorte que le cinquième dispositif de raccordement de gaz (35) sert, lorsque la soupape est réglée de manière appropriée, à introduire du gaz comprimé de la première conduite de gaz (36) ou de la deuxième conduite de gaz (37) dans la sixième chambre (24),
- le septième dispositif de raccordement de gaz (39) étant adapté, au moyen d'un dispositif de soupape qui lui est associé, de telle sorte que le septième dispositif de raccordement de gaz (39) sert, lorsque la soupape est réglée de manière appropriée, à évacuer du gaz comprimé de la deuxième chambre (20) dans la troisième conduite de gaz (43),
- le neuvième dispositif de raccordement gaz (41) étant adapté, au moyen d'un dispositif de soupape qui lui est associé, de telle sorte que le neuvième dispositif de raccordement de gaz (41) sert, lorsque la soupape est réglée de manière appropriée, à évacuer du gaz comprimé de la huitième chambre (26) dans la quatrième conduite de gaz (44),
- le dixième dispositif de raccordement de gaz (42) étant adapté, au moyen d'un dispositif de soupape qui lui est associé, de telle sorte que le dixième dispositif de raccordement de gaz (42) sert, lorsque la soupape est réglée de manière appropriée, à introduire du gaz comprimé de la troisième conduite de gaz (43) ou de la quatrième conduite de gaz (44) dans la troisième chambre (21),
- le onzième dispositif de raccordement de gaz (45) étant adapté, au moyen d'un dispositif de soupape qui lui est associé, de telle sorte que le onzième dispositif de raccordement de gaz (45) sert, lorsque la soupape est réglée de manière appropriée, à évacuer du gaz comprimé de la troisième chambre (21),
- le douzième dispositif de raccordement de gaz (46) étant adapté, au moyen d'un dispositif de soupape qui lui est associé, de telle sorte que le douzième dispositif de raccordement de gaz (46) sert, lorsque la soupape est réglée de manière appropriée, à évacuer du gaz comprimé de la sixième chambre (24),
- le premier dispositif de raccordement de liquide (27) étant adapté, au moyen d'un dispositif de soupape qui lui est associé, de telle sorte que le premier dispositif de raccordement de liquide (27) sert, lorsque la soupape est réglée de manière appropriée, d'entrée de liquide pour pomper du liquide dans la quatrième chambre (22),
- le troisième dispositif de raccordement de liquide (29) étant adapté, au moyen d'un dispositif de soupape qui lui est associé, de telle sorte que le troisième dispositif de raccordement de liquide (29) sert, lorsque la soupape est réglée de manière appropriée, d'entrée de liquide pour pomper du liquide dans la cinquième chambre (23),
- le deuxième dispositif de raccordement de liquide (28) étant adapté, au moyen d'un dispositif de soupape qui lui est associé, de telle sorte que le deuxième dispositif de raccordement de liquide (28) sert, lorsque la soupape est réglée de manière appropriée, de sortie de liquide pour expulser du liquide de la quatrième chambre (22), et
- le quatrième dispositif de raccordement de liquide (30) étant adapté, au moyen d'un dispositif de soupape qui lui est associé, de telle sorte que le quatrième dispositif de raccordement de liquide (30) sert, lorsque la soupape est réglée de manière appropriée, de sortie de liquide pour expulser du liquide de la quatrième chambre (23).

2. Dispositif hydraulique à piston (1) selon la revendication 1, **caractérisé en ce qu'**il est adapté de telle sorte que du gaz comprimé évacué du onzième dispositif de raccordement de gaz (45) est acheminé vers un consommateur de gaz comprimé et/ou un dispositif de stockage de gaz comprimé.

3. Dispositif hydraulique à piston (1) selon l'une quelconque des revendications précédentes, **caractérisé en ce qu'**il est adapté de telle sorte que du gaz comprimé évacué du douzième dispositif de raccordement de gaz (46) est acheminé vers un consommateur de gaz comprimé et/ou un dispositif de stockage de gaz comprimé.

4. Dispositif hydraulique à piston (1) selon l'une quelconque des revendications précédentes, **caractérisé en ce qu'**il est adapté de telle sorte que du liquide expulsé du deuxième dispositif de raccordement de liquide (28) est acheminé vers un dispositif de stockage de liquide.

5. Dispositif hydraulique à piston (1) selon l'une quelconque des revendications précédentes, **caractérisé en ce qu'**il est adapté de telle sorte que du liquide expulsé du quatrième dispositif de raccordement de liquide (30) est acheminé vers un dispositif de stockage de liquide.

6. Dispositif hydraulique à piston (1) selon la revendication 4 ou selon la revendication 5, **caractérisé en ce qu'**il est adapté de manière à pouvoir prélever du liquide du dispositif de stockage de liquide pour le pomper dans le premier dispositif de raccordement de liquide (27) et/ou dans le troisième dispositif de raccordement de liquide (29).

7. Dispositif hydraulique à piston (1) selon l'une quelconque des revendications précédentes, **caractérisé en ce que**
- les quatre cylindres creux (2, 5, 8, 11) ont chacun la même longueur,
- le deuxième cylindre creux (5) et le troisième cylindre creux (8) ont chacun le même diamètre,
- le premier cylindre creux (2) et le quatrième cylindre creux (11) ont chacun le même diamètre, et
- le diamètre du premier cylindre creux (2) est plus grand que le diamètre du deuxième cylindre creux (5).

8. Dispositif hydraulique à piston (1) selon la revendication 7, **caractérisé en ce que** le diamètre du premier cylindre creux (2) est au moins deux fois plus grand que le diamètre du deuxième cylindre creux (5).

9. Dispositif hydraulique à piston (1) selon l'une quelconque des revendications précédentes, **caractérisé en ce que** le premier cylindre creux (2) et le deuxième cylindre creux (5) sont directement adjacents l'un à l'autre, de telle sorte que la deuxième paroi frontale (4) et la troisième paroi frontale (6) coïncident au moins partiellement.

10. Dispositif hydraulique à piston (1) selon l'une quelconque des revendications précédentes, **caractérisé en ce que** le troisième cylindre creux (8) et le quatrième cylindre creux (11) sont directement adjacents l'un à l'autre, de telle sorte que la sixième paroi frontale (10) et la septième paroi frontale (12) coïncident au moins partiellement.

11. Dispositif hydraulique à piston (1) selon l'une quelconque des revendications précédentes, **caractérisé en ce que** le gaz est de l'air et/ou du biogaz et/ou du méthane et/ou un gaz hydrocarboné quelconque et/ou un mélange de gaz hydrocarbonés et/ou un mélange d'air et d'un ou plusieurs gaz hydrocarbonés.

12. Dispositif hydraulique à piston (1) selon l'une quelconque des revendications précédentes, **caractérisé en ce que** le liquide est de l'huile.

13. Dispositif hydraulique à piston (1) selon l'une quelconque des revendications précédentes, **caractérisé en ce que** le diamètre de la tige de piston (14) varie sur la longueur de la tige de piston (14) de telle sorte que
- la tige de piston (14) a un autre diamètre dans sa zone entre le premier piston (15) et le deuxième piston (16) que dans sa zone entre le deuxième piston (16) et le troisième piston (17) et
- la tige de piston (14) a un autre diamètre dans sa zone entre le troisième piston (17) et le quatrième piston (18) que dans sa zone entre le deuxième piston (16) et le troisième piston (17).

14. Dispositif de conversion d'énergie à gaz comprimé (50), comprenant
- un dispositif hydraulique à piston (1) selon la revendication 1,
- un dispositif de stockage de gaz comprimé et
- un dispositif de stockage de liquide,
- le onzième dispositif de raccordement de gaz (45) étant raccordé au dispositif de stockage de gaz comprimé et étant adapté, au moyen du dispositif de soupape associé au onzième dispositif de raccordement de gaz (45), de telle sorte que le onzième dispositif de raccordement de gaz (45) sert, lorsque la soupape est réglée de manière appropriée, à introduire du gaz comprimé du dispositif de stockage de gaz comprimé dans la troisième chambre (21),
- le douzième dispositif de raccordement de gaz (46) étant raccordé au dispositif de stockage de gaz comprimé et étant adapté, au moyen du dispositif de soupape associé au douzième dispositif de raccordement de gaz (46), de telle sorte que le douzième dispositif de raccordement de gaz (46) sert, lorsque la soupape est réglée de manière appropriée, à introduire du gaz comprimé du dispositif de stockage de gaz comprimé dans la sixième chambre (24),
- le deuxième dispositif de raccordement de liquide (28) étant raccordé au dispositif de stockage de liquide et étant adapté, au moyen du dispositif de soupape associé au deuxième dispositif de raccordement de liquide (28), de telle sorte que le deuxième dispositif de raccordement de liquide (28) sert, lorsque la soupape est réglée de manière appropriée, à aspirer du liquide du dispositif de stockage de liquide dans la quatrième chambre (22),
- le quatrième dispositif de raccordement de liquide (30) étant raccordé au dispositif de stockage de liquide et étant adapté, au moyen du dispositif de soupape associé au quatrième dispositif de raccordement de liquide (30), de telle sorte que le quatrième dispositif de raccordement de liquide (30) sert, lorsque la soupape est réglée de manière appropriée, à aspirer du liquide du dispositif de stockage de liquide dans la cinquième chambre (23),
- le premier dispositif de raccordement de liquide (27) étant adapté, au moyen du dispositif de soupape qui lui est associé, de telle sorte que le premier dispositif de raccordement de liquide (27) sert, lorsque la soupape est réglée de manière appropriée, à introduire du liquide de la quatrième chambre (22) dans une première conduite de liquide (47) qui est adaptée pour conduire le liquide introduit dans celle-ci et s'écoulant à travers celle-ci vers une machine (48) à entraîner par le liquide en écoulement, cette machine (48) pouvant par exemple être un dispositif d'entraînement d'un générateur d'énergie électrique,
- le troisième dispositif de raccordement de liquide (29) étant adapté, au moyen du dispositif de soupape qui lui est associé, de telle sorte que le troisième dispositif de raccordement de liquide (29) sert, lorsque la soupape est réglée de manière appropriée, à introduire du liquide de la cinquième chambre (23) dans une deuxième conduite de liquide (49) qui est adaptée pour conduire le liquide introduit dans celle-ci et s'écoulant à travers elle vers une machine (48) à entraîner par le liquide en écoulement, qui peut par exemple être un dispositif d'entraînement pour un générateur d'énergie électrique,
- le dixième dispositif de raccordement de gaz (42) étant adapté, au moyen du dispositif de soupape qui lui est associé, de telle sorte que le dixième dispositif de raccordement de gaz (42) sert, lorsque la soupape est réglée de manière appropriée, à introduire du gaz de la troisième chambre (21) dans une cinquième conduite de gaz (51),
- un premier dispositif de soupape de régulation de pression (52) étant présent, lequel régule la pression de gaz et la pression de liquide l'une par rapport à l'autre, est raccordé du côté du gaz à la cinquième conduite de gaz (51) au moyen d'une sixième conduite de gaz (53) et est raccordé du côté du liquide à la deuxième conduite de liquide (49) au moyen d'une troisième conduite de liquide (54),
- le cinquième dispositif de raccordement de gaz (35) étant adapté, au moyen du dispositif de soupape qui lui est associé, de telle sorte que le cinquième dispositif de raccordement de gaz (35) sert, lorsque la soupape est réglée de manière appropriée, à introduire du gaz de la sixième chambre (24) dans une septième conduite de gaz (55),
- un deuxième dispositif de soupape de régulation de pression (56) étant présent, lequel régule la pression de gaz et la pression de liquide l'une par rapport à l'autre, est raccordé du côté du gaz à la septième conduite de gaz (55) au moyen d'une huitième conduite de gaz (57) et est raccordé du côté du liquide à la première conduite de liquide (47) au moyen d'une quatrième conduite de liquide (58),
- la cinquième conduite de gaz (51) menant en outre à un dispositif consommateur (59) utilisant thermiquement et/ou mécaniquement et/ou chimiquement du gaz provenant de la cinquième conduite de gaz (51), et
- la septième conduite de gaz (55) menant en outre à un dispositif consommateur (59) utilisant thermiquement et/ou mécaniquement et/ou chimiquement du gaz provenant de la septième conduite de gaz (55).
